(19) Europäisches Patentamt
European Patent Office
Office européen des brevets

(11) Numéro de publication : **0 395 482 B1**

# (12) FASCICULE DE BREVET EUROPEEN

(45) Date de publication du fascicule du brevet : **30.11.94 Bulletin 94/48**

(51) Int. Cl.$^5$ : **G06F 15/72**

(21) Numéro de dépôt : **90401087.3**

(22) Date de dépôt : **23.04.90**

## (54) Procédé pour réaliser des déssins à l'aide d'un ordinateur.

(30) Priorité : **24.04.89 FR 8905416**

(43) Date de publication de la demande : **31.10.90 Bulletin 90/44**

(45) Mention de la délivrance du brevet : **30.11.94 Bulletin 94/48**

(84) Etats contractants désignés : **AT BE CH DE DK ES FR GB GR IT LI LU NL SE**

(56) Documents cités :
**EP-A- 0 160 848**
**EP-A- 0 227 832**
**ELECTRONICS & WIRELESS WORLD, vol. 92,no. 1604, juin 1986, pages 44,45, Londres, GB; H. GLEAVES: "An introduction to 3D graphics"**
**IEEE COMPUTER GRAPHICS AND APPLICATIONS, vol. 6, no. 12, décembre 1986, pages 37-48, IEEE, NEW YORK, US; J.R. MILLER: "SCULPTURED SURFACES IN SOLID MODELS: ISSUES AND ALTERNATIVE APPROACHES"**
**IEEE COMPUTER GRAPHICS & APPLICATIONS, vol. 7, no.3, mars 1987, pages 45-55, IEEE, New York, US; L. PIEGL: "Infinite control points - a method for representing surfaces of revolution using boundary data"**

(73) Titulaire : **DIGITAL EQUIPMENT INTERNATIONAL LIMITED**
**1 Grand Place**
**CH-1700 Fribourg (CH)**

(72) Inventeur : **Baudelaire, Patrick**
**8 rue de Saint Nom**
**F-78620 L'Etang la Ville (FR)**
Inventeur : **Gangnet, Michel**
**25 rue de Noailles**
**F-78100 Saint Germain en Laye (FR)**
Inventeur : **Herve, Jean-Claude**
**39 rue de l'Aigle**
**D-92250 La Garenne-Colombes (FR)**
Inventeur : **Pudet, Thierry**
**12 rue Cambon**
**F-92250 La Garenne-Colombes (FR)**
Inventeur : **Van Thong, Jean-Manuel**
**1 rue Pierre Brossolette**
**F-92400 Courbevoie (FR)**

(74) Mandataire : **Mongrédien, André et al**
**c/o SOCIETE DE PROTECTION DES INVENTIONS**
**25, rue de Ponthieu**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



Jouve, 18, rue Saint-Denis, 75001 PARIS

## Description

L'invention concerne un procédé pour réaliser des dessins à l'aide d'un ordinateur pour des applications telles que la conception assistée par ordinateur (CAO), et le dessin assisté par ordinateur (DAO) (voir par exemple EP-A-0 160 848 et Electronics & Wireless World, vol. 92, no. 1604, juin 1986, pages 44 et 45).

D'une manière générale, les procédés permettant de réaliser des dessins à l'aide d'un ordinateur sont interactifs, c'est-à-dire qu'ils sont mis en oeuvre par un opérateur au moyen d'un périphérique d'entrée relié à l'ordinateur.

Le problème posé est celui de l'obtention d'un outil très souple et va mieux être compris à l'aide de l'exemple suivant.

Lorsque l'on réalise un dessin constitué par exemple de deux paires de lignes parallèles orthogonales, il n'est pas possible avec les procédés existants qui permettent de réaliser des dessins au moyen d'un ordinateur, de voir autre chose que ces quatre lignes si ce sont ces quatre lignes qui ont été définies par l'utilisateur.

Il n'est pas possible par exemple dans ce cas de voir ce dessin comme étant le dessin d'un rectangle. Le dessin ne comporte pas d'objet manipulable autre que ces quatre lignes.

Il est a fortiori impossible de colorier la face que représente ce rectangle puisque le rectangle n'a pas d'existence réelle dans ce cas précis.

La présente invention a pour objet de remédier à ces problèmes.

En effet, le procédé conforme à l'invention se distingue des procédés classiques par le fait qu'il est d'une part basé sur un principe consistant à décrire un dessin à toutes les étapes de sa réalisation sous forme d'une carte planaire et par le fait que le dessin est réalisé en procédant de manière itérative à des opérations d'insertion, de gommage ou de coloriage.

La présente invention a plus précisément pour objet un procédé pour réaliser des dessins à l'aide d'un ordinateur caractérisé en ce qu'il comporte les étapes suivantes :

1) - définir et enregistrer en mémoire une structure de données décrivant tout dessin à toutes les étapes de sa création sous forme d'une carte planaire, c'est-à-dire d'un ensemble de faces (F), chaque face étant délimitée par un ou plusieurs contour(s) porté(s) par des arêtes de courbes dudit dessin ; ladite carte planaire étant associée à un arbre d'inclusion des contours définissant une relation d'ordre partiel d'inclusion des contours connexes par lesdites arêtes ;

2) - procéder à la réalisation effective du dessin en effectuant des opérations d'insertion, de gommage et de coloriage dans la carte planaire initialement vide ;

- les opérations d'insertion et de gommage consistant à insérer et/ou gommer des courbes et/ou des éléments de courbes jusqu'à obtention du dessin désiré ;
- les opérations de coloriage consistant à colorier une ou plusieurs faces formant le dessin.

3) - afficher le dessin et procéder au fur et à mesure des différentes opérations à sa mise à jour.

D'autres caractéristiques et avantages de l'invention apparaîtront à la lecture de la description faite à titre illustratif et nullement limitatif, en référence aux dessins annexés sur lesquels :

- les figures 1a à 1f représentent un exemple des différentes étapes du procédé selon l'invention pour réaliser le dessin de la figure 1f ;
- les figures 2a à 2f représentent certaines des étapes du procédé selon l'invention pour réaliser le dessin de la figure 2f ;
- la figure 3 représente un ordinogramme des étapes essentielles pour la mise en oeuvre du procédé ;
- Les figures 4a, 4b représentent respectivement le schéma d'un dessin tel que décrit par une carte planaire selon l'invention et un graphe représentant la structure arborescente de l'arbre des contours correspondant à ce dessin ;
- les figures 5a et 5b représentent un ordinogramme représentant les étapes essentielles d'une opération d'insertion selon l'invention,
- les figures 6a et 6b représentent l'étape de détermination du cas lors de la mise à jour de l'arbre des contours, respectivement dans le cas d'une insertion et dans le cas d'une suppression, selon le procédé conforme à l'invention,
- la figure 7 représente un exemple de dessin correspondant à chaque cas répertorié dans la table, selon une opération d'insertion conforme à l'invention,
- la figure 8 représente schématiquement un polygone de contrôle d'une courbe paramétrique C de degré 3, les diagonales D1 et D2 de ce polygone, ainsi qu'une polyligne PL interpolant la courbe C, la diagonale D étant la plus grande des deux longueurs de D1 et D2,
- la figure 9 représente schématiquement une portion de polyligne, dans la grille d'un repère de référence,
- la figure 10 représente schématiquement deux polylignes P et Q présentant deux points d'intersection I1 et I2, et les boîtes englobantes pour des parties monotones de ces polylignes,

- la figure 11 représente deux tableaux indiquant les coordonnées des extrémités des segments de chaque polyligne, enregistrées en mémoire,
- la figure 12 représente schématiquement des sous-boîtes englobantes permettant de localiser l'un des points d'intersection de deux polylignes,
- la figure 13 représente schématiquement les deux sous-boîtes englobantes permettant de déterminer deux segments caractéristiques appartenant respectivement aux deux polylignes et définissant l'un des points d'intersection des polylignes,
- la figure 14 représente schématiquement les deux segments caractéristiques et permet de mieux comprendre la détermination de l'un des paramètres d'un contexte d'intersection de deux polylignes,
- la figure 15 est un ordinogramme représentant les étapes essentielles du programme mis en oeuvre pour procéder à des intersections dans le procédé de l'invention.
- la figure 16 représente schématiquement un ensemble de traitement permettant de mettre en oeuvre les opérations d'affichage selon l'invention,
- la figure 17 représente schématiquement une courbe de Bézier interpolée par une polyligne, cette courbe ayant un arc à afficher auquel correspond une portion de la polyligne servant à l'affichage,
- la figure 18 représente schématiquement deux des segments contenant les extrémités $A_d$ et $A_f$ de la portion de polyligne correspondant à l'arc à afficher,
- la figure 19 représente schématiquement deux segments à afficher dans la grille des pixels du support de visualisation,
- la figure 20 représente schématiquement la partition du plan du support de visualisation, en huit octants,
- la figure 21 représente schématiquement une portion de la grille du support de visualisation et permet de mieux comprendre la sélection d'un pixel candidat à l'affichage,
- la figure 22 représente schématiquement une portion de la grille du support de visualisation, au voisinage de la jonction de deux segments consécutifs de la portion de polyligne,
- la figure 23 est un ordinogramme du programme mis en oeuvre dans le procédé de l'invention.

Conformément à l'invention, le procédé consiste à opérer de la manière suivante :

1) - définir et enregistrer en mémoire une structure de données décrivant tout dessin à toutes les étapes de sa création sous forme d'une carte planaire, c'est-à-dire d'un ensemble de faces (F), chaque face étant délimitée par un ou plusieurs contour(s) porté(s) par des arêtes de courbes dudit dessin ; ladite carte planaire étant associée à un arbre d'inclusion des contours définissant une relation d'ordre partiel d'inclusion des contours connexes formés par lesdites arêtes ;

2) - procéder à la réalisation effective du dessin en effectuant des opérations d'insertion, de gommage et de coloriage dans la carte planaire initialement vide ;

   - les opérations d'insertion et de gommage consistant à insérer et/ou gommer des courbes et/ou des éléments de courbes jusqu'à obtention du dessin désiré ;
   - les opérations de coloriage consistant à colorier une ou plusieurs faces formant le dessin.

3) - afficher le dessin et procéder au fur et à mesure des différentes opérations à sa mise à jour.

Les différentes opérations ont été illustrées par les figures 1a à 1f et 2a à 2f.

Une opération d'insertion de courbe comporte les étapes suivantes :
- saisir la courbe au moyen d'un périphérique d'entrée,
- afficher la courbe sur l'écran de l'ordinateur,
- insérer effectivement la courbe dans la carte planaire décrite par la structure de donnée.

Une opération de gommage d'une courbe et/ou d'un élément de courbe comporte les étapes suivantes :
- saisir un point proche de l'élément à gommer au moyen d'un périphérique d'entrée,
- localiser cet élément dans la carte planaire décrite par la structure de données,
- suivant le cas de la localisation :
   a) - gommer cet élément dans la carte planaire,
   b) - mettre à jour l'arbre d'inclusion des contours,
   c) - gommer cet élément de l'affichage.

Une opération de coloriage d'une face comporte les étapes suivantes :
- saisir un point à localiser au moyen d'un périphérique d'entrée,
- localiser ce point dans la carte planaire décrite par la structure de données,
- suivant le cas de la localisation :
   a) - indiquer la couleur par marquage de cette face dans la carte planaire,
   b) - faire apparaître la couleur lors de l'affichage.

De manière plus précise, les figures 1a à 1f permettent de montrer le déroulement des étapes pour la représentation de la figure 1f.

La figure 1a correspond à l'insertion d'un cercle 100, la figure 1b à l'insertion d'un segment de droite 200

sur le cercle, la figure 1c à l'insertion d'un deuxième segment de droite 300, la figure 1d, un gommage des arêtes pendantes 200a, 200b, 300a, 300b, la figure 1e, un gommage des arcs de courbe 100a et 100b, la figure 1f, le coloriage de la face f.

Les figures 2a à 2f permettent d'illustrer les différentes étapes de réalisation d'un dessin (fig. 2f) plus complexe conformément au procédé selon l'invention.

L'ordinogramme représenté sur la figure 3 permet à l'ordinateur programmé à cet effet de mettre en oeuvre le procédé conforme à l'invention.

L'étape 310 est l'étape d'initialisation de la carte planaire vide.

L'étape 311 correspond aux quatre choix possibles pour l'opération, à savoir :

- effectuer une insertion,
- effectuer un gommage,
- effectuer un coloriage,
- fin du dessin.

L'étape 312 correspond à l'action choisie par l'opérateur et les étapes 313 à 316 correspondent aux opérations correspondantes dans la carte planaire et sur l'écran d'affichage.

Le procédé conforme à l'invention est susceptible d'être mis en oeuvre au moyen de tout type d'ordinateur, par exemple une station de travail de Digital Equipment Corporation programmée à cet effet. L'ordinateur comporte une mémoire dans laquelle est stockée la structure de données qui permet de décrire, sous forme d'une carte planaire, les données de n'importe quel dessin que l'on désire réaliser au moyen de cet ordinateur et qui pourra être visualisé directement par l'écran de l'ordinateur ou à l'aide d'une imprimante quelle que soit la définition de l'imprimante.

La structure de données permet à la fois d'effectuer une description d'un dessin sous sa forme topologique et sous sa forme géométrique. Tout dessin à réaliser par le procédé est vu sous forme d'une carte planaire.

La description d'une carte planaire est explicitée dans la partie de description relative à une étape d'insertion.

La description qui suit concerne la réalisation d'une opération d'insertion conformément au procédé objet de l'invention.

INSERTION - (Fig. 4a à Fig. 7)

Afin de faciliter la compréhension de la présente demande, on énonce dans ce qui suit les définitions essentielles concernant une carte planaire, en référence aux figures 4a et 4b.

Une carte planaire décrit la partition du plan définie par un ensemble fini de courbes. Une carte planaire est définie par le couple (S, A) dans lequel S est un ensemble fini de sommets, chaque sommet étant distinct et dans lequel A est un ensemble fini d'arêtes décrites par des arcs de courbes n'ayant d'autres intersections que les sommets de l'ensemble S.

Dans la description du dessin, qui se trouve en mémoire sous forme d'une structure de données, on associe à chaque arête deux brins qui définissent les deux côtés de l'arête. Deux cas peuvent se produire :

- si l'arête e est incidente à deux sommets S1 et S2, alors les deux brins sont définis par les couples (S1,S2) et (S2,S1) respectivement ;
- si l'arête e est incidente à un seul sommet, alors e forme une boucle et les deux orientations directe et indirecte définissent les deux brins associés à e.

Par ailleurs, à chaque sommet est associé un ensemble non vide de brins qui peut être ordonné. On appelle $\alpha(b)$ le brin suivant du brin b dans l'ordre direct autour du sommet incident à b. On appelle $\alpha$-ordre la relation d'ordre total définie par $\alpha$ sur l'ensemble des brins incidents à un même sommet. On appelle $\omega(b)$ l'autre brin de l'arête associée à b.

Les deux applications $\alpha$ et $\omega$ représentent mathématiquement des permutations de S. Un contour peut alors être décrit par l'ensemble C(b) :

$$C(b) = \{b, \alpha\omega(b), \ldots, (\alpha\omega)^{l}(b)\}$$

où l est le plus petit entier naturel tel que $b=(\alpha\omega)^{l+1}(b)$.

Connaissant $\alpha$ et $\omega$, il suffit donc de connaître un brin d'un contour pour obtenir la liste des brins de ce contour. En pratique on ira lire en mémoire un brin d'un contour et un parcours de la structure de données permettra d'obtenir la liste des brins de ce contour.

Il est rappelé également que l'on associe une structure arborescente à la structure d'une carte planaire, cette structure arborescente définissant une relation d'ordre partiel d'inclusion des composantes connexes formées par les arêtes. La structure arborescente est appelée arbre d'inclusion des contours (figure 4b).

La racine de l'arbre est un contour virtuel c interne qui décrit la face infinie du plan. Les fils d'un contour interne sont les contours externes des composantes connexes contenues dans ce contour interne ($E_1$ et $E_3$

sur la figure 4a). Les fils d'un contour externe sont les contours internes connexes d'une même composante (c1, c2, c3 sur la figure 4a).

Dans cet arbre, une face est décrite par un contour interne et éventuellement par l'ensemble de ses contours externes fils. Une composante connexe est décrite par un contour externe et éventuellement par l'ensemble de ses contours internes fils connexes.

Ainsi, les feuilles de l'arbre des contours sont soit des contours internes ne contenant aucune composante connexe, soit des contours externes sans aucun contour interne fils.

L'arbre d'inclusion fournit une bonne représentation de la partition du plan et est donc utilisé pour : obtenir les contours frontière d'une face, obtenir les composantes connexes, localiser un point, etc.

Ainsi, dans le procédé conforme à l'invention, la carte planaire qui est décrite dans une structure de données n'est pas limitée à des segments de droite. Ladite structure est divisée, selon le procédé conforme à l'invention, en deux parties distinctes : une structure de données géométriques et une structure de données topologiques.

Conformément à l'invention également, dans la structure de données géométriques :

- une courbe est décrite par un polygone de contrôle et une série ordonnée d'arcs.
- l'orientation d'une courbe est donnée par l'ordre de ses points de contrôle.
- un arc est une portion de courbe délimitée par deux points, l'orientation d'un arc est donnée par l'ordre des paramètres de ses points extrémités.
- les arcs se projettent sur les arêtes.
- un point est repéré par un paramètre curviligne sur une courbe.

Un point peut être un point extrémité d'une courbe, un point d'auto-intersection d'une courbe, ou un point d'intersection entre deux courbes. Les points se projettent sur les sommets.

Il est rappelé que la structure de données topologique comprend des données représentant des brins, des sommets, des arêtes, des contours.

Conformément à l'invention, dans la structure de données topologiques :

- un brin b est décrit par le brin $\alpha(b)$, le brin $\omega(b)$, le sommet autour duquel est incident le brin b, l'arête à laquelle est associé le brin b et le contour auquel appartient le brin b.
- un sommet s est décrit par des coordonnées cartésiennes dans un espace que l'on s'est borné au départ et que l'on nomme grille, et par un brin b incident autour de ce sommet s.

Ce brin permet d'obtenir la liste des brins incidents à s.

- une arête e est décrite par la liste des arcs confondus portés par cette arête e et par un brin b de e. L'autre brin de e est obtenu par la relation $\omega(b)$.
- un contour c est décrit par un brin b appartenant à ce contour c et des liens vers les contours pères, fils et frères c de utilisés pour le parcours de l'arbre d'inclusion des contours.

La description d'une carte planaire consiste donc à prévoir une structure de données topologique dans laquelle seront prévus des champs destinés à recevoir des données correspondant à des contours, des données correspondant à des sommets, des données correspondant à des arêtes et des données correspondant à des brins.

Elle consiste également à prévoir une structure de données géométrique dans laquelle sont prévus des champs destinés à recevoir des points en liaison avec un sommet, des arcs en liaison avec une arête, des données correspondant aux brins attachés aux arcs, ces brins étant les liens entre la structure géométrique et la structure de données topologique.

La figure 5a représente un ordinogramme dans lequel les blocs tracés en pointillé représentent les étapes essentielles d'une opération d'insertion selon l'invention. Le premier bloc I est relatif à l'étape d'initialisation, le deuxième bloc II est relatif à l'étape de calcul des intersections, le troisième bloc III est relatif à l'étape de mise à jour et le quatrième bloc IV est relatif à l'étape d'itération.

Le premier traitement de la courbe à insérer consiste à modéliser la courbe en la transformant sous la forme de courbe de Bézier puis en procédant à une interpolation, par exemple au moyen de la méthode de De Casteljau. De manière préférée, la méthode utilisée est la méthode qui est décrite dans la partie de la demande relative à l'intersection de courbes. Ce premier traitement se situe en amont de l'étape d'initialisation I.

L'étape préalable d'initialisation consiste tout d'abord à affecter à la courbe à insérer un paramètre $t_i = t_o$ pour lequel $t_o$ correspond à l'origine $P_o$ de la courbe, le paramètre $t_n$ correspondant à l'autre extrémité de la courbe.

Cette étape d'initialisation I consiste en outre à localiser la face de la carte planaire dans laquelle se trouve l'origine de la courbe à insérer ayant pour paramètre $t_o$ (bloc 20) et à mémoriser la face F dans laquelle se trouve cette origine (bloc 21).

L'étape d'intersection II (blocs 30, 32) consiste à trouver tous les points d'auto-intersection de la courbe à insérer puis les points d'intersection de la courbe à insérer avec les courbes portées par les arêtes des

contours de cette première face identifiée.

L'étape de mise à jour III (blocs 50, 51) consiste dans le cas de l'insertion à insérer le premier arc trouvé de paramètres ($t_i$, $t_{i+1}$). A la première itération $t_i$ est l'origine de la courbe. Cette étape consiste en outre à effectuer une mise à jour de l'arbre d'inclusion des contours (bloc 51).

L'étape IV consiste à effectuer une itération du paramètre $t_i$ en comparant ce paramètre au paramètre $t_n$ et, dans la mesure où $t_i$ n'est pas égal à $t_n$, a passer de la face incluant l'arc défini par les paramètres ($t_i$, $t_{i+1}$), à la face adjacente suivante et, à recommencer chacune des étapes à partir de l'étape II.

De manière plus détaillée, dans l'étape d'initialisation I, il s'agit de trouver à quelle face F appartient le point $P_o$ de paramètre $t_o$ de la courbe C à insérer (bloc 20). Le procédé consiste alors de manière avantageuse à insérer fictivement une droite $D_o$ ayant pour origine ce point $P_o$ et pour extrémité un point $P_e$ connu, situé à l'extérieur d'un rectangle contenant la carte planaire. Le point $P_e$ appartient donc à la face qualifiée de face infinie $F_i$.

La demi-droite est insérée de manière fictive, c'est-à-dire qu'elle est uniquement utilisée pour effectuer le calcul des intersections et ne fait pas l'objet d'une mise à jour de la carte planaire. Le principe de la localisation de l'origine de la courbe à insérer consiste à chercher l'arête e telle que la distance entre l'intersection des arêtes $e_j$ avec la droite $D_o$ et le point $P_o$ soit minimale. Au départ le point courant est le point $P_e$, ce point étant situé dans la face infinie $F_i$.

Pour obtenir l'arête e de façon optimale, on parcourt les faces adjacentes de proche en proche du point $P_e$ vers le point $P_o$ le long de la droite $D_o$, la dernière intersection trouvée étant la plus proche.

Ce parcours consiste à déterminer les points d'intersection entre la droite et chacune des faces au moyen de l'arbre des contours. Une méthode particulière qui permet de déterminer les intersections entre deux courbes est décrite dans la suite comme cela a été déjà dit.

On mémorise la face F à laquelle appartient le point $P_o$. Dans le cas où aucune intersection n'a été déterminée, on mémorise la face infinie $F_i$ (bloc 21).

Deux cas particuliers peuvent se produire : le point à localiser $P_o$ se trouve sur un sommet ou sur une arête de la carte. Si le point se trouve sur un sommet, on utilise l'$\alpha$-ordre en ce sommet pour déterminer la face contenant le brin incident à $P_o$. Si le point se trouve sur une arête e on utilise l'$\alpha$-ordre au sommet (associé à $P_o$) nouvellement créé par scission de l'arête e.

Le paramètre $t_i$ pour le point $P_o$ correspond au paramètre $t_o$.

L'étape d'intersection II comporte une sous étape 30 consistant à effectuer des comparaisons de l'arc $a_i$ défini par les paramètres ($t_i$, $t_n$) en l'occurrence ($t_o$, $t_n$), lors de la première itération, avec toutes les courbes de la face F.

L'on détermine pour cela les intersections entre l'arc $a_i$ de paramètres ($t_i$, $t_n$), c'est-à-dire la courbe toute entière à la première itération, et toutes les courbes portées par les arêtes du contour de la face F.

Le point d'intersection le plus proche du point de départ, soit $P_o$ à la première itération, définit un premier arc de paramètres ($t_i$, $t_{i+1}$), qui va être inséré dans la face considérée (bloc 32).

L'étape de mise à jour III comporte donc une sous étape 50 d'insertion de l'arc ($t_i$, $t_{i+1}$), courant dans la face considérée, soit F pour le premier arc.

Puis dans l'étape d'itération IV, on procède à l'itération du paramètre $t_i$ qui devient le paramètre $t_{i+1}$ en ayant auparavant comparé $t_{i+1}$ à $t_n$, c'est-à-dire en ayant vérifié que l'on n'a pas atteint l'extrémité $P_n$ de la courbe (bloc 70).

Dans le cas où il s'agit de l'extrémité $P_n$ de la courbe, le procédé d'insertion est terminé.

Dans le cas contraire, l'on passe de la face dans laquelle on vient d'insérer un arc à la face adjacente (bloc 71) et l'on recommence à nouveau à l'étape II d'intersection, c'est-à-dire à comparer l'arc ($t_i$, $t_n$), i ayant été incrémenté, avec toutes les courbes de la nouvelle face non encore intersectées.

On va décrire maintenant la sous-étape 31 de comparaison de l'arc ($t_i$, $t_n$), avec toutes les courbes de la face courante de manière plus détaillée. Cette étape comporte une phase de calcul des intersections.

Soit C la courbe à insérer et B une courbe de la face courante. La détermination des points d'intersection permet d'obtenir pour chaque intersection entre la courbe C et la courbe B un contexte d'intersection contenant :

- les paramètres $t_C$ et $t_B$ des points d'intersection $P_C$ et $P_B$ sur C et B,
- l'$\alpha$-ordre $\alpha_{CB}$ des brins de C et de B, autour des points d'intersection de C et de B.

Le calcul des contextes d'intersection est réalisé par la méthode décrite dans la suite. On procède ensuite à une mise à jour des intersections dans la carte planaire.

A chaque intersection trouvée entre la nouvelle courbe C à insérer et une courbe B de la face courante, on met à jour les $\alpha$-ordres de la carte autour des points d'intersection trouvés :

1) - soit l'ensemble ($t_C$, $P_C$, $t_B$ , $P_B$, $\alpha_{CB}$) le contexte d'intersection obtenu par l'étape permettant de déterminer les intersections,

2) - Si $P_B$ n'est pas un point de B :

a) scinder l'arête e portant l'arc contenant $t_B$,

b) scinder B en $t_B$ et tous les arcs portés par e,

3) - Si $P_C$ n'est pas un point de C, scinder C en $t_C$,

4) soit s le sommet sur lequel se projettent $P_B$ et $P_C$, fusionner l'α-ordre du sommet s et l'α-ordre $\alpha_{CB}$.

La mise à jour de l'α-ordre s'effectue en chaque sommet d'intersection trouvé en insérant les brins d'intersection de C et de B s'ils n'existent pas déjà, auquel cas les arcs partagent les mêmes brins. Pour mettre à jour l'α-ordre des brins autour de ces sommets, on utilise la pente des cordes d'intersection comme cela est décrit dans la demande précédemment référencée.

Tous les brins d'intersection non-existants autour d'un sommet d'intersection sont insérés, y compris ceux de la nouvelle courbe C. Ceux-ci permettent ensuite d'obtenir la face F contenant l'arc $a_{i+1}$ en prenant la face associée au contour attaché au brin α(b), où b est le premier brin de l'arc $a_{i+1}$.

On procède également lors de cette sous-étape à un marquage de la face courante F et cela, de façon préférentielle, en réservant un champ dans le codage des faces de manière à renseigner ce champ dès que l'on a déterminé des intersections entre l'arc de courbe paramétré ($t_i$ , $t_n$) et la face.

On va maintenant décrire de manière plus explicite la sous-étape 50 d'insertion de l'arc de paramètres ($t_i$, $t_{i+1}$) dans une face F.

Après avoir cherché toutes les intersections entre la nouvelle courbe C et la face F et mis à jour les α-ordres autour de ces intersections, l'on insère l'arc $a_i$ dans la carte. A cette étape du procédé, $a_i$ intersecte la carte au plus en ses points extrémités ($P_i$, $P_{i+1}$).

Lors de l'insertion de l'arc $a_i$ on crée :

- un sommet pour chaque brin de $a_i$ si ce sommet n'existe pas déjà dans la carte ; dans le cas contraire l'arc de courbe avait un de ses points extrémités se projetant sur un sommet de la carte,
- une arête si elle n'existe pas déjà dans la carte ; dans le cas contraire, l'arc $a_i$ se projette sur une arête existante, ce qui signifie qu'il y a un recouvrement d'arc.

Si l'arête portant l'arc $a_i$ n'existe pas, on met à jour l'arbre des contours avec cette arête.

Dans l'étape III de mise à jour, à la suite de l'insertion de l'arc ($t_i$, $t_{i+1}$), on procède à une sous-étape 51 de mise à jour de l'arbre d'inclusion des contours consistant dans ce cas à modifier l'arbre pour tenir compte de la nouvelle arête.

Pour décrire la sous-étape 51, on définit la terminologie suivante :

Arêtes pendantes/arêtes séparatrices

Un sommet est un sommet pendant si et seulement si une et une seule arête est incidente à ce sommet.

Une arête e est une arête pendante si et seulement si ses deux brins b et ω(b) appartiennent au même contour. Sinon e est une arête séparatrice.

On distingue 3 types d'arêtes pendantes suivant le nombre de sommets pendants de cette arête :

- une arête de connexion est une arête pendante dont aucun des sommets n'est pendant,
- une arête terminale est une arête pendante dont un et un seul des sommets est pendant,
- une arête isolée est une arête pendante dont les deux sommets sont pendants.

Une arête dont les 2 sommets sont confondus est une boucle . Une boucle dont le sommet est de degré 2 est une boucle isolée.

Dans le procédé conforme à l'invention, on a répertorié huit cas possibles pour une arête dans une carte planaire. Ces huit cas sont mis dans une table en mémoire (figure 7).

- Cas 1 - l'arête est une arête terminale dont les deux brins sont incidents à un contour interne, noté $C_i$,
- Cas 2 - l'arête est une arête de connexion dont les deux brins sont incidents à un contour interne $C_i$,
- Cas 3 - l'arête est une arête séparatrice dont les deux brins sont incidents à deux contours internes distincts $C_i$ et $C'_i$,
- Cas 4 - l'arête est une arête séparatrice dont un brin est incident à un contour interne $C_i$ et l'autre brin est incident à un contour externe $C_e$,
- Cas 5 - l'arête est une arête isolée,
- Cas 6 - l'arête est une arête terminale dont les deux brins sont incidents à un contour externe $C_e$,
- Cas 7 - l'arête est une arête de connexion dont les deux brins sont incidents à un contour externe $C_e$,
- Cas 8 - l'arête est une boucle isolée.

En pratique la mise à jour de l'arbre des contours lors de l'insertion d'une arête consiste à effectuer :

1. la détermination du cas, ce qui fournit le (ou les) contour(s) à mettre à jour dans l'arbre d'inclusion,
2. la mise à jour proprement dite de l'arbre d'inclusion des contours.

Pour la détermination du cas de l'arête, on se reportera au schéma de la figure 6a (blocs 510-519) :

- L'arbre des contours est mis à jour après l'insertion de chaque arête dans la carte. Ainsi, les brins, les sommets de l'arête, et l'α-ordre autour de ces sommets sont à jour avant de procéder à la mise à jour

de l'arbre des contours.

- On peut donc consulter les contours $C_o$, $C_1$ auxquels appartiennent les brins voisins des brins de e ($\alpha$(b) et $\alpha\omega$(b) avec b=un brin de e). Le type (interne ou externe) de ces contours, associé au nombre des sommets pendants de l'arête à insérer e permet de déterminer le cas de cette arête.

Le tableau 1 ci-dessous résume comment est déterminé le cas de l'arête à insérer e, b étant un brin de e.

TABLEAU 1

| Nombre de sommets pendants (bloc 511) | anciens contours ($C_o$, $C_1$) | cas |
|---|---|---|
| 0 (bloc 512) | contours internes identiques<br>contours externes identiques<br>contours interne et externe<br>contours externes distincts<br>aucun | 3<br>4<br>2<br>7<br>8 |
| 1 (bloc 517) | contour interne<br>contour externe | 1<br>6 |
| 2 | sans objet | 5 |

Pour la mise à jour proprement dite :

Quand deux contours sont fusionnés en un, un contour est supprimé de l'arbre d'inclusion, le contour conservé hérite des brins et des contours descendants du contour supprimé.

Quand un contour est scindé en deux, un contour est créé, ce contour devient fils ou frère du contour scindé. Les contours descendants du contour scindé sont partagés entre les deux contours : on détermine leur ascendant par localisation (comme l'on a procédé pour l'origine $P_o$).

Les cas 1 et 6 (arête terminale) ne donnent pas lieu à une modification de l'arbre des contours.

- Pour le cas 2 :
  On procède à une fusion d'un contour interne et d'un externe en un contour interne ; les fils du contour externe deviennent les frères du contour interne ; l'externe est supprimé de l'arbre des contours.
- Pour le cas 3 :
  On procède à une scission d'un contour interne en deux contours internes ; le contour interne créé devient frère du contour scindé ; certains fils du contour scindé deviennent fils du contour créé.
- Pour le cas 4 :
  on procède à une scission d'un contour externe en un contour externe et un interne ; le contour interne créé devient fils du contour externe ; certains frères du contour externe deviennent fils du contour créé.
- Pour le cas 5 :
  on procède à une création d'un contour externe ; son père interne est déterminé par la localisation de l'origine de la courbe insérée (résultat du processus de localisation).

- Pour le cas 7 :
  on procède à une fusion de deux contours externes en un contour externe ; un contour externe est supprimé de l'arbre des contours, les fils du contour supprimé deviennent fils du contour externe résultat de la fusion.
- Pour le cas 8 :
  On procède à une création d'un contour externe et d'un contour interne. Le contour interne créé devient fils du contour externe. On détermine le père du contour externe par la localisation du sommet de la boucle (résultat du processus de localisation). Certains fils du père du contour externe deviennent fils du contour interne créé.

On va maintenant décrire la mise à jour de l'arbre des contours dans le cas de la suppression d'une arête. Comme pour l'insertion, la mise à jour se compose de deux phases :

1. détermination du cas de l'arête à supprimer,
2. mise à jour de l'arbre des contours en fonction du cas de l'arête.

Pour la détermination du cas de l'arête on se reportera au schéma de la figure 6b (blocs 610-619) :

Dans le cas de la suppression d'arête, la mise à jour est réalisée avant la suppression de l'arête. On connaît donc le nombre de sommets pendants de l'arête (bloc 611), et le type (interne ou externe) des contours auxquels appartiennent les brins de l'arête.

Le tableau 2 ci-dessous résume comment est déterminé le cas de l'arête e à supprimer, b étant un brin de l'arête e.

TABLEAU 2

| Nombre de sommets pendants (bloc 611) | contours incidents ($C_o$, $C_1$) | cas |
|---|---|---|
| 0 (bloc 612) | contours internes identiques<br>contours externes identiques<br>contours interne et externe<br>contours internes distincts<br>contours interne et externe | 2<br>7<br>4<br>3<br>8 |
| 1 (bloc 617) | contour interne<br>contour externe | 1<br>6 |
| 2 | sans objet | 5 |

Dans le cas du bloc de comparaison 615 aboutissant au cas 4, au moins un des contours $C_o$ ou $C_1$ contient plus d'un brin.

Dans le cas du bloc de comparaison 615 aboutissant au cas 8, les deux contours $C_o$ et $C_1$ ne contiennent qu'un seul brin.

Pour la mise à jour proprement dite :

Les cas 1 et 6 (arête terminale) ne modifient pas l'arbre des contours.

- Pour le cas 2 :
  On procède à une scission d'un contour interne en un contour interne et un contour externe ; l'externe créé sera fils de l'interne ; certains contours qui étaient frères du contour interne deviennent fils du

contour externe créé ;

- Pour le cas 3 :
  On procède à une fusion de deux contours internes en un contour interne et on fusionne les fils externes de chacun des deux contours ;
- Pour le cas 4 :
  On procède à une fusion d'un contour interne et d'un externe en un contour externe ; les contours fils du contour interne deviennent frères du contour externe;
- Pour le cas 5 :
  On procède à une suppression d'un contour externe ;
- Pour le cas 7 :
  On procède à une scission d'un contour externe en deux contours externes ; certains fils du contour externe scindé deviennent fils du contour créé.
- Pour le cas 8 :
  On procède à la suppression d'un contour externe et d'un contour interne. Les contours fils du contour interne supprimé deviennent fils du père du contour externe supprimé.

La description qui suit concerne la réalisation d'une opération de gommage conformément au procédé objet de l'invention.

GOMMAGE (Fig. 5b, Fig. 7)

Conformément à l'invention, lors d'une opération de suppression, les éléments de la structure de données géométrique ne sont jamais supprimés, mais ils sont marqués gommés. Par contre, les éléments de la structure de données topologique : sommets, arêtes et contours peuvent être supprimés. L'arbre des contours est mis à jour.

Le procédé permet de gommer les objets suivants : une arête, une courbe, une composante connexe, les arêtes pendantes d'un contour, d'une face, d'une composante ou de la carte toute entière. La phase de gommage comporte les étapes V et VI de la figure 5b. L'objet à gommer est tout d'abord localisé dans la carte (V) par la localisation de toutes ses arêtes e (blocs 40, 41). On procède ensuite à une mise à jour (VI) consistant à effectuer un gommage proprement dit et à une mise à jour de l'arbre des contours (bloc 60).

Gommer une courbe signifie marquer "gommé" les arcs de cette courbe, et enlever ces arcs des arêtes qui les portent. Si des arêtes ne portent plus d'arcs, elles sont supprimées : leurs brins sont ôtés de l' $\alpha$-ordre des sommets autour desquels ils étaient incidents, et leurs sommets sont supprimés s'ils n'ont plus de brins incidents.

Ainsi, gommer une composante signifie gommer toutes les arêtes de cette composante.

Afin d'éviter toute création non voulue de composante connexe, on ne va pas procéder au gommage arête par arête de ladite composante.

La demanderesse a remarqué que seules les arêtes de connexion (cas 2 et 7) produisent, quand on les gomme, une deuxième composante (par scission de la première). Par contre tous les autres cas n'en produisent pas. En particulier les arêtes de cas 4. Et une composante qui ne contient pas d'arêtes de cas 4 ou n'est pas réduite à une arête de cas 8 est un contour externe pendant (contour constitué d'une arête de cas 5 ou d'arêtes de cas 6 et 7). Une telle composante peut être gommée en gommant ses arêtes pendantes.

On procède alors aux étapes suivantes :

1. gommage de toutes les arêtes de cas 4 (si elles existent).
2. gommage de toutes les arêtes pendantes de la composante (si elles existent).
3. gommer l'arête de cas 8 (si elle existe).

Pour l'étape 1 : on parcourt le contour externe de la composante, en effet toutes les arêtes de cas 4 (si elles existent) se trouvent sur ce contour.

Dans le cas où il n'y a pas d'arêtes de cas 4 à supprimer, cela signifie que la composante est un contour externe pendant ou est réduite à une arête de cas 8.

Pour l'étape 2 : si la composante n'est pas une arête de cas 8, il suffit alors de supprimer les arêtes pendantes de cette composante.

Pour l'étape 3 : supprimer l'arête de cas 8.

Ainsi, pour réaliser le gommage des arêtes pendantes d'un contour, d'une face, d'une composante ou d'une carte, on procède avantageusement à un gommage des arêtes pendantes en supprimant de façon récursive les feuilles des arborescences pendantes. Pour cela, on parcourt l'objet à nettoyer en cherchant une arête dont au moins un sommet est pendant (arête terminale ou isolée). Si après suppression d'une arête terminale, le sommet non pendant de l'arête devient pendant, alors l'arête incidente en ce sommet est devenue terminale. On réitère ainsi en suivant les arêtes terminales à travers les sommets pendants.

De façon pratique, on met en oeuvre les étapes suivantes :

A. chercher une arête e dont au moins un sommet est pendant, (s'il n'en existe pas il n'y a plus d'arête pendante),

B. si e existe :

(a) conserver le sommet s non pendant de e,

(b) supprimer l'arête e,

(c) si s est devenu pendant après l'étape B(b), réitérer en B(a) avec une arête e = l'arête incidente en s,

(d) réitérer en A.

## COLORIAGE

Pour le remplissage, c'est-à-dire le coloriage d'une face, on applique les étapes relatives à l'affichage conformément à l'invention, ces étapes étant explicitées dans la partie relative à l'affichage. La localisation d'un point donné par l'utilisateur est effectuée telle que décrite dans la présente demande page 13 ligne 13 à page 14 ligne 1 à propos de la localisation du point $P_o$.

La description qui suit donne un mode de réalisation particulier pour déterminer les intersections de courbes conformément à l'invention.

## INTERSECTION (Fig. 8 à Fig. 15)

Les courbes dont on souhaite déterminer les points d'intersection ne sont pas obtenues directement, mais par interpolation par des segments de droite ayant des extrémités situées sur ces courbes. Pour chaque courbe, ces segments de droite successifs forment une polyligne. Le choix des paramètres de définition de ces polylignes est particulièrement important puisqu'il conditionne une bonne représentation de chaque courbe et que, pour déterminer les points d'intersection de deux courbes, on détermine les points d'intersection de deux polylignes interpolant respectivement ces deux courbes.

Parmi les méthodes connues pouvant servir à l'élaboration des polylignes d'une courbe, la plus performante est la méthode dite de "de Casteljau" décrite notamment dans l'ouvrage "Formes à Pôles" par Paul de Faget de Casteljau - volume 2 de "Mathématiques et CAO - Hermès 1985 (1).

Cette méthode consiste à considérer que toute courbe paramétrique polynomiale de degré d peut être exprimée sous forme de courbe de Bézier, de type polynomial. Les courbes de Bézier sont décrites notamment dans l'ouvrage "Courbes et Surfaces" par P. Bézier-Mathématiques et CAO - volume 4 - Hermès 1986 (2). On sait par les documents (1, 2) précités qu'une courbe paramétrique polynomiale de degré d, décrite mathématiquement par la fonction vectorielle U(t)=(x(t), y(t)), avec $0 \leqq t \leqq 1$ peut être définie par d+1 points de Bézier successifs U0, U1, U2, ..., Ud, de sorte que :

$$U(t) = \sum_{i=0}^{d} U_i B_{i,d}(t)$$

Dans cette relation $U_i$ désigne les points de Bézier, et les $B_{i,d}$ (t) sont les polynômes de Bernstein qui sont notamment décrits dans le document (2) ci-dessus, ainsi que dans les documents suivants :

- "Numerical control : Mathematics and applications" Wiley and Sons Ltd. 1972 par P. Bézier (3).
- J. Lane et R. Riesenfeld. "A Theoretical Development for the Computer Generation and Display of Piecewise Polynomial Surfaces". IEEE Transaction on Pattern Analysis and Machine Intelligence, vol.2(1) : 35-46, 1980 (4).
- L. Ramshaw. Blossoming : A Connect-the-Dots Approach to Splines. Research Report ≠ 19, Digital Equipment Systems Research Center, Palo Alto, 1987 (5).

Les points successifs $U_0$, $U_1$, ..., $U_d$ sont qualifiés de points de contrôle, tandis que le polygone défini par les points $U_0$, $U_1$, ..., $U_d$, $U_0$, pris dans cet ordre, est qualifié de polygone de contrôle. Chaque point de contrôle $U_i$ peut être localisé par des coordonnées réelles ($x_i$, $y_i$), dans un repère de référence. Ces coordonnées réelles sont enregistrées dans la mémoire de l'ordinateur.

La méthode de "de Casteljau" mentionnée plus haut et décrite dans les documents (1) et (2) précités, permet plus précisément d'obtenir la polyligne d'interpolation d'une courbe de Bézier. Une polyligne est formée de N segments successifs, permettant de représenter cette courbe au plus près. La méthode de "de Casteljau"

est une méthode qui permet d'interpoler une courbe de Bézier par une polyligne obtenue grâce à une subdivision de type récursif : selon une variante de cette méthode la courbe est d'abord interpolée par une polyligne à deux segments (profondeur d'interpolation k=1), puis par une polyligne à quatre segments (k=2), et ainsi de suite, pour satisfaire le "critère de proximité" suivant : chaque segment de la polyligne n'est pas plus éloigné de plus d'une unité de grille de la portion de courbe qu'il interpole. L'unité de grille est l'unité qui est choisie dans le repère de référence.

Cette méthode donne une bonne représentation d'une courbe de Bézier en utilisant un traitement récursif d'interpolation. Le nombre N de segments d'une polyligne est lié à la profondeur k d'interpolation, par la relation $N=2^k$.

Des auteurs, et notamment G. Wang,ont montré que la profondeur d'interpolation k satisfaisant le critère de proximité précédent, est donnée par la relation :

$$k = \left\lceil \mathrm{Log}_4 \frac{d(d-1)D}{8} \right\rceil$$

dans laquelle <u>d</u> désigne le degré de la courbe et D la diagonale du polygone de contrôle de la courbe ; cette diagonale sera décrite plus loin en détail.

La méthode d'interpolation de "de Casteljau" sera mieux comprise à l'aide de la description de la figure 8. Cette figure représente schématiquement une courbe C de Bézier, de degré d=3 par exemple, dont le polygone de contrôle PC est défini par d+1=4 points de contrôles U0, U1, U2, U3, de coordonnées ($x_0$, $y_0$), ($x_1$, $y_1$), ($x_2$, $y_2$), ($x_3$, $y_3$), mesurées dans un repère de référence (o, x, y) ; ces coordonnées sont enregistrées dans la mémoire d'un ordinateur.

Cette courbe peut être interpolée par une polyligne, selon la méthode de "de Casteljau" qui ne sera pas décrite ici en détail. La polyligne PL comporte N=4 segments dans l'exemple représenté ; la profondeur d'interpolation k nécessaire à l'obtention de cette polyligne est ici égale à 2, puisque $N=2^k=4$.

On a aussi représenté sur cette figure, les deux diagonales D1 et D2 du polygone de contrôle PC.

Selon un mode préféré de réalisation, pour déterminer les intersections de deux courbes, on détermine tout d'abord les polylignes respectives de ces courbes et pour cela, pour chaque courbe, on calcule tout d'abord la profondeur d'interpolation k par la formule de Wang :

$$k = \left\lceil \mathrm{Log}_4 \frac{d\,(d-1)}{8} D \right\rceil$$

de manière à calculer le nombre $N=2^k$ de segments de chaque polyligne.

Comme indiqué plus haut pour calculer k, il est nécessaire de rechercher, parmi les valeurs des longueurs des diagonales D1 et D2 (dans l'exemple représenté sur la figure 8) du polygone de contrôle, la valeur maximale D. Cette recherche est aisée pour chaque courbe, puisque les coordonnées de chaque point de contrôle du polygone de contrôle de chaque courbe sont connues et sont enregistrées en mémoire.

La connaissance de chaque valeur de N permet alors de connaître chaque pas élémentaire ($\delta x_0$, $\delta y_0$) qui permet notamment de passer de chaque première extrémité de coordonnées ($x_0$, $y_0$) du premier segment S1 de chaque polyligne, à la deuxième extrémité de coordonnée ($x_1$, $y_1$) de ce segment. Cette deuxième extrémité du premier segment S1 correspond d'ailleurs à la première extrémité du segment suivant S2 de la polyligne.

D'une façon générale, les coordonnées ($x_{i+1}$, $y_{i+1}$) des extrémités des segments de chaque polyligne, sont calculées par récurrence par l'ordinateur, en évaluant a priori le pas ($\delta x_i$, $\delta y_i$) qu'il faut ajouter respectivement aux coordonnées ($x_i$, $y_i$) de l'extrémité d'un segment, pour passer aux coordonnées ($x_{i+1}$, $y_{i+1}$) de l'extrémité d'un segment suivant sur la polyligne.

Ce calcul peut être qualifié de calcul de "pas en avant" ou "différences en avant". La relation de récurrence s'établit de la manière suivante :

$$x_{i+1} = x_i + \delta x_i \qquad \text{et} \qquad y_{i+1} = y_i + \delta y_1$$

avec

$$\delta x_{i+1} = \delta x_i + \delta^2 x_i \quad \text{avec} \quad \delta y_{i+1} = \delta y_i + \delta^2 y_i$$

$$\delta^2 x_{i+1} = \delta^2 x_i + \delta^3 x_i \qquad \delta^2 y_{i+1} = \delta^2 y_i + \delta^3 y_i$$

$$\vdots$$

$$\delta^{d-1} x_{i+1} = \delta^{d-1} x_i + \delta^d x_i \qquad \delta^{d-1} y_{i+1} = \delta^{d-1} y_i + \delta^d y_i,$$

A l'initialisation, pour i=0, on obtient :

$$x_1 = x_0 + \delta x_0 \text{ et } \delta y_0.$$

$\delta x_0$ et $\delta y_0$ sont les coordonnées du premier point de contrôle $U_0$. Le nombre N de segments de la polyligne étant connu, on peut alors calculer par récurrence et a priori, les différences $\delta x_1 = x_0+\delta^2 x_0$ et $\delta y_1 = \delta y_0+\delta^2 y_0$ et ainsi de suite jusqu' à $\delta^d x_{i+1}$ et $\delta^d y_{i+1}$, $\delta x_0$ et $\delta y_0$, $\delta x_0$ et $\delta^2 y_0$, ..., $\delta^d x_0$ et $\delta^d y_0$, sont initialisés à partir des coordonnées des points de contrôle du degré d de la courbe, et de la profondeur d'interpolation k.

Ces calculs de coordonnées d'extrémités des segments de chaque polyligne de chaque courbe étant effectués, et ces coordonnées étant enregistrées en mémoire dans leur ordre de calcul (pour $0 \leqq i \leqq N$), on recherche alors les intersections des deux courbes. Chaque point d'intersection est recherché à partir de deux segments caractéristiques appartenant respectivement aux deux polylignes interpolant respectivement les deux courbes et se coupant au point recherché. La recherche de ces deux segments caractéristiques est d'ailleurs un autre aspect essentiel de l'invention.

Avant de rechercher les points d'intersection, comme on le verra plus loin en détail, les coordonnées calculées des extrémités des segments de chaque polyligne de chaque courbe, sont ramenées à des valeurs entières. Ces valeurs entières correspondent respectivement aux coordonnées entières des points d'une grille G du repère de référence (0,x,y), respectivement les plus proches des extrémités des segments de chaque polyligne. Ces valeurs entières des coordonnées d'extrémités des segments, sont enregistrées en mémoire.

La figure 9 représente la grille G dans le repère (0,x,y), de pas p égal à l'unité. On a représenté schématiquement et en exemple, deux segments S1, S2 d'une polyligne d'une courbe, obtenue selon le procédé de l'invention. Ces segments présentent des extrémités ayant respectivement pour coordonnées $((x_0, y_0), (x_1, y_1))$ et $((x_1, y_1), (x_2, y_2))$.

Les valeurs des coordonnées $(x_0, y_0)$ de la première extrémité du segment S1 sont ramenées aux valeurs entières les plus proches, c'est-à-dire aux valeurs entières correspondant aux coordonnées du point d'intersection G1 de la grille G, le plus proche de cette première extrémité. De la même manière, les valeurs des coordonnées $(x_1, y_1)$ sont ramenées aux valeurs entières des coordonnées du point G2 de la grille, le plus proche de l'extrémité de coordonnées $(x_1, y_1)$. Il en est de même pour l'extrémité de coordonnées $(x_2, y_2)$ dont les valeurs sont ramenées aux valeurs entières des coordonnées du point le plus proche G3 de la grille.

La figure 10 représente schématiquement et en exemple, deux polylignes P et Q respectivement interpolantes de deux courbes de Bezier, non représentées, dont on recherche les deux points d'intersection. La recherche des points d'intersection de ces deux courbes est ramenée à la recherche des deux points d'intersection $I_1$ et $I_2$ des polylignes qui leur correspondent. On suppose que les intersections sont transverses, mais les explications qui suivent restent valables pour des courbes présentant des intersections non transverses, c'est-à-dire des courbes se chevauchant partiellement.

On suppose par exemple que chaque polyligne comporte ici huit segments :$P_0P_1$, $P_1P_2$, ..., $P_7P_8$, pour la polyligne P, et $Q_0Q_1$, $Q_1Q_2$, ..., $Q_7Q_8$, pour la polyligne Q. Les coordonnées $(x_0, y_0)$, $(x_1, y_1)$ ... $(x_8, y_8)$ et $(x'_0, y'_0)$, $(x'_1, y'_1)$, ..., $(x'_8, y'_8)$ des extrémités $P_0$, $P_1$, ..., $P_8$ et $Q_0$, $Q_1$, ..., $Q_8$ de ces segments, sont enregistrées en mémoire dans leur ordre de calcul, l'indice i de repérage de chaque extrémité $P_i$ ou $Q_i$ allant ici de 0 à 8, tel que schématisé dans les tableaux A et B de la figure 11, relatifs respectivement aux polylignes P et Q.

Les figures 11 et 12 vont maintenant permettre de mieux comprendre la recherche de chaque point d'intersection entre deux courbes, à partir des polylignes interpolant respectivement ces courbes.

L'enregistrement en mémoire des coordonnées des extrémités $P_0$, $P_1$, ..., $P_8$ et $Q_0$, $Q_1$, ..., $Q_8$ des segments

des polylignes P et Q, est représenté schématiquement par les tableaux A et B de la figure 11. On voit dans le tableau A que les extrémités $P_0$, $P_1$, ..., $P_8$ des segments de la polyligne P, de coordonnées respectives ($x_0$, $y_0$), ($x_1$, $y_1$), ..., ($x_8$, $y_8$), sont enregistrées en mémoire dans leur ordre chronologique de calcul, depuis la première extrémité $P_0$ du premier segment, jusqu'à la deuxième extrémité $P_8$ du dernier segment, l'indice i de ces extrémités étant ici compris entre 0 et N=8.

Il en est de même pour les coordonnées ($x'_0$, $y'_0$), ($x'_1$, $y'_1$), ..., ($x'_8$, $y'_8$) des extrémités $Q_0$, $Q_1$, ..., $Q_8$ des segments de la polyligne Q, comme représenté schématiquement dans le tableau B de la figure 11.

Selon le mode préféré de réalisation, on recherche dans la polyligne de chaque courbe, à partir des valeurs entières des coordonnées d'extrémités des segments de cette polyligne, enregistrées en mémoire, des séquences monotones de valeurs entières (en x et en y). Chaque séquence monotone correspond à une succession de segments, délimitée par une première extrémité d'un premier segment extrême et par une deuxième extrémité d'un segment extrême.

Dans l'exemple représenté sur la figure 10, la polyligne P interpolant l'une des courbes, présente une première séquence monotone dans les valeurs des coordonnées des extrémités P, $P_1$, $P_2$, $P_3$, $P_4$ des segments de cette polyligne, (valeurs de x et de y croissantes), et une deuxième séquence monotone dans les valeurs des coordonnées des extrémités $P_4$, $P_5$, $P_6$, $P_7$, $P_8$ d'autres segments de cette polyligne (valeurs de x croissantes et valeurs de y décroissantes). Ces première et deuxième séquences monotones pour la polyligne P, sont désignées par $M_1$ et $M_2$ dans le tableau A de la figure 11. Les coordonnées des extrémités des segments des séquences $M_1$ et $M_2$ forment des sous-tableaux du tableau A.

De la même manière, pour la polyligne Q interpolant l'autre courbe, on distingue une première séquence monotone dans les valeurs des coordonnées des extrémités $Q_0$, $Q_1$, $Q_2$, $Q_3$, $Q_4$ et une deuxième séquence monotone dans les valeurs des coordonnées des extrémités $Q_4$, $Q_5$, $Q_6$, $Q_7$, $Q_8$ des segments de cette polyligne. Ces deux séquences monotones sont désignées par $M'_1$ et $M'_2$ dans le tableau B de la figure 11. Les coordonnées des extrémités des segments des séquences $M'_1$ et $M'_2$ forment des sous-tableaux du tableau B.

On voit sur ces figures que chaque séquence est délimitée par les coordonnées de la première extrémité du premier segment de la séquence (premier segment extrême de la séquence), et par les coordonnées de la deuxième extrémité du dernier segment de la séquence (deuxième segment extrême de la séquence). C'est ainsi par exemple, que la séquence $M_1$ est délimitée par les coordonnées ($x_0$, $y_0$) de la première extrémité $P_0$ du premier segment $P_0P_1$ de cette séquence, et par les coordonnées ($x_8$, $y_8$) de la deuxième extrémité $P_8$ du dernier segment $P_8$ de cette séquence.

La recherche des parties monotones de chaque polyligne est aisée, à partir des coordonnées des extrémités des segments, enregistrées en mémoire.

Les délimitations des séquences monotones permet de définir des "boîtes englobantes" $B_1$, $B_2$, correspondant respectivement aux séquences $M_1$, $M_2$, pour la polyligne P et des "boîtes englobantes" $B'_1$, $B'_2$, correspondant respectivement aux séquences $M'_1$, $M'_2$, pour la polyligne Q.

Deux bords de chacune de ces boîtes englobantes sont parallèles à l'axe x du repère de référence, tandis que deux autres bords sont parallèles à l'axe y. Les positions de ces bords sont fournies par les coordonnées des première et deuxième extrémités des segments extrêmes de chaque séquence, dont les valeurs sont enregistrées en mémoire.

Sur la figure 10, on voit que les boîtes $B_1$ et $B'_1$ forment une paire intéressante puisqu'elles présentent une zone commune Z1, délimitée par le chevauchement de ces deux boîtes, dans laquelle est située le premier point d'intersection I1 des deux polylignes P et Q. Il en est de même pour les boîtes englobantes $B_2$ et $B'_2$ qui présentent une zone commune Z2, dans laquelle est situé le deuxième point d'intersection I2 des deux polylignes P et Q.

La zone Z3, commune aux boîtes englobantes $B'_1$ et $B_2$, n'est pas intéressante, car elle ne contient aucun point d'intersection.

Le mode préféré de réalisation va consister, par subdivisions binaires successives dans les sous-tableaux relatifs aux parties monotones de chaque polyligne, à rechercher grâce aux boîtes englobantes, des zones plus réduites de chevauchement éventuel. Pour cela, on subdivise chaque séquence monotone de chaque polyligne en deux parties, gauche et droite, dont les boîtes englobantes sont données sans calcul par les points extrémités de ces parties ; puis on recherche le chevauchement éventuel de chacune des deux sous-boîtes d'une polyligne avec chacune des deux sous-boîtes de l'autre polyligne.

La figure 12 permet de mieux comprendre comment, après une ou plusieurs subdivisions de ce type, on peut, pour le point d'intersection I1 par exemple, déterminer les deux segments caractéristiques $P_0P_1$ et $Q_0Q_1$ qui définissent ce point d'intersection. Pour simplifier la compréhension de cette figure, on n'a représenté que la partie gauche de la figure 10, relative au point d'intersection I1.

Chaque boîte englobante est parfaitement délimitée et connue, puisque pour la boîte $B_1$ par exemple, on

connaît, grâce au tableau A de la figure 11, les coordonnées des extrémités $P_0$ et $P_4$ délimitant cette boîte. Il en est de même pour la boîte $B'_1$, délimitée par les coordonnées des extrémités $Q_0$ et $Q_4$. La zone Z1 de chevauchement des boîtes $B_1$ et $B'_1$ définie plus haut, est donc facile à déterminer à partir de ces coordonnées.

Cependant cette zone Z1, contient bien un seul segment $P_0P_1$ pour la polyligne P, mais contient deux segments $Q_0Q_1$ et $Q_1Q_2$ pour la polyligne Q. Il est donc encore impossible de savoir si l'intersection I1 recherchée est définie par l'intersection de $P_0P_1$ avec $Q_0Q_1$ ou avec $Q_1Q_2$.

On effectue alors, comme le montre la figure 12, une subdivision binaire de $B_1$ et $B'_1$, en "coupant" ces boîtes englobantes, chacune en deux sous-boîtes englobantes, $B_{11}$ et $B_{12}$ pour la boîte $B_1$, $B'_{11}$ et $B'_{12}$ pour la boîte $B_2$. On cherche alors les zones de chevauchement possibles entre la sous-boîte $B_{11}$ de la polyligne P et les sous-boîtes $B'_{11}$ et $B'_{12}$ de la polyligne Q, puis entre la sous-boîte $B_{12}$ de la polyligne P et les sous-boîtes $B'_{11}$ et $B'_{12}$ de la polyligne Q. Seule la zone Z4 de chevauchement des sous-boîtes $B_{11}$ et $B'_{11}$, est intéressante. Cette zone Z4 contient cependant encore deux segments pour la polyligne Q.

On effectue alors une nouvelle subdivision des sous-boîtes $B_{11}$ et $B'_{11}$, comme indiqué plus haut, de manière à obtenir de nouvelles sous-boîtes englobantes, parmi lesquelles deux sous-boîtes $B_{111}$ et $B'_{111}$, telles que représentées sur la figure 13, se chevauchent selon une zone Z5 ; cette zone contient seulement les deux segments caractéristiques $P_0P_1$ et $Q_0Q_1$, ou des portions de ces segments, qui permettent de localiser le point d'intersection I1 dans cette zone.

Les coordonnées du point I sont calculées à partir des valeurs entières correspondant respectivement aux coordonnées d'extrémités des segments $P_0P_1$ et $Q_0Q_1$. Les coordonnées calculées du point d'intersection sont exprimées par des nombres rationnels.

Le calcul de ces coordonnées n'est pas donné ici en détail car il est à la portée de l'homme de métier. On enregistre alors en mémoire, l'ordre ou indice i=0 de la première extrémité $P_0$ du segment caractéristique concerné par l'intersection $I_1$, pour la polyligne P, et un nombre rationnel représentant le rapport des distances $P_0I_1/P_0P_1$ (0,3/4) indique par exemple que $I_1$ est aux 3/4 du segment $P_0P_1$, à partir de $P_0$).

Un enregistrement similaire est effectué pour segment caractéristique $Q_0Q_1$ de la polyligne Q (on enregistre l'indice i=0 de $Q_0$ et le nombre rationnel $Q_0I_1/Q_0Q_1$).

Enfin, on enregistre également les coordonnées de $I_1$, calculées dans le repère de référence. Ce calcul n'est pas donné en détail car il est à la portée de l'homme de métier.

Ces paramètres (valeurs de i correspondant à la première extrémité de chaque segment caractéristique, nombres rationnels exprimant les distances respectives entre ces premières extrémités des segments caractéristiques et le point d'intersection $I_1$, et coordonnées du point $I_1$ dans le repère de référence) appartiennent a un "contexte d'intersection".

Ce contexte d'intersection, comporte en outre des paramètres supplémentaires qui vont être décrits à l'aide de la figure 14.

Ces paramètres concernant l'ordre d'apparition des "brins" autour du point $I_1$, lorsqu'on tourne autour de ce point, dans le sens direct par exemple, indiqué par la flèche F sur la figure. Ces brins sont des vecteurs $\vec{b1}$, $\vec{b2}$, $\vec{b3}$, $\vec{b4}$ ayant pour origine le point $I_1$. Si, pour des traitements graphiques ultérieurs éventuels, la polyligne P est parcourue de l'extrémité $P_0$ vers l'extrémité $P_1$ du segment $P_0P_1$, le premier brin rencontré est le brin b3, et l'ordre des brins autour du point $I_1$ est donc b3, b2, b4, b1. Par permutation circulaire, on sait alors que si le segment $Q_0Q_1$ par exemple est parcouru à partir de $Q_1$, l'ordre des brins rencontrés autour du point $I_1$, est alors b2, b4, b1, b3. Cet ordre peut être déterminé facilement par des calculs simples en géométrie, à partir des valeurs des coordonnées des extrémités des segments $P_0P_1$ et $Q_0Q_1$.

Il est évident que d'autres contextes d'intersection sont enregistrées pour les autres points d'intersection.

Le programme permettant d'effectuer les traitements qui viennent d'être décrits n'est pas décrit en détail et seul son organigramme est représenté schématiquement sur la figure 15. Les traitements 151 à 155 essentiels qui apparaissent sur cet organigramme ont été décrits plus haut.

Le mode préféré de réalisation qui vient d'être décrit pour des courbes paramétriques polynomiales reste valable pour des calculs paramétriques rationnelles. En effet, les traitements effectués pour des courbes paramétriques rationnelles peuvent être ramenés aux traitements effectués pour les courbes paramétriques polynomiales.

La description qui suit donne un mode de réalisation particulier pour réaliser l'affichage du dessin au fur et à mesure de sa réalisation, conformément à l'invention.

AFFICHAGE (Fig. 16 à Fig. 23)

Dans la suite de la description on se reportera au schéma de la figure 8 relatif à un polygone de contrôle d'une courbe C de degré 3.

La figure 16 représente schématiquement un support de visualisation 1 d'un moyen 2 d'affichage d'arcs de courbes paramétriques polynomiales de Bézier. Ce moyen d'affichage est relié à un ordinateur 3, lui-même relié à une mémoire 4. Le moyen d'affichage considéré ici en exemple est un terminal à écran, mais ce moyen pourrait être une imprimante par exemple. Quel que soit le moyen d'affichage utilisé, celui-ci est tel que l'affichage d'arcs de courbes sur le support de visualisation 1, est déterminé par une grille 5 de "pixels" ou "éléments d'image" 6, définie par des lignes 7 et des colonnes 8, parallèles et régulièrement espacées, d'un pas P prédéterminé. Ces lignes et ces colonnes sont balayées successivement ; chaque pixel tel que 6 est localisé par l'intersection d'une ligne et d'une colonne et repéré par ses coordonnées (X, Y) dans le repère de référence. Les axes (x, y) de ce repère sont respectivement parallèles aux lignes et aux colonnes de la grille 5. Un pixel est affiché lorsque la ligne et la colonne qui lui correspondent reçoivent des signaux de commande d'affichage provenant de moyens de commande (non représentés) du moyen d'affichage 2, sous le contrôle de l'ordinateur 3.

Comme indiqué plus haut, chaque courbe paramétrique polynomiale de Bézier, telle que la courbe (C) de la figure 17, de degré d, est décrite mathématiquement par la fonction vectorielle U(t)=(x(t), y(t)), dans laquelle t appartient à l'intervalle [0,1]. Cette courbe est définie par d+1 points de contrôle $U_i$ (avec i=0, I=1, ..., I=d) sur cet intervalle, ayant des coordonnées réelles ($x_i$, $y_i$) dans le repère de référence (0, x, y). Les coordonnées des points de contrôle sont enregistrées dans la mémoire 4 de l'ordinateur 3 de la figure 16.

Sur la figure 17, PL désigne la polyligne interpolant la courbe C, avec une profondeur d'interpolation k, et comprenant $n=2^k$ segments successifs orientés par exemple dans le sens de la flèche F. Chaque segment a deux extrémités sur la courbe. L'affichage d'un arc de courbe A de la courbe C, délimité par le couples de paramètre ($t_d$, $t_f$) sur l'intervalle [0,1] correspond en fait à afficher la portion de polyligne correspondante, délimitée par un point de départ $A_d$ et un point d'arrivée $A_f$, en affichant sur le support de visualisation 1, les pixels 6 les plus proches de cette portion de polyligne.

Selon l'invention, on calcule tout d'abord, grâce à la formule de Wang, la profondeur d'interpolation k de la courbe C correspondant à l'arc à afficher, à partir du degré d de cette courbe et de la diagonale D du polygone de contrôle, elle-même calculée à partir des coordonnées des points de contrôle, enregistrées dans la mémoire 4 de l'ordinateur 3. Ce calcul permet d'établir une correspondance biunivoque entre l'ordre i (allant de 0 à 8 dans l'exemple de la figure 17) des extrémités $E_i$ des segments de la polyligne, et la partition en $2^k$ parties égales, de l'intervalle [0,1] de variation du paramètre t, de sorte que $t_i=i.2^{-K}$, $t_i$ étant le paramètre de l'extrémité $E_i$. Dans l'exemple représenté sur la figure 17, pour i=2 par exemple (correspondant à l'extrémité $E_2$), on obtient ainsi t=1/2.

Cette correspondance biunivoque permet notamment d'établir une transformation ($t_d$,$t_f$)-->(i,u), (J,v), qui aux paramètres ($t_d$, $t_f$) fait respectivement correspondre deux couples de valeurs (i, u), (J, v) tels que $t_d=i.2^{-k}+u$ et $t_f=J.2^{-k}+v$, avec u<1 et v<1.

Cette correspondance est essentielle pour ramener les coordonnées $t_d$ et $t_f$ de l'arc de courbe à afficher, mesurées dans le repère (0, x, y) de référence, aux coordonnées respectives des points de départ $A_d$ et d'arrivée $A_f$ de la portion correspondante de polyligne, mesurées sur cette polyligne.

La figure 18 permet de mieux comprendre cette transformation. On n'a représenté sur cette figure, que les deux segments $E_1E_2$ et $E_6E_7$ sur lesquels sont respectivement situés les points de départ $A_d$ et d'arrivée $A_f$. On sait qu'il est toujours possible de déterminer un vecteur $\vec{u}$ sur $E_1E_2$, de module $u=E_1A_d/E_1E_2$, et un vecteur $\vec{v}$ ou $E_6E_7$, de module $V=E_6A_f/E_6E_7$. Dans l'exemple représenté sur la figure, on a par exemple u=1/3 et v=2/3. On enregistre alors en mémoire pour le point $A_d$, le couple de valeurs (1, 1/3) correspondant à l'ordre i=1 de la première extrémité $E_1$ du segment $E_1E_2$, et au nombre rationnel u=1/3. De la même manière pour le point $A_f$, on enregistre le couple de valeurs (6, 2/3) correspondant à l'ordre J=6 de la première extrémité A6 du segment $E_6E_7$, et au nombre rationnel v=2/3. Au couple de paramètre ($t_d$, $t_f$), il est donc possible de faire correspondre respectivement les couples des valeurs (1, 1/3), (6, 2/3). La polyligne représentée en exemple comporte $N=8=2^3$ segments, de sorte que k=3. Il en résulte que $d=i.2^{-k}+u=1/8+1/3$ et $t_f=J.2^{-k}+v=6/8+2/3$.

Cette transformation étant établie, on calcule alors par récurrence, comme décrit plus haut (en relation avec la figure 8) dans le repère de référence (0, x, y), les coordonnées des i+1 extrémités des segments de la polyligne ; ceci permet de calculer les coordonnées du point de départ $A_d$, à partir des coordonnées des extrémités $E_i$ et $E_{i+1}$ du segment $E_iE_{i+1}$ sur lequel est localisé le point $A_d$, de sorte que $A_d=E_i+u(E_{i+1}-E_i)$. Dans l'exemple représenté sur la figure 4, si ($x_d$, $y_d$) désignent les coordonnées de $A_d$, ($x_1$, $y_1$) les coordonnées de $E_1$, et ($x_2$, $y_2$) les coordonnées de $E_2$, on a :

$$\begin{cases} x_d = x_1 + 1/3\ (x_2 - x_1) \\ y_d = y_1 + 1/3\ (y_2 - x_1) \end{cases}$$

Les coordonnées des i+1 segments de la polyligne, ainsi que les coordonnées du point de départ $A_d$, sont enregistrées en mémoire.

On calcule ensuite par récurrence, comme décrit plus haut, (en relation avec la figure 8), les coordonnées des extrémités $E_{i+2}$ à $E_{J+1}$ des segments de la polyligne, pour calculer les coordonnées du point d'arrivée $A_f$, à partir des coordonnées des extrémités $E_J$ et $E_{J+1}$ du segment $E_JE_{J+1}$ sur lequel est localisé le point d'arrivée $A_f$, de sorte que $A_f=E_j+v(E_{J+1}-E_J)$. Les coordonnées des extrémités $E_{i+2}$ à $E_{J+1}$ ($E_3$ à $E_7$ dans l'exemple) des segments à afficher, sont enregistrées en mémoire, ainsi que les coordonnées de l'extrémité $A_d$ du segment $A_dE_2$ à afficher.

Dans l'exemple représenté sur la figure 4, si ($x_f$, $y_f$) désignent les coordonnées de $A_f$, ($x_6$, $y_6$) les coordonnées de $E_6$ et ($x_7$, $y_7$), les coordonnées de $E_7$, on a :

$$\begin{cases} x_f = x_6 + 2/3\ (x_7 - x_6) \\ y_f = y_6 + 2/3\ (y_7 - y_6) \end{cases}$$

Les coordonnées de l'extrémité $A_f$ de la portion de segment $E_6A_f$ à afficher, sont enregistrés en mémoire.

Selon l'invention, dès que les coordonnées des extrémités d'une portion de segment (tel que $A_d$ $E_2$ par exemple) ou d'un segment ($E_2$, $E_3$, ..., $E_5E_6$) sont enregistrées, on détermine une séquence de pixels à afficher pour cette portion de segment ou ce segment appartenant à la portion de polyligne à afficher.

La figure 19 va permettre de mieux comprendre la recherche des séquences de pixels sélectionnés à afficher. Sur cette figure, on a représenté un segment ou portion de segment BC dans la grille 5 des pixels du support de visualisation, ainsi qu'un segment CD dans cette grille ; ces deux segments ou portions de segments appartiennent à la portion de polyligne correspondant à l'arc à afficher.

Pour déterminer chaque séquence de pixels à afficher pour chaque segment ou portion de segment, on sélectionne au voisinage de ce segment, les pixels dont les distances au segment, mesurées le long des lignes L7 ou des colonnes C8 balayées et qui coupent ce segment, sont inférieures à la moitié du pas de la grille (P/2).

Pour le segment BC par exemple, les distances des pixels à afficher, sont mesurées le long des lignes L7, pour des raisons qui seront expliquées plus loin. C'est ainsi que le pixel P1 (intersection de la ligne L71 et de la colonne C81) est un pixel à afficher, car sa distance d1, mesurée le long de la ligne L71, est inférieure à P/2. P'1 n'est pas sélectionné car sa distance d'1 au segment BC est supérieure à P/2. Les autres pixels à afficher pour la séquence relative au segment BC, sont P2, P3, P4, P5.

Pour le segment CD, les distances des pixels à afficher, sont mesurées le long des colonnes C8, pour des raisons qui seront expliquées plus loin. C'est ainsi que le pixel P6 (intersection de la colonne C86 et de la ligne L76) est un pixel à afficher, car sa distance d6, mesurée le long de la colonne C86, est inférieure à P/2. P'6 n'est pas sélectionné car sa distance d'6 mesurée le long de la colonne C86, est supérieure à P/2. Les autres pixels à afficher, pour la séquence relative au segment CD, sont P7, P8, ..., P12.

Les figures 20 et 21 vont permettre de mieux comprendre la sélection des pixels à afficher.

Pour effectuer cette sélection et comme le montre la figure 20, on subdivise le plan du support de visualisation, en huit octants repérés par des numéros d'ordre prédéterminés. Les lignes de balayage du support de visualisation sont parallèles à un premier axe x du repère de référence, tandis que les colonnes du support sont parallèles à un deuxième axe y de ce repère. Ces octants forment respectivement des angles de 45°. Ils sont numérotés 00, 01, 11, 10, 20, 21, 31, 30, comme indiqué sur la figure. Le premier chiffre pour chaque octant, est le numéro du quadrant du repère correspondant à cet octant ; le deuxième chiffre vaut 0 si l'octant contient des points dont les coordonnées ont des valeurs absolues sur le premier axe x, supérieures aux valeurs absolues sur le deuxième axe y. Cet octant est alors dit à "dominante" x. Il y a donc quatre octants à dominante x : 00, 10, 20, 30.

Le deuxième chiffre vaut 1 si l'octant contient des points dont les coordonnées ont des valeurs absolues sur le deuxième axe y, supérieures aux valeurs absolues sur le premier axe x. Cet octant est alors dit à "dominante" y. Il y a donc quatre octants à dominante y : 01, 11 ,21, 31.

Cette subdivision étant établie, le procédé de l'invention consiste ensuite, pour chaque portion de segment, ou pour chaque segment à afficher, dont les coordonnées des extrémités sont enregistrées en mémoire, à

déterminer le numéro d'ordre de l'octant contenant ces extrémités. Sur la figure 19, le segment BC par exemple est situé dans l'octant 01 à dominante y, tandis que le segment CD est situé dans l'octant 00 à dominante x.

On effectue ensuite un balayage des lignes ou des colonnes coupant chaque segment à afficher ; on sélectionne, pour tout segment dont les extrémités sont dans un octant à dominante x, parmi les pixels voisins de ce segment et situés aux intersections de colonnes, avec ce segment, les pixels pour lesquels les distances respectives à ce segment, mesurées sur le deuxième axe y, sont inférieures à P/2.

C'est ainsi que dans l'exemple de la figure 19, pour le segment CD, l'octant concerné est 00 et les distances telles que d6 ou d'6 sont mesurées sur le deuxième axe y.

De la même manière, on sélectionne, pour tout segment dont les extrémités sont dans un octant à dominante y, parmi les pixels voisins de ce segment et situés aux intersections des lignes avec ce segment, les pixels pour lesquels les distances respectives à ce segment, mesurées sur le premier axe x, sont inférieures à P/2.

Dans l'exemple de la figure 19, pour le segment AB, l'octant concerné est 01, et les distances telles que d1 ou d'1, sont mesurées sur le premier axe x.

Les coordonnées des pixels sélectionnés sont bien entendu celles des pixels à afficher. L'ordinateur commande alors en conséquence le moyen d'affichage, pour provoquer l'affichage des pixels sélectionnés.

La figure 21 permet de mieux comprendre le processus de détermination de la distance d'un pixel "candidat" à l'affichage, avec le segment à afficher. Sur cette figure, on a représenté un segment à afficher dans l'octant 00 et deux lignes (L71, L72) et deux colonnes (C81, C82), dont les intersections sont voisines de ce segment. On suppose que le pixel P1, de coordonnées (x, y) dans le repère de référence, est un pixel voisin de ce segment, et qu'il est candidat à l'affichage. On désigne par ($x_M$, $y_M$) les coordonnées dans le repère, du point d'intersection M de la colonne 82 avec le segment AB, et par $d_i$ la distance séparant le pixel candidat et le segment AB.

Pour ce pixel appartenant à l'octant 00, à dominante x, ainsi que pour tous les pixels des octants à dominante x (00, 10, 20, 30), il est facile de montrer que :

$$d_i = Y_M - y = \frac{y_B - y_A}{x_B - x_A}(X - x_A) - (y - y_A)$$

De la même manière, il est facile de montrer que pour tout les pixels candidats à l'affichage de segments situés dans les octants à dominante y (01, 11, 21, 31), la distance $d_i$ s'exprime par la relation suivante :

$$d_i = x_M - X = \frac{x_B - x_A}{Y_B - Y_A}(Y - y_A) - (x - x_A)$$

Les valeurs des quantités $x_B$-$x_A$ et $y_B$-$y_A$ permettent de déterminer l'octant auquel appartient le segment AB à afficher.

Le choix des coordonnées X, Y du premier pixel candidat, se fait de la manière suivante, pour l'octant 00 : si $x_A$ et $y_A$ désignent par exemple les coordonnées du point A, extrémité d'un segment (enregistrées en mémoire), et si ces coordonnées sont mesurées par des valeurs présentant respectivement une partie entière et une partie non entière, on désigne par $\lfloor x_A \rfloor$ la partie entière de la valeur de $x_A$, et par $\lceil x_A \rceil$ la partie entière de la valeur de $x_A$, augmentée de une unité. De la même manière, on désigne par $\lfloor y_A \rfloor$ la partie entière de la valeur de $y_A$, et par $\lceil y_A \rceil$ la partie entière de la valeur de $y_A$, augmentée une unité. Pour les différents octants, les coordonnées (X, Y) d'un pixel candidat sont choisies de sorte que X=$\lceil x_A \rceil$, ou X= $\lfloor x_A \rfloor$ ou Y=$\lceil y_A \rceil$, ou Y=$\lfloor y_A \rfloor$ selon l'octant considéré.

Le choix en fonction des octants est indiqué dans le tableau suivant :

octants

| | | |
|---|---|---|
| 00 | $X = \lceil x_A \rceil$ | $Y = \lfloor y_A \rfloor$ |
| 01 | $X = \lfloor x_A \rfloor$ | $Y = \lceil y_A \rceil$ |
| 10 | $X = \lfloor x_A \rfloor$ | $Y = \lfloor y_A \rfloor$ |
| 11 | $X = \lceil x_A \rceil$ | $Y = \lceil y_A \rceil$ |
| 20 | $X = \lfloor x_A \rfloor$ | $Y = \lceil y_A \rceil$ |
| 21 | $X = \lceil x_A \rceil$ | $Y = \lfloor y_A \rfloor$ |
| 30 | $X = \lceil x_A \rceil$ | $Y = \lceil y_A \rceil$ |
| 31 | $X = \lfloor x_A \rfloor$ | $Y = \lfloor y_A \rfloor$ |

L'évaluation de la valeur absolue de la distance $d_i$ est faite en trois étapes :

- on choisit un pixel candidat éventuel, de coordonnées X, Y, telles que définies par le tableau ci-dessus,
- on évalue la distance $d_i$, de la façon indiquée plus haut,
- si $d_i$ est supérieure, en valeur absolue, à la moitié de la valeur du pas de grille, on choisit un autre pixel pour lequel les coordonnées (X, Y) sont telles que $d_i$ est inférieure, en valeur absolue, à la moitié de la valeur du pas de la grille.

Pour une extrémité B d'un segment de la portion de polyligne correspondant à l'arc à afficher, on désigne par $x_B$ et $y_B$ les coordnnées de l'extrémité B dont les valeurs comportent respectivement une partie entière et une partie non entière, on désigne par $\lfloor x_B \rfloor$ la partie entière de la valeur de $x_B$, et par $\lceil x_B \rceil$ la partie entière de la valeur de $x_B$, augmentée de une unité. De la même manière, on désigne par $\lfloor y_B \rfloor$ la partie entière de la valeur de $y_B$, et par $\lceil y_B \rceil$ la partie entière de la valeur de $y_B$, augmentée une unité.

Le choix de la coordonnée $X_E$ ou $Y_E$, du dernier pixel corresponddant à l'extrémité B du segment, dépend de l'octant où est située cette extrémité, et est donné par le tableau suivant :

octants

| | |
|---|---|
| 00 | $X_E = \lfloor x_B \rfloor$ |
| 01 | $Y_E = \lfloor y_B \rfloor$ |
| 10 | $X_E = \lceil x_B \rceil$ |
| 11 | $Y_E = \lfloor y_B \rfloor$ |
| 20 | $X_E = \lceil x_B \rceil$ |
| 21 | $Y_E = \lceil y_B \rceil$ |
| 30 | $X_E = \lfloor x_B \rfloor$ |
| 31 | $X_E = \lceil y_B \rceil$ |

Cette coordonnée $X_E$ ou $Y_E$ permet de déterminer le nombre d'itérations du calcul d'affichage.

Sur chaque ligne ou colonne de balayage, il est nécessaire de déterminer qui, du pixel candidat ou de son suivant, sur cette ligne ou cette colonne, doit être pris en considération pour l'affichage.

Cette détermination est effectuée, en déterminant, selon l'octant, si la distance $d_i$ séparant le pixel candidat et le segment est inférieure à P/2 ou supérieure à -P/2, tel que défini dans le tableau suivant :

| octants | |
|---|---|
| 00 | $d_i < P/2$ |
| 01 | $d_i < P/2$ |
| 10 | $d_i < P/2$ |
| 11 | $d_i > -P/2$ |
| 20 | $d_i > -P/2$ |
| 21 | $d_i > -P/2$ |
| 30 | $d_i > -P/2$ |
| 31 | $d_i < P/2$ |

Ce tableau montre que si $d_i$ est inférieure, en valeur absolue, à P/2, le pixel candidat doit être choisi. Sinon c'est le pixel candidat suivant qui doit être choisi, sur la ligne ou la colonne balayée.

Enfin, il est possible que pour deux segments consécutifs $E_{i-1}E_i$ et $E_iE_{i+1}$ de la portion de polyligne à afficher, et tel que représenté sur la figure 22, il se produise un "saut" dans la séquence de pixels à afficher. Ce saut apparaît au voisinage de l'extrémité $E_i$ des segments $E_{i-1}E_i$ et $E_iE_{i+1}$, où deux pixels consécutifs P1, P2, sont distants de plus d'une unité du pas p de la grille. Dans ce cas, on ajoute lorsque c'est nécessaire, un pixel supplémentaire, par exemple P3, pour combler le saut. Ce saut est facile à détecter à partir des coordonnées des pixels P1 et P2 ; le pixel supplémentaire à ajouter, est déterminé, selon l'octant, par balayage de la ligne ou de la colonne qui suit les pixels P1 ou P2, et en recherchant un candidat dont la distance à l'un des segments, est inférieure, en valeur absolue, au demi-pas P/2 de la grille.

La figure 23 est un organigramme des opérations essentielles d'un programme enregistré en mémoire, permettant de mettre en oeuvre le procédé de l'invention. Les opérations essentielles 231 à 235 qui apparaissent dans cet organigramme, ont été décrites plus haut. Cet organigramme fait apparaître notamment, que la détermination des pixels à afficher pour chaque segment ou portion de segment, est entreprise dès que les coodonnées des extrémités de chaque segment ou portion de segment, sont obtenues.

La description qui vient d'être faite pour l'affichage d'arcs de courbes paramétriques polynomiales, reste valable pour l'affichage d'arcs de courbes paramétriques rationnelles. En effet, les traitements pour les courbes paramétriques rationnelles peuvent être ramenés aux traitement effectués pour les courbes paramétriques polynomiales.

De plus, le procédé de l'invention présente la propriété de cohérence suivante : si on considère l'ensemble des séquences des pixels à afficher pour visualiser un arc d'une courbe, et si on considère une portion de cet arc de courbe, les séquences de pixels à afficher pour visualiser cette portion, forment un sous ensemble de l'ensemble des séquences à afficher pour visualiser l'arc. Plus précisément, si on affiche les pixels permettant de visualiser une portion d'un arc d'une courbe, il est certain, grâce au procédé de l'invention, que les pixels qui sont à afficher pour visualiser la totalité de l'arc ont, dans la partie commune à l'arc et à la portion d'arc, les mêmes coordonnées. Cette propriété de cohérence est importante, notamment lorsqu'on souhaite effacer une portion d'arc : les coordonnées calculées, des pixels à effacer pour cette portion d'arc correspondent respectivement aux coordonnées calculées des pixels affichés pour cette portion. Cette propriété permet d'effectuer un "gommage" propre d'une portion d'arc d'une courbe.

## Revendications

1. Procédé pour réaliser des dessins à l'aide d'un ordinateur, caractérisé en ce qu'il comporte les étapes suivantes :

   1) - définir et enregistrer en mémoire une structure de données décrivant tout dessin à toutes les étapes de sa création sous forme d'une carte planaire, c'est-à-dire d'un ensemble de faces (F), chaque face étant délimitée par un ou plusieurs contour(s) porté(s) par des arêtes de courbes dudit dessin ; ladite carte planaire étant associée à un arbre d'inclusion des contours définissant une relation d'ordre partiel d'inclusion des contours connexes formés par lesdites arêtes ;

   2) - procéder à la réalisation effective du dessin en effectuant des opérations d'insertion, de gommage et de coloriage dans la carte planaire initialement vide ;

   - les opérations d'insertion et de gommage consistant à insérer et/ou gommer des courbes et/ou

des éléments de courbes jusqu'à obtention du dessin désiré ;
- les opérations de coloriage consistant à colorier une ou plusieurs faces formant le dessin ;

3) - afficher le dessin et procéder au fur et à mesure des différentes opérations à sa mise à jour.

**2.** Procédé selon la revendication 1, caractérisé en ce qu'une opération d'insertion de courbe comporte les étapes suivantes :
- saisir la courbe au moyen d'un périphérique d'entrée,
- afficher la courbe sur l'écran de l'ordinateur,
- insérer effectivement la courbe dans la carte planaire décrite par la structure de donnée.

**3.** Procédé selon la revendication 1 ou 2, caractérisé en ce que l'insertion effective de la courbe dans la carte planaire comporte les étapes suivantes :

a) - au préalable :
- associer à la courbe à insérer les paramètres $t_o$ et $t_n$, $t_o$ correspondant à l'origine $P_o$ de la courbe, $t_n$ à l'autre extrémité $P_n$ ;
- localiser la face de la carte dans laquelle se trouve l'origine de la courbe à insérer ayant pour paramètre $t_o$ ;
- affecter à un paramètre $t_i$ la valeur du paramètre $t_o$ ;

b) - puis de façon itérative :
- déterminer les intersections entre la courbe de paramètre ($t_i$, $t_n$) à insérer et toutes les courbes portées par les arêtes des contours de la face ;
- insérer les points d'intersections de paramètre $t_j$ sur l'arc ($t_i$, $t_n$) ;
- affecter le paramètre $t_{i+1}$ au point d'intersection $t_j$ suivant le point de paramètre $t_i$ ;
- insérer dans la face considérée en l'enregistrant en mémoire dans la structure de données l'arc ayant pour paramètre ($t_i$, $t_{i+1}$).

**4.** Procédé selon l'une quelconque des revendications 1 à 3, caractérisé en ce que la localisation de la face dans laquelle se trouve l'origine de la courbe à insérer et ayant pour paramètre $t_o$ comporte les étapes suivantes :
- insérer fictivement une droite $D_o$ ayant pour origine $P_o$ l'origine de la courbe à insérer, et pour extrémité un point $P_e$ connu situé dans une première face dite face infinie ;
- déterminer les intersections entre la droite $D_o$ et toutes les courbes ;

a) - dans le cas où des intersections ont été déterminées :
- calculer la distance d entre ces intersections et le point origine $P_o$,
- déterminer l'arête e pour laquelle cette distance d est minimum,
- enregistrer l'origine $P_o$ dans la face à laquelle appartient le brin de l'arête e qui voit $P_o$.

b) - dans le cas où aucune intersection n'a été déterminée :

- enregistrer l'origine $P_o$ dans la première face.

**5.** Procédé selon l'une quelconque des revendications 3 ou 4, caractérisé en ce que l'étape de détermination des intersections entre la courbe de paramètre ($t_i$) et toutes les autres courbes portées par les arêtes des contours de la face, ces courbes étant des courbes paramétriques polynomiales de Bézier, de degré d étant décrite mathématiquement par la fonction vectorielle $U(t)=(x(t), y(t))$, avec $0 \leqq t \leqq 1$, et étant définie par d+1 points de contrôle $U_i$, avec i=0, 1, ..., d, délimitant un polygone de contrôle, chaque point de contrôle $U_i$ ayant des coordonnées réelles ($x_i$, $y_i$) dans un repère de référence, ces coordonnées étant enregistrées dans une mémoire de l'ordinateur, comporte les étapes suivantes :
- déterminer les points d'intersection des courbes, à partir de polylignes (P, Q) interpolant respectivement ces courbes, chaque polyligne étant formée de N segments successifs ayant chacun deux extrémités situées sur un arc de courbe correspondant ;
- choisir le nombre N de segments de chaque polyligne en relation avec une profondeur k d'interpolation, tel que $N=2^k$, N et k étant spécifiques pour chaque courbe, cette profondeur étant donnée par la relation

$$k = \left\lceil \mathrm{Log}_4 \frac{d\ (d-1)}{8} D \right\rceil,$$

où D désigne la diagonale du polygone de contrôle, calculée par l'ordinateur à partir des coordonnées

des points de contrôle enregistrées en mémoire ;

- déterminer les coordonnées ($x_{i=1}$, $y_{i+1}$) des extrémités des segments de chaque polyligne, entre les points de contrôle $U_0$ et $U_d$, par récurrence calculée par l'ordinateur, en évaluant a priori des différences en avant ($\delta x_i$, $\delta y_i$) qu'il faut ajouter respectivement aux coordonnées ($x_i$, $y_i$) de l'extrémité d'un segment pour passer aux coordonnées ($x_{i+1}$, $y_{i+1}$) de l'extrémité d'un segment suivant sur la polyligne, de sorte que :

$$x_{i+1} = x_i + \delta x_i \quad \text{et} \quad y_{i+1} = y_i + \delta y_i$$

avec

$$\delta x_{i+1} = \delta x_i + \delta^2 x_i \quad \text{et} \quad \delta y_{i+1} = \delta y_i + \delta^2 y_i$$

$$\delta^2 x_{i+1} = \delta^2 x_i + \delta^3 x_i \qquad \delta^2 y_{i+1} = \delta^2 y_i + \delta^3 y_i$$

$$\vdots$$

$$\delta^{d-1} x_{i+1} = \delta^{d-1} x_i + \delta^d x_i \qquad \delta^{d-1} y_{i+1} = \delta^{d-1} y_i + \delta^d y_i,$$

avec $0 \leqq i < N$, chaque point d'intersection ($I_1$, $I_2$, ...) de deux courbes étant déterminé par l'intersection de deux segments caractéristiques ($P_0P_1$, $Q_0Q_1$) appartenant respectivement aux deux polylignes interpolant respectivement les deux courbes, les coordonnées des extrémités des segments de chaque polyligne étant enregistrées en mémoire de manière ordonnée selon les valeurs croissantes de i entre 0 et N.

**6.** Procédé selon la revendication 3, caractérisé en ce qu'il consiste à déterminer les coordonnées de chaque point d'intersection des deux courbes, à partir de l'intersection desdits deux segments caractéristiques, en ramenant à des valeurs entières les valeurs des coordonnées d'extrémités respectives des segments de chaque polyligne (P, Q) calculées par l'ordinateur, ces valeurs entières correspondant respectivement aux coordonnées entières des points d'une grille (G) du repère de référence (0, x, y), respectivement les plus proches des extrémités des segments de la polyligne, ces valeurs entières étant enregistrées en mémoire.

**7.** Procédé selon la revendication 6, caractérisé en ce qu'on calcule les coordonnées de chaque point d'intersection ($I_1$, $I_2$, ...) des deux courbes à partir des valeurs entières correspondant respectivement aux coordonnées respectives d'extrémités des deux segments caractéristiques appartenant respectivement aux deux polylignes interpolant respectivement les deux courbes au voisinage de chaque point d'intersection.

**8.** Procédé selon la revendication 7, caractérisé en ce que les deux segments caractéristiques ($P_0P_1$, $Q_0Q_1$) sont déterminés en recherchant dans les polylignes (P, Q) de chaque courbe, à partir des valeurs entières des coordnnées d'extrémités des segments de ces polylignes enregistrées en mémoire, des séquences monotones ($M_1$, $M'_1$ - $M_2$, $M'_2$ ...) de ces valeurs entières, chaque séquence monotone correspondant à une succession de segments délimitée par une première extrémité d'un premier segment extrême et par une deuxième extrémité d'un deuxième segment extrême, ces première et deuxième extrémités permettant de délimiter pour chaque séquence monotone, une boîte englobante ($B_1$ ou $B'_1$ ou $B_2$ ...) ayant deux bords parallèles à un premier axe du repère de référence et deux bords parallèles à un deuxième axe du repère de référence, cette boîte englobante étant délimitée par lesdites première et deuxième extrémités des segments extrêmes de la séquence monotone correspondante, les segments caractéristiques étant respectivement situés dans deux boîtes englobantes formant une paire de boîtes appartenant respectivement à deux séquences monotones respectives des deux polylignes, les deux boîtes de ladite paire se chevauchant au moins partiellement selon une zone commune, lesdits segments caractéristiques étant situés dans ladite zone commune.

**9.** Procédé selon la revendication 8, caractérisé en ce qu'il consiste, par subdivisions successives des séquences monotones des polylignes, à obtenir des paires successives de sous-boîtes englobantes, les coordonnées de chaque point d'intersection étant calculées lorsqu'à la suite desdites subdivisions successives, les sous-boîtes englobantes de la paire obtenue par subdivisions, contiennent respectivement et seulement les deux segments caractéristiques, un calcul des valeurs des coordonnées du point d'intersection étant alors effectué à partir des valeurs des coordonnées respectives des extrémités des segments caractéristiques.

**10.** Procédé selon la revendication 9, caractérisé en ce qu'il consiste en outre à enregistrer en mémoire, pour chaque point d'intersection, un contexte d'intersection comprenant, le numéro d'ordre de l'origine de chaque segment caractéristique, le rapport ($P_0I_1/P_0P_1$ ou $Q_0I_1/Q_0Q_1$) de la distance ($P_0P_1$ ou $Q_0I_1$) entre le point d'intersection I1 et l'origine ($P_0$ ou $Q_0$) de chaque segment caractéristique, à la longueur ($P_0P_1$ ou $Q_0Q_1$) de ce segment caractéristique, les coordonnées du point d'intersection mesurées dans le repère de référence, et l'ordre des brins correspondant à chaque segment, autour du point d'intersection.

**11.** Procédé selon l'une quelconque des revendications 4 ou 10, caractérisé en ce que l'étape d'insertion d'un arc $a_i$ dans la carte, l'arc $a_i$ étant porté par une arête <u>e</u> et par deux brins déterminés de <u>e</u> consiste à :
- créer un sommet S, S' pour chaque brin de l'arête <u>e</u> en enregistrant les sommets S et S' dans la structure de données dans le cas où ces sommets ne sont pas déjà dans la carte ;
- créer l'arête <u>e</u> en l'enregistrant dans la structure de données comportant l'arc $a_i$ et un des deux brins dans le cas où cette arête n'existe pas déjà dans la carte.

**12.** Procédé selon l'une quelconque des revendications 4 à 11, caractérisé en ce que l'étape de détermination des intersections entre la courbe à insérer et une face donnée comporte en outre une étape de marquage de cette face.

**13.** Procédé selon la revendication 12, caractérisé en ce que l'étape de marquage de la face consiste à réserver un champ dans le codage d'une face en mémoire susceptible d'être renseigné dès que l'on procède à la détermination des intersections entre l'arc paramétré ($t_i$, $t_n$) et la face.

**14.** Procédé selon l'une quelconque des revendications 4 à 13, caractérisé en ce qu'après l'insertion d'un arc ($t_i$, $t_{i+1}$) par enregistrement dans la structure de données, on procède à une comparaison du paramètre $t_{i+1}$ au paramètre $t_n$, on passe à la face suivante lorsque ces deux paramètres ne se correspondent pas, l'insertion étant terminée dans le cas contraire.

**15.** Procédé selon l'une quelconque des revendications 4 à 14, caractérisé en ce qu'il comporte une étape de comparaison de la face en cours avec les faces déjà traitées pour insérer directement l'arc de paramètres ($t_i$, $t_{i+1}$) dans cette face dans le cas où la face a déjà été traitée et passer dans une nouvelle face dans le cas contraire.

**16.** Procédé selon l'une quelconque des revendications 4 à 15, caractérisé en ce qu'il comporte en outre une étape de mise à jour de l'arbre d'inclusion des contours consistant à insérer ou à supprimer une arête.

**17.** Procédé selon la revendication 16, caractérisé en ce que l'étape de mise à jour de l'arbre d'inclusion des contours dans le cas de l'insertion consiste, pour une arête <u>e</u> portée par l'arc $a_i$ de paramètres ($t_i$, $t_{i+1}$), à :

a) - au préalable :

- répertorier sous forme d'une table en mémoire un ensemble de cas possibles pour une arête dans une carte planaire ;

b) - puis après l'insertion d'un arc $a_i$ :

- déterminer par comparaison avec les différents cas possibles le cas de l'arête <u>e</u> portée par l'arc $a_i$ ;

c) - mettre à jour l'arbre des contours en fonction du cas précédemment déterminé en effectuant une :
  - suppression d'un contour lorsque deux contours sont fusionnés, ou
  - création d'un nouveau contour, ce contour devenant fils ou frère du contour scindé dans l'arbre des contours.

**18.** Procédé selon la revendication 16, caractérisé en ce que l'étape de mise à jour de l'arbre d'inclusion des contours dans le cas d'une suppression, consiste, pour une arête <u>e</u> correspondant à l'arc de paramètre $t_i$, $t_{i+1}$ inséré, à :

a) - au préalable :
- répertorier sous forme d'une table en mémoire un ensemble de cas possibles pour une arête dans une carte planaire ;
b) - pour l'arête e à supprimer :
- répertorier le nombre de sommets pendants de l'arête, le type de contour interne ou externe auquel appartiennent les brins de l'arête,
- déterminer par comparaison avec les différents cas possibles de la table le cas de cette arête ;
c) - puis mettre à jour l'arbre des contours en fonction du cas déterminé en effectuant soit :
- une suppression ;
- une scission ;
- aucune modification.

**19.** Procédé selon l'une quelconque des revendications 1 à 18, caractérisé en ce qu'une opération de gommage d'une courbe et/ou d'un élément de courbe comporte les étapes suivantes :
- saisir l'élément à gommer au moyen d'un périphérique d'entrée,
- localiser cet élément dans la carte planaire décrite par la structure de données,
- suivant le cas de la localisation :
  a) - gommer cet élément dans la carte planaire,
  b) - mettre à jour l'arbre d'inclusion des contours,
  c) - gommer cet élément de l'affichage.

**20.** Procédé selon l'une quelconque des revendications 1 à 19, caractérisé en ce que le gommage d'un élément de courbe et/ou de courbe dans une carte planaire est réalisé :
- en effectuant une suppression dans la structure de données des sommets, arêtes et contours associés à la courbe,
- en conservant en mémoire dans la structure de données les arcs et les points définissant la courbe,
- en renseignant un champ prévu dans les données relatives aux arcs et aux points signifiant que les éléments correspondant aux arcs et aux points sont effacés.

**21.** Procédé selon la revendication 20, caractérisé en ce que l'étape de gommage des arêtes pendantes, d'un contour, d'une face, d'une composante ou d'une carte consiste à :
A) chercher une arête e dont au moins un sommet est pendant ;
B) si l'arête e existe :
  (a) conserver le sommet s non pendant de e,
  (b) supprimer l'arête e,
  (c) si s est devenu un sommet pendant après l'étape B(b), réitérer en B(a) avec une arête e incidente en s,
  (d) réitérer en A.

**22.** Procédé selon l'une quelconque des revendications 1 à 21, caractérisé en ce que l'opération de coloriage d'une face comporte les étapes suivantes :
- saisir un point à localiser au moyen d'un périphérique d'entrée,
- localiser ce point dans la carte planaire décrite par la structure de données,
- suivant le cas de la localisation :
  a) - indiquer la couleur par marquage de cette face dans la carte planaire,
  b) - faire apparaître la couleur lors de l'affichage.

**23.** Procédé selon l'une quelconque des revendications 2 à 22, caractérisé en ce que l'affichage est effectué à partir de courbes paramétriques polynomiales formées d'arcs, cet affichage se faisant sur un écran de visualisation relié à l'ordinateur, cet ordinateur étant relié à une mémoire, l'affichage sur l'écran étant déterminé par une grille de pixels définie par des lignes et des colonnes parallèles, régulièrement espacées d'un pas prédéterminé, successivement balayées, chaque pixel étant localisé par l'intersection d'une ligne et d'une colonne et étant affiché lorsque la ligne et la colonne correspondantes reçoivent des signaux de commande d'affichage au cours du balayage, les pixels de la grille étant repérés par leur coordonnées (x, y) dans un repère de référence (0, x, y) ayant un premier axe (x) et un deuxième axe (y) respectivement parallèles aux lignes et aux colonnes, chaque courbe de degré d étant décrite mathématiquement par la fonction vectorielle U(t)=(x(t), y(t)) d'un paramètre t, avec $0 \leqq t \leqq 1$, et étant définie par d+1 points de contrôle $U_1$, avec i=0, 1, ..., d, délimitant un polygone de contrôle, chaque point de contrôle $U_i$ ayant des coor-

données réelles ($x_i$, $y_i$) dans le repère de référence, ces coordonnées étant enregistrées dans la mémoire de l'ordinateur, chaque courbe étant interpolable par une polyligne ayant une profondeur d'interpolation k et comportant N segments successifs orientés, ayant chacun deux extrémités situées sur la courbe, l'affichage d'un arc d'une courbe étant délimité par un couple de paramètre ($t_d$, $t_f$) sur l'intervalle [0,1] de la courbe U(t) ;

l'affichage consistant à afficher une portion de polyligne correspondant à cet arc, délimitée par un point de départ ($A_d$) et un point d'arrivée ($A_f$), en affichant les pixels les plus proches de cette portion de polyligne, et consistant en outre pour chaque arc :

- à calculer la profondeur d'interpolation k de la courbe correspondant à cet arc, à partir du degré d de la courbe et de la diagonale D du polygone de contrôle, calculée à partir des coordonnées enregistrées des points de contrôle, pour établir une correspondance biunivoque entre l'ordre i des extrémités $E_i$ des segments de la polyligne et la partition de l'intervalle [0,1] du paramètre t, en $2^k$ parties égales, de sorte que $t_i=i.2^{-k}$, $t_i$ étant le paramètre de l'extrémité $E_i$,
- à établir une transformation ($t_d$, $t_f$) --> (i, u), (j, v), qui aux paramètres du couple ($t_d$, $t_f$) fait correspondre respectivement deux couples de valeurs (i, u), (j, v) tels que $t_d=i.2^{-k}+u$ et $t_f=J.2^{-k}+v$, avec u<1 et v<1,
- à calculer par récurrence, les coordonnées de i+1 premières extrémités de segments de la polyligne dans le repère de référence, pour calculer les coordonnés du point de départ $A_d$, à partir des coordonnées des extrémités $E_i$ et $E_{i+1}$ de segments de la polyligne, de sorte que $A_d=E_i+u(E_{i+1}-E_i)$, $A_d\,E_{i+1}$ étant une portion de segment à afficher, les coordonnées de $A_d$ et $E_{i+1}$ étant enregistrées en mémoire,
- à calculer par récurrence, les coordonnées des extrémités $E_{i+2}$ à $E_{J+1}$ de segments de la polyligne dans le repère de référence, pour calculer les coordonnées du point d'arrivée $A_f$, à partir des coordonnées des extrémités $E_J$ et $E_{J+1}$, de sorte que $A_f=E_J+v(E_{J+1}-E_J)$, les segments correspondant aux extrémités $E_{i+1}$ à $E_J$, ainsi que la portion de segment $E_JA_f$ étant à afficher, les coordonnées des extrémités $E_{i+2}$ à $A_f$ étant enregistrées en mémoire,
- à déterminer, dès que les coordonnées d'extrémités de chaque segment ou portion de segment à afficher sont enregistrées en mémoire, une séquence de pixels à afficher, les pixels de chaque séquence étant sélectionnés au voisinage de ce segment pour être affichés lorsque les distances séparant ces pixels du segment correspondant, mesurées dans le repère de référence, respectivement le long des lignes ou des colonnes balayées et qui coupent ce segment, sont inférieures en valeurs absolues, à la moitié de la valeur du pas de la grille de pixels.

**24.** Procédé selon la revendication 23, caractérisé en ce que le calcul par récurrence des coordonnées des extrémités de segments d'une polyligne interpolant une courbe, consiste à choisir un nombre N de segments de chaque polyligne, en relation avec la profondeur k d'interpolation, tel que $N=2^k$, cette profondeur étant donnée par la relation :

$$k = \left\lceil \mathrm{Log}_4 \frac{d\,(d-1)}{8} D \right\rceil ,$$

où D désigne la valeur de la diagonale du polygone de contrôle, calculée par l'ordinateur à partir des coordonnées des points de contrôle enregistrées en mémoire, puis à déterminer les coordonnées ($x_{i+1}$, $y_{i+1}$) des extrémités des segments de chaque polyligne, entre les points de contrôle $U_0$ et $U_d$, par récurrence calculée par l'ordinateur, en évaluant a priori des différences en avant ($\delta x_i$, $\delta y_i$) qu'il faut ajouter respectivement aux coordonnées ($x_i$, $y_i$) de l'extrémité d'un segment pour passer aux coordonnées ($x_{i+1}$, $y_{i+1}$) de l'extrémité d'un segment suivant sur la polyligne, de sorte que :

$$x_{i+1} = x_i = \delta x_i \qquad \text{et} \qquad y_{i+1} = y_i = \delta y_i$$

avec

$$\delta x_{i+1} = \delta x_i + \delta^2 x_i \quad \text{et} \quad \delta y_{i+1} = \delta y_i + \delta^2 y_i$$

$$\delta^2 x_{i+1} = \delta^2 x_i + \delta^3 x_i \qquad \delta^2 y_{i+1} = \delta^2 y_i + \delta^3 y_i$$

$$\vdots \qquad\qquad \vdots$$

$$\delta^{d-1} x_{i+1} = \delta^{d-1} x_i + \delta^d x_i \qquad \delta^{d-1} y_{i+1} = \delta^{d-1} y_i + \delta^d y_i,$$

avec $0 \leqq i < N$, les coordonnées des extrémités des segments de chaque polyligne étant enregistrées en mémoire de manière ordonnée, selon les valeurs croissantes de i entre 0 et N.

**25.** Procédé selon la revendication 24, caractérisé en ce que, pour déterminer les pixels à afficher dans chaque séquence, en mesurant respectivement le long de toutes les lignes ou de toutes les colonnes balayées qui coupent le segment correspondant à cette séquence au voisinage de ce segment, les distances qui séparent ces pixels et ce segment :

- on subdivise le plan du support de visualisation en huit octants repérés par des numéros d'ordre prédéterminés, quatre octants de ce repère étant dits à dominante (x) lorsque les coordonnées des points situés dans ces octants ont des valeurs absolues sur le premier axe (x), supérieures aux valeurs absolues sur le deuxième axe (y), quatre autres octants de ce repère étant dit à dominante y, lorsque les coordonnées des points situés dans ces quatre autres octants ont des valeurs absolues, sur le deuxième axe (y), supérieures aux valeurs sur le premier axe (x),
- à partir des coordonnées des extrémités des segments ou portions de segments à afficher enregistrées en mémoire, on détermine le numéro d'ordre de l'octant contenant ces extrémités,
- on effectue un balayage des lignes ou des colonnes coupant chaque segment à afficher et on sélectionne, pour tout segment dont les extrémités sont dans un octant à dominante x, parmi les pixels voisins de ce segment et situés aux intersections de colonnes avec ce segment, ceux pour lesquels les distances respectives à ce segment, mesurées sur le deuxième axe (y), sont inférieures en valeurs absolues à un demi-pas (P/2) de grille, on sélectionne, pour tout segment dont les extrémités sont dans un octant à dominante y, parmi les pixels voisins de ce segment et situés aux intersections de lignes avec ce segment, ceux pour lesquels les distances respectives à ce segment, mesurées sur le premier axe (x) sont inférieures en valeurs absolues à un demi-pas de grille (P/2), les coordonnées des pixels sélectionnés dans le repère de référence de visualisation étant celles des pixels à afficher, ces coordonnées étant enregistrées en mémoire.

**26.** Procédé selon la revendication 25, caractérisé en ce que les séquences de pixels à afficher pour visualiser une portion d'un arc de courbe forment un sous-ensemble de l'ensemble des séquences de pixels à afficher pour visualiser cet arc.

## Patentansprüche

**1.** Herstellung von Zeichnungen mit Hilfe eines Rechners, dadurch gekennzeichnet, daß es die folgenden Schritte enthält:

1) - Definieren und Speichern einer Datenstruktur, die jede Zeichnung in jeder ihrer Erzeugungsstufen in Form einer ebenen Karte, d.h. einer Menge von Flächen (F) beschreibt, wobei jede Fläche durch eine oder mehrere Kontur(en) begrenzt ist, die von Kanten aus Kurven der Zeichnung gebildet wird (werden); wobei die ebene Karte einem Konturen-Einschließungsbaum zugeordnet ist, der die Beziehung der Teilordnung der Einschließung der von den Kanten gebildeten miteinander verbundenen Konturen definiert;

2) - Ausführen der tatsächlichen Herstellung der Zeichnung durch Ausführen von Einfügungs-, Löschungs- und Kolorierungsoperationen in der anfänglich leeren ebenen Karte;

- wobei die Einfügungs- und Löschungsoperationen darin bestehen, Kurven und/oder Elemente von Kurven einzufügen und/oder zu löschen, bis die gewünschte Zeichnung erhalten wird;
- wobei die Kolorierungsoperationen darin bestehen, eine oder mehrere Flächen, die die Zeichnung bilden, zu kolorieren;

3) - Anzeigen der Zeichnung und nacheinander Ausführen von verschiedenen Operationen bei ihrer Aktualislerung.

**2.** Verfahren nach Anspruch 1, dadurch gekennzeichnet, daß eine Operation der Einfügung der Kurve die folgenden Schritte enthält:
- Erfassen der Kurve mittels eines Eingabeperipheriegeräts,
- Anzeigen der Kurve auf dem Bildschirm des Rechners,
- tatsächliches Einfügen der Kurve in die durch die Datenstruktur beschriebene ebene Karte.

**3.** Verfahren nach Anspruch 1 oder 2, dadurch gekennzeichnet, daß die tatsächliche Einfügung der Kurve in die ebene Karte die folgenden Schritte enthält:

a) - vorher:
- Zuordnen der Parameter $t_0$ und $t_n$ zu der einzufügenden Kurve, wobei $t_0$ dem Ausgangspunkt $P_0$ der Kurve entspricht und $t_n$ dem anderen Ende der Kurve $P_n$ entspricht;
- Lokalisieren der Fläche der Karte, in der sich der Ausgangspunkt der einzufügenden Kurve befindet, der den Parameter $t_0$ besitzt;
- Zuweisen des Werts des Parameters $t_0$ einem Parameter $t_i$;

b) - dann auf iterative Weise:
- Bestimmen der Schnittpunkte zwischen der einzufügenden parametrisierten Kurve ($t_i$, $t_n$) und sämtlichen Kurven, die von den Kanten der Konturen der Fläche gebildet werden;
- Einfügen der Schnittpunkte des Parameters tj in den Bogen ($t_i$, $t_n$);
- Zuweisen des Parameters $t_{i+1}$ dem Schnittpunkt $t_j$, so daß er dem Punkt des Parameters $t_i$ folgt;
- Einfügen des Bogens, der als Parameter ($t_i$, $t_{i+1}$) besitzt, in die betrachtete Fläche, indem er in der Datenstruktur gespeichert wird.

**4.** Verfahren nach einem der Ansprüche 1 bis 3, dadurch gekennzeichnet, daß die Lokalisierung der Fläche, in der sich der Ausgangspunkt der einzufügenden Kurve befindet, der als Parameter $t_0$ besitzt, die folgenden Schritte enthält:
- fiktives Einfügen einer Geraden $D_0$, die als Ausgangspunkt $P_0$ den Ausgangspunkt der einzufügenden Kurve und als Ende einen bekannten Punkt $P_e$ enthält, der sich in einer ersten, sogenannten unendlichen Fläche befindet;
- Bestimmen der Schnittpunkte zwischen der Geraden $D_0$ und sämtlichen Kurven;

a) - falls die Schnittpunkte bestimmt worden sind:
- Berechnen des Abstandes <u>d</u> zwischen diesen Schnittpunkten und dem Ausgangspunkt $P_0$,
- Bestimmen der Kante <u>e</u>, für die dieser Abstand <u>d</u> minimal ist,
- Eintragen des Ausgangspunkts $P_0$ in die Fläche, welcher der Zweig der Kante <u>e</u>, die auf $P_0$ weist, zugehört,

b) - falls kein Schnittpunkt bestimmt worden ist:

- Eintragen des Ausgangspunkts $P_0$ in die erste Fläche.

**5.** Verfahren nach einem der Ansprüche 3 oder 4, dadurch gekennzeichnet, daß der Schritt der Bestimmung der Schnittpunkte zwischen der Kurve des Parameters ($t_i$) und sämtlichen anderen Kurven, die von den Kanten der Konturen der Fläche getragen werden, wobei diese Kurven parametrisierte Bézier-Polynomkurven vom Grad <u>d</u> sind, die mathematisch durch die Vektorfunktion U(t) = (x(t), y(t)) beschrieben wird, mit $0 \leqq t \leqq 1$, die durch d + 1 Fixpunkte $U_i$ mit i = 0, 1, ..., d definiert ist und ein Fix-Polygon begrenzt, wobei jeder Fixpunkt $U_i$ in einem Bezugskoordinatensystem reelle Koordinaten ($x_i$, $Y_i$) besitzt, die in einem Speicher des Rechners gespeichert sind, die folgenden Schritte enthält:
- Bestimmen der Schnittpunkte der Kurven, ausgehend von Mehrsegmentlinien (P, Q), die diese Kurven jeweils interpolieren, wobei jede Mehrsegmentlinie aus N aufeinanderfolgenden Segmenten gebildet ist, die jeweils zwei Enden besitzen, die sich auf einem entsprechenden Kurvenbogen befinden;
- Wählen der Anzahl N von Segmenten einer jeden Mehrsegmentlinie mit Bezug auf eine Interpolationstiefe k, derart, daß $N = 2^k$, wobei N und k für jede Kurve spezifisch sind, wobei diese Tiefe durch die Beziehung $k = [\mathrm{Log}_4(d(d-1)/8)D]$ gegeben ist, wobei D die Diagonale des Fix-Polygons bezeichnet, die durch den Rechner ausgehend von den Koordinaten der gespeicherten Fixpunkte berechnet wird;

- Bestimmen der Koordinaten ($x_{i+1}$, $Y_{i+1}$) der Enden der Segmente einer jeden Mehrsegmentlinie zwischen den Fixpunkten $U_0$ und $U_d$ durch vom Rechner ermittelten Rekursion, indem zunächst die Vorwärtsdifferenzen ($\delta_{xi}$, $\delta_{Yi}$) ermittelt werden, die zu den jeweiligen Koordinaten ($x_i$, $Y_i$) des Endes eines Segmentes hinzugefügt werden müssen, um zu den Koordinaten ($x_{i+1}$, $Y_{i+1}$) des Endes eines folgenden Segmentes auf der Mehrsegmentlinie überzugehen, derart, daß:

$$x_{i+1} = x_i + \delta x_i \quad \text{und} \quad y_{i+1} = y_i + \delta y_i$$

mit

$$\delta x_{i+1} = \delta x_i + \delta^2 x_i \quad \text{und} \quad \delta y_{i+1} = \delta y_i + \delta^2 y_i$$

$$\delta^2 x_{i+1} = \delta^2 x_i + \delta^3 x_i \quad \text{und} \quad \delta^2 y_{i+1} = \delta^2 y_i + \delta^3 y_i$$

$$|$$

$$|$$

$$|$$

$$\delta^{d-1} x_{i+1} = \delta^{d-1} x_i + \delta^d x_i \quad \text{und} \quad \delta^{d-1} y_{i+1} = \delta^{d-1} y_i + \delta^d y_i$$

mit $0 \leqq i < N$, wobei jeder Schnittpunkt ($I_1$, $I_2$, ...) von zwei Kurven durch den Schnittpunkt der beiden charakteristischen Segmente ($P_0P_1$, $Q_0Q_1$) bestimmt ist, die zu den beiden entsprechenden Mehrsegmentlinien gehören, die die beiden jeweiligen Kurven interpolieren, wobei die Koordinaten der Enden der Segmente einer jeden Mehrsegmentlinie in der Weise gespeichert sind, daß sie nach ansteigenden Werten von i zwischen 0 und N geordnet sind.

**6.** Verfahren nach Anspruch 3, dadurch gekennzeichnet, daß es darin besteht, die Koordinaten eines jeden Schnittpunktes von zwei Kurven ausgehend vom Schnittpunkt der beiden charakteristischen Segmente zu bestimmen, indem die Werte der Koordinaten der jeweiligen Enden der Segmente einer jeden Mehrsegmentlinie (P, Q), die vom Rechner berechnet werden, auf ganzzahlige Werte zurückgeführt werden, wobei diese ganzzahligen Werte jeweils ganzzahligen Koordinaten von Punkten eines Gitters (G) des Bezugskoordinatensystems (O, x, y) entsprechen, die sich jeweils am nächsten an den Enden der Segmente der Mehrsegmentlinie befinden, wobei diese ganzzahligen Werte gespeichert werden.

**7.** Verfahren nach Anspruch 6, dadurch gekennzeichnet, daß die Koordinaten eines jeden Schnittpunktes ($I_1$, $I_2$, ...) der beiden Kurven ausgehend von den ganzzahligen Werten berechnet werden, die den jeweiligen Koordinaten der Enden der beiden charakteristischen Segmente entsprechen, die den beiden jeweiligen Mehrsegmentlinien zugehören, die die beiden jeweiligen Kurven in der Umgebung eines jeden Schnittpunktes interpolieren.

**8.** Verfahren nach Anspruch 7, dadurch gekennzeichnet, daß die beiden charakteristischen Segmente ($P_0P_1$, $Q_0Q_1$) dadurch bestimmt werden, daß auf den Mehrsegmentlinien (P, Q) einer jeden Kurve ausgehend von den ganzzahligen Werten der Koordinaten der Enden der Segmente dieser gespeicherten Mehrsegmentlinien monotone Folgen ($M_1$, $M'_1$ - $M_2$, $M'_2$ ...) dieser ganzzahligen Werte gesucht werden, wobei jede monotone Folge einer Folge von Segmenten entspricht, die durch ein erstes Ende eines ersten äußeren Segmentes und durch ein zweites Ende eines zweiten äußeren Segmentes begrenzt ist, wobei diese ersten und zweiten Enden für jede monotone Folge die Begrenzung eines Umschließungsrahmens ($B_1$ oder $B'_1$ oder $B_2$ ...) ermöglichen, der zwei zu einer ersten Achse des Bezugskoordinatensystems parallele Ränder und zwei zu einer zweiten Achse des Bezugskoordinatensystems parallele Ränder besitzt, wobei dieser Umschließungsrahmen durch die ersten und zweiten Enden der äußersten Segmente der entsprechenden monotonen Folge begrenzt ist, wobei die charakteristischen Segmente sich in zwei jeweiligen Umschließungsrahmen befinden, die ein Paar von Rahmen bilden, die jeweils entsprechend zwei monotonen Folgen zweier jeweiliger Mehrsegmentlinien zugehören, wobei die beiden Rahmen des Paars in einer gemeinsamen Zone wenigstens teilweise überlappen, wobei die charakteristischen Segmente sich in der gemeinsamen Zone befinden.

9. Verfahren nach Anspruch 8, dadurch gekennzeichnet, daß es darin besteht, durch aufeinanderfolgende Unterteilungen der monotonen Folgen von Mehrsegmentlinien aufeinanderfolgende Paare von Unter-Umschließungsrahmen zu erhalten, wobei die Koordinaten eines jeden Schnittpunkts im Anschluß an die aufeinanderfolgenden Unterteilungen berechnet werden, wobei die Unter-Umschließungsrahmen des durch Unterteilung erhaltenen Paars jeweils und ausschließlich die beiden charakteristischen Segmente enthalten, wobei dann eine Berechnung der Werte der Koordinaten des Schnittpunktes ausgehend von den Werten der jeweiligen Koordinaten der Enden der charakteristischen Segmente ausgeführt wird.

10. Verfahren nach Anspruch 9, dadurch gekennzeichnet, daß es außerdem darin besteht, für jeden Schnittpunkt einen Schnittpunktkontext zu speichern, der die Ordnungsnummer des Ausgangspunkts eines jeden charakteristischen Segmentes, das Verhältnis ($P_0I_1/P_0P_1$ oder $Q_0I_1/Q_0Q_1$) des Abstandes ($P_0P_1$ oder $Q_0I_1$) zwischen dem Schnittpunkt $I_1$ und dem Ausgangspunkt ($P_0$ oder $Q_0$) eines jeden charakteristischen Segmentes zur Länge ($P_0P_1$ oder $Q_0Q_1$) dieses charakteristischen Segmentes, die in dem Bezugskoordinatensystem gemessenen Koordinaten des Schnittpunktes sowie die Ordnung der jedem Segment entsprechenden Zweige um den Schnittpunkt enthält.

11. Verfahren nach einem der Ansprüche 4 oder 10, dadurch gekennzeichnet, daß die Stufe des Einfügens eines Bogens $a_i$ in die Karte, wobei der Bogen $a_i$ von einer Kante $\underline{e}$ und von zwei bestimmten Zweigen von $\underline{e}$ getragen wird, darin besteht, daß:
- für jeden Zweig der Kante $\underline{e}$ ein Scheitelpunkt S, S′ erzeugt wird, indem die Scheitelpunkte S und S′ dann, wenn diese Scheitelpunkte nicht bereits in der Karte vorhanden sind, in die Datenstruktur eingetragen werden;
- die Kante $\underline{e}$ erzeugt wird, indem sie dann, wenn diese Kante nicht bereits in der Karte vorhanden ist, in die Datenstruktur eingetragen wird, die den Bogen $a_i$ und einen der beiden Zweige enthält.

12. Verfahren nach einem der Ansprüche 4 bis 11, dadurch gekennzeichnet, daß der Schritt der Bestimmung der Schnittpunkte zwischen der einzufügenden Kurve und einer gegebenen Fläche außerdem einen Schritt der Markierung dieser Fläche enthält.

13. Verfahren nach Anspruch 12, dadurch gekennzeichnet, daß der Schritt der Markierung der Fläche darin besteht, in der Codierung einer Fläche im Speicher ein Feld zu reservieren, das abgefragt werden kann, sobald die Bestimmung der Schnittpunkte zwischen dem parametrisierten Bogen ($t_i$, $t_n$) und der Fläche vorgenommen wird.

14. Verfahren nach einem der Ansprüche 4 bis 13, dadurch gekennzeichnet, daß nach der Einfügung eines Bogens ($t_i$, $t_{i+1}$) durch Eintragung in die Datenstruktur ein Vergleich des Parameters $t_{i+1}$ mit dem Parameter $t_n$ vorgenommen wird und zur folgenden Fläche übergegangen wird, wenn diese beiden Parameter einander nicht entsprechen, während die Einfügung im entgegengesetzten Fall beendet ist.

15. Verfahren nach einem der Ansprüche 4 bis 14, dadurch gekennzeichnet, daß es einen Schritt des Vergleichs der momentanen Fläche mit den bereits verarbeiteten Flächen enthält, um direkt den parametrisierten Bogen ($t_i$, $t_{i+1}$) in diese Fläche einzufügen, falls die Fläche bereits verarbeitet worden ist, oder um im entgegengesetzten Fall zu einer neuen Fläche überzugehen.

16. Verfahren nach einem der Ansprüche 4 bis 15, dadurch gekennzeichnet, daß es außerdem einen Schritt des Aktualisierens des Konturen-Einschließungsbaums enthält, der darin besteht, eine Kante einzufügen oder zu entfernen.

17. Verfahren nach Anspruch 16, dadurch gekennzeichnet, daß der Schritt des Aktualisierens des Konturen-Einschließungsbaums im Falle des Einfügens einer vom Bogen $a_i$ mit den Parametern ($t_i$, $t_{i+1}$) getragenen Kante $\underline{e}$ darin besteht, daß:

a) - vorher:

- eine Gesamtheit von möglichen Fällen für eine Kante in einer ebenen Karte in Form einer Tabelle in den Speicher aufgenommen wird;

b) - dann nach dem Einfügen eines Bogens $a_i$:

- durch Vergleich der verschiedenen möglichen Fälle der Fall der vom Bogen $a_i$ getragenen Kante $\underline{e}$ bestimmt wird;

c) -der Konturenbaum in Ahhängigkeit vom vorher bestimmten Fall aktualisiert wird, indem:

- eine Kontur entfernt wird, wenn zwei Konturen miteinander verschmelzen, oder

- eine neue Kontur erzeugt wird, wobei diese Kontur Sohn oder Bruder der zerlegten Kontur im Konturenbaum wird.

**18.** Verfahren nach Anspruch 16, dadurch gekennzeichnet, daß die Stufe des Aktualisierens des Konturen-Einschließungsbaums bei einer Entfernung einer dem eingefügten Bogen mit den Parametern $t_i$, $t_{i+1}$ entsprechenden Kante e darin besteht, daß:

a) - vorher:

- eine Gesamtheit von möglichen Fällen für eine Kante in einer ebenen Karte in Form einer Tabelle in den Speicher aufgenommen wird;

b) - für die zu entfernende Kante e:

- die Anzahl der einfach verbundenen Scheitelpunkte der Kante sowie der Typ der internen oder externen Kontur, der die Zweige der Kante zugehören, aufgenommen werden,
- durch Vergleich der verschiedenen möglichen Fälle der Tabelle der Fall dieser Kante bestimmt wird;

c) dann der Konturenbaum in Abhängigkeit vom bestimmten Fall aktualisiert wird, indem entweder:

- eine Entfernung; oder
- ein Zerschneiden; oder
- keine Veränderung vorgenommen wird.

**19.** Verfahren nach einem der Ansprüche 1 bis 18, dadurch gekennzeichnet, daß eine Löschungsoperation einer Kurve und/oder eines Kurvenelementes die folgenden Schritte enthält:

- Erfassen eines zu löschenden Elementes mittels eines Eingabeperipheriegerats;
- Lokalisieren dieses Elementes in der durch die Datenstruktur beschriebenen ebenen Karte,
- je nach Fall der Lokalisierung
  - a) - Löschen dieses Elementes in der ebenen Karte,
  - b) - Aktualisieren des Konturen-Einschließungsbaums,
  - c) - Löschen dieses Elements aus der Anzeige.

**20.** Verfahren nach einem der Ansprüche 1 bis 19, dadurch gekennzeichnet, daß die Löschung eines Kurvenelementes und/oder einer Kurve in einer ebenen Karte dadurch ausgeführt wird, daß:

- eine Entfernung von der Kurve zugehörigen Scheitelpunkten, Kanten und Konturen in der Datenstruktur vorgenommen wird,
- die Bögen und die Punkte, die die Kurve definieren, in der Datenstruktur gespeichert bleiben,
- ein Feld, das in den auf die Bögen und Punkte bezogenen Daten vorgesehen ist und das angibt, daß die den Bögen und den Punkten entsprechenden Elemente gelöscht sind, abgerufen wird.

**21.** Verfahren nach Anspruch 20, dadurch gekennzeichnet, daß der Schritt des Löschens von einfach verbundenen Kanten, einer Kontur, einer Fläche, einer Komponente oder einer Karte darin besteht, daß:

A) eine Kante e gesucht wird, wovon wenigstens ein Scheitelpunkt einfach verbunden ist;

B) falls die Kante e vorhanden ist:

(a) der nicht einfach verbundene Scheitelpunkt s von e beibehalten wird,

(b) die Kante e entfernt wird,

(c) falls s nach der Stufe B(b) ein einfach verbundener Scheitelpunkt geworden ist, B(a) mit einer auf s treffenden Kante e wiederholt wird,

(d) A wiederholt wird.

**22.** Verfahren nach einem der Ansprüche 1 bis 21, dadurch gekennzeichnet, daß die Operation der Kolorierung einer Fläche die folgenden Schritte enthält:

- Erfassen eines zu lokalisierenden Punktes mittels eines Eingabeperipheriegeräts,
- Lokalisieren dieses Punkts in der durch die Datenstruktur beschriebenen ebenen Karte,
- je nach Fall der Lokalisierung:
  - a) - Angeben der Farbe durch Markieren dieser Fläche in der ebenen Karte,
  - b) - Sichtbarmachen der Farbe bei der Anzeige.

**23.** Verfahren nach einem der Ansprüche 2 bis 22, dadurch gekennzeichnet, daß die Anzeige ausgehend von aus Bögen gebildeten parametrisierten Polynomkurven vorgenommen wird, wobei diese Anzeige auf einem mit dem Rechner verbundenen Anzeigebildschirm erfolgt, wobei dieser Rechner mit einem Speicher verbunden ist, wobei die Anzeige auf dem Bildschirm durch ein Gitter von Pixel bestimmt ist, das durch parallele Zeilen und Spalten definiert ist, die mit vorgegebener Schrittweite voneinander regelmäßig beabstandet sind und aufeinanderfolgend abgetastet werden, wobei jedes Pixel durch den Schnittpunkt einer Zeile und einer Spalte lokalisiert ist und angezeigt wird, wenn die entsprechende Zeile und die entsprechende Spalte während der Abtastung Anzeigesteuersignale empfangen, wobei die Bildelemente des Gitters durch ihre Koordinaten (x, y) in einem Bezugskoordinatensystem (O, x, y) bezeichnet sind, welches eine erste Achse (x) und ein zweite Achse (y) besitzt, die zu den Zeilen bzw. zu den Spalten parallel sind, wobei jede Kurve des Grades d mathematisch durch die Vektorfunktion U(t) = (x(t), y(t)) eines Parameters t beschrieben wird, mit $0 \leqq t \leqq 1$, und durch d + 1 Fixpunkte Ui mit i = 0, 1, ..., d, die ein Fix-Polygon begrenzen, definiert ist, wobei jeder Fixpunkt $U_i$ im Bezugskoordinatensystem reelle Koordinaten ($x_i$, $y_i$) besitzt, wobei diese Koordinaten im Speicher des Rechners gespeichert sind, wobei jede Kurve durch eine Mehrsegmentlinie interpolierbar ist, die eine Interpolationstiefe k besitzt und N gerichtete, aufeinanderfolgende Segmente enthält, wovon jedes zwei auf der Kurve befindliche Enden besitzt, wobei die Anzeige eines Bogens einer Kurve durch ein Paar von Parametern ($t_d$, $t_f$) im Intervall [0,1] der Kurve U(t) begrenzt ist;

wobei die Anzeige darin besteht, einen diesem Bogen entsprechenden Abschnitt der Mehrsegmentlinie, der durch einen Ausgangspunkt ($A_d$) und einen Zielpunkt ($A_f$) begrenzt ist, anzuzeigen, indem diejenigen Pixel angezeigt werden, die sich am nähesten an diesem Abschnitt der Mehrsegmentlinie befinden, und außerdem für jeden Bogen darin besteht, daß:

- die Interpolationstiefe k der diesem Bogen entsprechenden Kurve ausgehend vom Grad d der Kurve und der Diagonale D des Fix-Polygons, die ausgehend von den gespeicherten Koordinaten der Fixpunkte berechnet sind, berechnet wird, um eine eineindeutige Entsprechung zwischen der Ordnung i der Enden $E_i$ der Segmente der Mehrsegmentlinie und der Unterteilung des Intervalls [0,1] des Parameters t in $2^k$ gleiche Teile zu schaffen, derart, daß $t_i = i \cdot 2^{-k}$, wobei $t_i$ der Parameter des Endes $E_i$ ist,
- eine Transformation $(t_d, t_f) \rightarrow (i, u), (j, v)$ ausgeführt wird, die eine Entsprechung zwischen den Parametern des Paars ($t_d$, $t_f$) und zwei entsprechenden Wertepaaren (i, u), (j, v) herstellt, derart, daß $t_d = i \cdot 2^{-k} + u$ und $t_f = j \cdot 2^{-k} + v$ gilt, mit u < 1 und v < 1,
- durch Rekursion die Koordinaten von i + 1 ersten Enden von Segmenten der Mehrsegmentlinie im Bezugskoordinatensystem berechnet werden, um die Koordinaten des Ausgangspunkts $A_d$ ausgehend von den Koordinaten der Enden $E_i$ und $E_{i+1}$ von Segmenten der Mehrsegmentlinie zu berechnen, derart, daß $A_d = E_i + u \cdot (E_{i+1} - E_i)$, wobei $A_dE_{i+1}$ ein Abschnitt des anzuzeigenden Segmentes ist, wobei die Koordinaten von $A_d$ und $E_{i+1}$ gespeichert werden,
- durch Rekursion die Koordinaten der Enden $E_{i+2}$ bis $E_{j+1}$ von Segmenten der Mehrsegmentlinie in dem Bezugskoordinatensystem berechnet werden, um die Koordinaten des Zielpunkts $A_f$ ausgehend von den Koordinaten der Enden $E_j$ und $E_{j+1}$ zu berechnen, derart, daß $A_f = E_j + v(E_{j+1} - E_j)$, wobei die den Enden $E_{i+1}$ bis $E_j$ entsprechenden Segmente sowie der Abschnitt des Segments $E_jA_f$ anzuzeigen sind, wobei die Koordinaten der Enden $E_{i+2}$ bis $A_f$ gespeichert werden,
- eine Folge von anzuzeigenden Pixel bestimmt wird, sobald die Koordinaten der Enden eines jeden Segments oder eines Segmentabschnittes, die anzuzeigen sind, gespeichert sind, wobei die Pixel einer jeden Folge in der Umgebung dieses Segmentes ausgewählt werden, um angezeigt zu werden, wenn die diese Pixel des entsprechenden Segmentes trennenden Abstände, die im Bezugskoordinatensystem jeweils längs der abgetasteten Zeilen oder Spalten, die dieses Segment schneiden, gemessen werden, einen kleineren Absolutwert als der halbe Wert der Schrittweite des Gitters von Pixel besitzen.

**24.** Verfahren nach Anspruch 23, dadurch gekennzeichnet, daß die Berechnung durch Rekursion der Koordinaten der Enden der Segmente einer eine Kurve interpolierenden Mehrsegmentlinie darin besteht, daß eine Anzahl N von Segmenten einer jeden Mehrsegmentlinie mit Bezug auf die Interpolationstiefe k in der Weise gewählt wird, daß $N = 2^k$ gilt, wobei diese Tiefe gegeben ist durch die Gleichung:

$$k = \left[ \mathrm{Log}_4 \frac{d(d-1)}{8} D \right],$$

wobei D den Wert der Diagonalen des Fix-Polygons bezeichnet, die durch den Rechner ausgehend von den Koordinaten der gespeicherten Fixpunkte berechnet wird, daß dann die Koordinaten ($x_{i+1}$, $y_{i+1}$) Enden der Segmente einer jeden Mehrsegmentlinie zwischen den Fixpunkten $U_0$ und $U_d$ durch mittels des Rechners ausgeführte Rekursion bestimmt werden, indem zunächst die Vorwärtsdifferenzen ($\delta x_i$, $\delta y_i$) ermittelt

werden, die zu den Koordinaten ($x_i$, $y_i$) des Endes eines Segmentes jeweils hinzugefügt werden müssen, um zu den Koordinaten ($x_{i+1}$, $y_{i+1}$) des Endes eines folgenden Segmentes auf der Mehrsegmentlinie überzugehen, derart, daß

$$x_{i+1} = x_i + \delta x_i \quad \text{und} \quad y_{i+1} = y_i + \delta y_1$$

mit

$$\delta x_{i+1} = \delta x_i + \delta^2 x_i \quad \text{und} \quad \delta y_{i+1} = \delta y_i + \delta^2 y_1$$

$$\delta^2 x_{i+1} = \delta^2 x_i + \delta^3 x_i \quad \text{und} \quad \delta^2 y_{i+1} = \delta^2 y_i + \delta^3 y_1$$

$$\vdots$$

$$\delta^{d-1} x_{i+1} = \delta^{d-1} x_i + \delta^d x_i \quad \text{und} \quad \delta^{d-1} y_{i+1} = \delta^{d-1} y_i + \delta^d y_1$$

mit $0 \leqq i < N$, wobei die Koordinaten der Enden der Segmente einer jeden Mehrsegmentlinie in der Weise gespeichert sind, daß sie nach ansteigenden Werten von i zwischen 0 und N geordnet sind.

**25.** Verfahren nach Anspruch 24, dadurch gekennzeichnet, daß für die Bestimmung der anzuzeigenden Pixel in jeder Folge, bei der jeweils längs sämtlicher abgetasteter Zeilen oder sämtlicher abgetasteter Spalten, die das dieser Folge entsprechende Segment in der Umgebung dieses Segmentes schneiden, die Abstände, die diese Pixel und dieses Segment trennen, gemessen werden:

- die Anzeige-Trägerebene in acht Oktanten unterteilt wird, die in einem Koordinatensystem durch vorgegebene Ordnungsnummern bezeichnet sind, wobei vier Oktanten dieses Koordinatensystems Oktanten mit Dominante (x) genannt werden, wenn die Koordinaten der in diesen Oktanten befindlichen Punkte Absolutwerte auf der ersten Achse (x) besitzen, die größer als die Absolutwerte auf der zweiten Achse (y) sind, während vier andere Oktanten dieses Koordinatensystems Oktanten mit Dominante y genannt werden, wenn die Koordinaten der in diesen vier anderen Oktanten befindlichen Punkte Absolutwerte auf der zweiten Achse (y) besitzen, die größer als die Werte auf der ersten Achse (x) sind,
- ausgehend von den gespeicherten Koordinaten der Enden der anzuzeigenden Segmente oder Segmentabschnitte die Ordnungsnummer des diese Enden enthaltenden Oktanten bestimmt wird,
- eine Abtastung der Zeilen oder der Spalten ausgeführt wird, die jedes anzuzeigende Segment schneiden, und für jedes Segment, dessen Enden in einem Oktanten mit Dominante x liegen, aus den benachbarten Pixel dieses Segments, die sich in den Schnittpunkten der Spalten mit diesem Segment befinden, diejenigen Pixel ausgewählt werden, für die die jeweiligen Abstände zu diesem Segment gemessen längs der zweiten Achse (y) kleinere Absolutwerte als eine halbe Schrittweite (P/2) des Gitters besitzen, und für jedes Segment, dessen Enden in einem Oktanten mit Dominante y liegen, aus den diesem Segment benachbarten Pixel, die sich in den Schnittpunkten der Zeilen mit diesem Segment befinden, diejenigen Pixel ausgewählt werden, für die die jeweiligen Abstände zu diesem Segment gemessen längs der ersten Achse (x) kleinere Absolutwerte als eine halbe Schrittweite des Gitters (P/2) besitzen, wobei die Koordinaten der ausgewählten Pixel im Anzeige-Bezugskoordinatensystem diejenigen der anzuzeigenden Pixel sind, wobei diese Koordinaten gespeichert werden.

**26.** Verfahren nach Anspruch 25, dadurch gekennzeichnet, daß die Folgen von anzuzeigenden Pixel für die Anzeige eines Abschnittes eines Kurvenbogens eine Untermenge der Menge von Folgen von Pixel bilden, welche für die Anzeige dieses Bogens anzuzeigen sind.

## Claims

**1.** Method of producing drawings with the aid of a computer, characterised in that it comprises the following steps:

1) defining and storing in a memory a data structure describing every drawing at all the stages in the creation thereof in the form of a planar chart, that is to say an assembly of faces (F), each face being defined by one or more contour(s) borne by the crests of curves of the said drawing; the said planar chart being associated with a tree for inclusion of the contours defining a relationship of partial order of inclusion of the connected contours formed by the said crests;
2) setting about the effective production of the drawing by carrying out the operations of insertion, erasure and colouring in the planar chart which is initially empty;
- the operations of insertion and of erasure consisting of inserting and/or erasing curves and/or elements of curves until the desired drawing is obtained;
- the colouring operations consisting of colouring one or several faces forming the drawing;

3) displaying the drawing and proceeding to update it progressively with the different operations.

**2.** Method as claimed in Claim 1, characterised in that an operation of insertion of a curve comprises the following steps:
- capturing the curve by means of an input peripheral,
- displaying the curve on the computer screen,
- effectively inserting the curve into the planar chart described by the data structure.

**3.** Method as claimed in Claim 1 or 2, characterised in that the effective insertion of the curve in the planar chart comprises the following steps:
a) - first of all:
- associating with the curve to be inserted the parameters $t_o$ and $t_n$, $t_o$ corresponding to the origin $P_o$ of of the curve, $t_n$ to the other extremity $P_n$;
- localising the face of the chart in which is located the origin of the curve to be inserted having $t_o$ as parameter;
- assigning to a parameter $t_i$ the value of the parameter $t_o$;

b) then in an iterative fashion:
- determining the intersections between the curve of parameter $(t_i, t_n)$ to be inserted and all the curves borne by the crests of the contours of the face;
- inserting the points of intersections of parameter $t_j$ on the arc $(t_i, t_n)$;
- assigning the parameter $t_{i+1}$ to the point of intersection $t_j$ following the point of parameter $t_i$;
- inserting the arc having as parameter $(t_i, t_{i+1})$ into the face under consideration by storing it in the memory in the data structure.

**4.** Method as claimed in any one of Claims 1 to 3, characterised in that the localisation of the face in which is situated the origin of the curve to be inserted and having as parameter $t_o$ comprises the following steps:
- artificially inserting a straight line $D_o$ having as its origin $P_o$ the origin of the curve to be inserted and as its extremity a known point $P_e$ situated in a first face called the infinite face;
- determining the intersections between the straight line $D_o$ and all the curves;

a) - in the case where intersections have been determined:
- calculating the distance $\underline{d}$ between these intersections and the origin point $P_o$,
- determining the crest $\underline{e}$ for which this distance $\underline{d}$ is minimum,
- storing the origin $P_o$ in the face to which belongs the strand of the crest $\underline{e}$ which sees $P_o$.

b) - in the case where no intersection has been determined:
- storing the origin $P_o$ in the first face.

**5.** Method as claimed in any one of Claims 3 or 4, characterised in that the step of determining the intersections between the curve of parameter $(t_i)$ and all the other curves borne by the crests of the contours of the face, these curves being polynomial parametric Bézier curves of degree $\underline{d}$ being described mathematically by the vectorial function $U(t) = (x(t), y(t))$, with $0 \leqq t \leqq 1$, and being defined by d+1 control points $U_i$, with i=0, 1, ..., d, delimiting a control polygon, each control point $U_i$ having real co-ordinates $(x_i, y_i)$ in a reference mark, these co-ordinates being stored in a memory of the computer, comprises the following steps:
- determining the points of intersection of the curves, starting from polylines (P, Q) respectively interpolating these curves, each polyline being formed of N successive segments each having two extremities situated on corresponding arc of a curve ;
- choosing the number N of segments of each polyline in relation to a depth k of interpolation, such that $N=2^k$, N and k being specific for each curve, this depth being given by the relationship

$$k = \left\lceil \operatorname{Log}_4 \frac{d\,(d-1)}{8} D \right\rceil$$

where D designates the diagonal of the control polygon, calculated by the computer from the co-ordinates of the control points stored in the memory;

- determining the co-ordinates ($x_{i+1}$, $y_{i+1}$) of the extremities of the segments of each polyline, between the control points $U_0$ and $U_d$, by recurrence calculated by the computer, by evaluating *a priori* differences in advance ($\delta x_i$, $\delta y_i$) which must be added respectively to the co-ordinates ($x_i$, $y_i$) of the extremity of a segment in order to pass to the co-ordinates ($x_{i+1}$, $y_{i+1}$) of the extremity of a following segment on the polyline, such that:

$$x_{i+1} = x_i + \delta x_i \quad \text{and} \quad y_{i+1} = y_i + \delta y_i$$

with

$$\delta x_{i+1} = \delta x_i + \delta^2 x_i \quad \text{and} \quad \delta y_{i+1} = \delta y_i + \delta^2 y_i$$

$$\delta^2 x_{i+1} = \delta^2 x_i + \delta^3 x_i \qquad \delta^2 y_{i+1} = \delta^2 y_i + \delta^3 y_i$$

$$\vdots \qquad\qquad \vdots$$

$$\delta^{d-1} x_{i+1} = \delta^{d-1} x_i + \delta^d x_i \qquad \delta^{d-1} y_{i+1} = \delta^{d-1} y_i + \delta^d y_i,$$

with $O \leqq i \leqq N$, each point of intersection ($I_1$, $I_2$, ...) of two curves being determined by the intersection of two characteristic segments ($P_0P_1$, $Q_0Q_1$) appertaining respectively to the two polylines respectively interpolating the two curves, the co-ordinates of the extremities of the segments of each polyline being stored in a memory in a manner ordered according to the increasing values of i between O and N.

6. Method as claimed in Claim 3, characterised in that it consists of determining the co-ordinates of each point of intersection of the two curves, starting from the intersection of the said two characteristic segments, by bringing to whole values the values of the co-ordinates of respective extremities of the segments of each polyline (P, Q) calculated by the computer, these whole values corresponding respectively to the whole co-ordinates of the points of a grid (G) of the reference mark (0, x, y) which are respectively closest to the extremities of the segments of the polyline, these whole values being stored in the memory.

7. Method as claimed in Claim 6, characterised in that the co-ordinates of each point of intersection ($I_1$, $I_2$, ...) of the two curves are calculated from the whole values corresponding respectively to the respective co-ordinates of extremities of the two characteristic segments appertaining respectively to the polylines respectively interpolating the two curves in the vicinity of each point of intersection.

8. Method as claimed in Claim 7, characterised in that the two characteristic segments ($P_0P_1$, $Q_0Q_1$) are determined by seeking in the polylines (P, Q) of each curve, starting from whole values of the co-ordinates of extremities of the segments of these polylines stored in the memory, monotonic sequences ($M_1$, $M'_1$ - $M_2$, $M'_2$ ...) of these whole values, each monotonic sequence corresponding to a succession of segments delimited by a first extremity of a first extreme segment and by a second extremity of a second extreme segment, these first and second extremities making it possible to delimit for each monotonic sequence an enclosing box ($B_1$ or $B'_1$ or $B_2$ ...) having two edges parallel to a first axis of the reference mark and to edges parallel to a second axis of the reference mark, this enclosing box being delimited by the said first and second extremities of the extreme segments of the corresponding monotonic sequence, the characteristic segments being respectively situated in two enclosing boxes forming a pair of boxes appertaining respectively to to two respective monotonic sequences of the two polylines, the two boxes of the said pair overlapping at least partially according to a common zone, the said characteristic segments being

situated in the said common zone.

**9.** Method as claimed in Claim 8, characterised in that it consists, by successive sub-divisions of the monotonic sequences of polylines, of obtaining successive pairs of enclosing sub-boxes, the co-ordinates of each point of intersection being calculated when following the said successive sub-divisions the enclosing sub-boxes of the pair obtained by sub-divisions contain respectively and solely the two characteristic segments, a calculation of the values of the co-ordinates of the point of intersection then being made from the values of the respective co-ordinates of the extremities of the characteristic segments.

**10.** Method as claimed in Claim 9, characterised in that it also consists of storing in a memory, for each point of intersection, a context of intersection comprising the serial number of the origin of each characteristic segment, the ratio ($P_0I_1/P_0P_1$ or $Q_0I_1/Q_0Q_1$) of the distance ($P_0P_1$ or $Q_0I_1$) between the point of intersection I1 and the origin ($P_0$ or $Q_0$) of each characteristic segment to the length ($P_0P_1$ or $Q_0Q_1$) of this characteristic segment, the co-ordinates of the point of intersection measured in the reference mark, and the order of the strands corresponding to each segment, around the point of intersection.

**11.** Method as claimed in any one of Claims 4 or 10, characterised in that the step of inserting an arc $a_i$ into the chart, the arc $a_i$ being borne by a crest $\underline{e}$ and by two specific strands of $\underline{e}$ consists of:
- creating an apex S, S' for each strand of the crest $\underline{e}$ by storing the apexes S and S' in the data structure in the case where these apexes are not already in the chart;
- creating the crest $\underline{e}$ by storing it in the data structure including the arc $a_i$ and one of the two strands in the case where this crest does not already exist in the chart.

**12.** Method as claimed in any one of Claims 4 to 11, characterised in that the step of determining the intersections between the curve to be inserted and a given face also includes a step of marking this face.

**13.** Method as claimed in Claim 12, characterised in that the step of marking the face consists of reserving a field in the coding of a face in the memory capable of being informed as soon as the user proceeds with the determination of the intersections between the parameterised arc ($t_i$, $t_n$) and the face.

**14.** Method as claimed in any one Claims 4 to 13, characterised in that after the insertion of an arc ($t_i$, $t_{i+1}$) by storing in the data structure, the user proceeds to a comparison of the parameter $t_{i+1}$ with the parameter $t_n$, passes to the following face when these two parameters do not correspond to one another, the insertion being terminated in the contrary case.

**15.** Method as claimed in any one of Claims 4 to 14, characterised in that it includes a step of comparing the current face with the faces already processed in order to insert the arc of parameters ($t_i$, $t_{i+1}$) directly into this face in the case where the face has already been processed and passing to a new face in the contrary case.

**16.** Method as claimed in any one of Claims 4 to 15, characterised in that it also includes a step of updating the tree of inclusion of the contours consisting of inserting or deleting a crest.

**17.** Method as claimed in Claim 16, characterised in that the step of updating the tree of inclusion of the contours in the case of insertion consists, for a crest $\underline{e}$ borne by the arc $a_i$ of parameters ($t_i$, $t_{i+1}$), of:

a) - first of all:

- entering into the memory in the form of a table a total of possible cases for a crest in a planar chart;

b) - then after the insertion of an arc $a_i$:

- determining by comparison with the different possible cases the case of the crest $\underline{e}$ borne by the arc $a_i$;

c) - updating the tree of contours as a function of the case previously determined by carrying out a:
  - deletion of a contour when two contours are merged, or
  - creation of a new contour, this contour becoming son or brother of the split contour in the tree of contours.

**18.** Method as claimed in Claim 16, characterised in that the step of updating the tree of inclusion of the contours in the case of a deletion consists, for a crest $\underline{e}$ corresponding to the inserted arc of parameter $t_i$, $t_{i+1}$, of:

a) - first of all:

- entering into the memory in the form of a table a total of possible cases for a crest in a planar chart;

b) - for the crest e to be deleted:

- entering the number of hanging apexes of the crest, the type of internal or external contour to which the strands of the crest belong,
- determining by comparison with the different possible cases in the table the case of this crest;

c) - then updating the tree of contours as a function of the case determined by carrying out either:

- a deletion;
- a split;
- any modification.

**19.** Method as claimed in any one of Claims 1 to 18, characterised in that an operation of erasing a curve and/or an element of a curve includes the following steps:

- capturing the element to be erased by means of an input peripheral,
- localising this element in the planar chart described by the data structure,
- following the case of localisation:
  a) - erasing this element in the planar chart,
  b) - updating the tree of inclusion of the contours,
  c) erasing this element from the display.

**20.** Method as claimed in any one of Claims 1 to 19, characterised in that the erasure of an element of a curve or a curve in a planar chart is achieved:

- by carrying out a deletion in the data structure of the apexes, crests and contours associated with the curve,
- by keeping in the memory in the data structure the arcs and the points which define the curve,
- by informing a field provided in the data relating to the arcs and to the points signifying that the elements corresponding to the arcs and to the points are effaced.

**21.** Method as claimed in Claim 20, characterised in that the step of erasing hanging crests, a contour, a face, a component or a chart consists of:

A) seeking a crest e of which at least one apex is hanging;

B) if the crest e exists:

(a) keeping the non-hanging apex s of e,

(b) deleting the crest e,

(c) if s has become a hanging apex after the step B(b), reiterating in B(a) with an incident crest e in s,

(d) reiterating in A.

**22.** Method as claimed in any one of Claims 1 to 21, characterised in that the operation of colouring a face includes the following steps:

- capturing a point to be localised by means of an input peripheral,
- localising this point in the planar chart described by the data structure,
- following the case of the localisation:
  a) - indicating the colour by marking of this face in the planar chart,
  b) - causing the colour to appear at the time of display.

**23.** Method as claimed in any one of Claims 2 to 22, characterised in that the display is carried out starting from polynomial parametric curves formed by arcs, this display being made on a display screen linked to the computer, this computer being linked to a memory, the display on the screen being determined by a grid of pixels defined by parallel lines and columns, regularly spaced at a predetermined pitch, successively scanned, each pixel being localised by the intersection of a line and a column and being displayed when the corresponding line and column receive display command signals during the course of scanning, the pixels of the grid being referenced by their co-ordinates (x, y) in a reference mark (0, x, y) having a first axis (x) and a second axis (y) respectively parallel to the lines and to the columns, each curve of degree d being described mathematically by the vector function U(t)=(x(t), y(t)) of a parameter t, with $0 \leqq t \leqq 1$, and being defined by d+1 control points $U_i$, with i=0, 1, ..., d, delimiting a control polygon, each control point $U_i$ having real co-ordinates $(x_i, y_i)$ in the reference mark, these coordinates being entered in the memory of the computer, each curve being interpolable by a polyline having a depth of interpolation k and having N successive oriented segments, each having two extremities situated on the curve, the display of

an arc of a curve being delimited by a pair of parameter ($t_d$, $t_f$) on the interval [0, 1] of the curve U(t); the display consisting of displaying a portion of polyline corresponding to this arc, delimited by a departure point (A ) and an arrival point (A ), by displaying the pixels closest to this portion of polyline, and also consisting, for each arc, of:

- calculating the depth of interpolation k of the curve corresponding to this arc, starting from the degree d of the curve and the diagonal D of the control polygon, calculated from the stored co-ordinates of the control points, in order to establish one-to-one mapping between the order i of the extremities $E_i$ of the segments of the polyline and the division of the interval [0, 1] of the parameter t, in 2 equal parts, such that $t_i=i.2^{-k}$, $t_i$ being the parameter of the extremity $E_i$,
- establishing a transformation ($t_d$, $t_f$) --> (i, u), (j, v), which causes to correspond to the parameters of the pair ($t_d$, $t_f$) respectively two pairs of values (i, u), (j, v) such that $t_d=i.2^{-k}+u$ and $t_f= J.2^{-k}+v$, with u<1 and v<1,
- calculating by recurrence the co-ordinates of i+1 first extremities of segments of the polyline in the reference mark, in order to calculate the co-ordinates of the departure point $A_d$, starting from the co-ordinates of the extremities $E_i$ and $E_{i+1}$ of segments of the polyline, such that $A_d=E_i+u(E_{i+1}-E_i)$, $A_dE_{i+1}$ being a portion of segment to be displayed, the co-ordinates of $A_d$ and $E_{i+1}$ being stored in the memory,
- calculating by recurrence the co-ordinates of the extremities $E_{i+2}$ to $E_{J+1}$ of segments of the polyline in the reference mark, in order to calculate the co-ordinates of the arrival point $A_f$, starting from the co-ordinates of the extremities $E_J$ and $E_{J+1}$, such that $A_f=E_J+v(E_{J+1}-E_J)$, the segments corresponding to the extremities $E_{i+1}$ to $E_J$ as well as the portion of segment $E_JA_f$ being for display, the coordinates of the extremities $E_{i+2}$ to $A_f$ being stored in the memory,
- determining, as soon as the co-ordinates of extremities of each segment or portion of segment to be displayed are stored in the memory, a sequence of pixels to display, the pixels of each sequence being selected in the vicinity of this segment in order to be displayed when the distances separating these pixels of the corresponding segment, measured in the reference mark, respectively along the scanned lines or the columns and which cut this segment, are lower in absolute values than half the value of the pitch of the grid of pixels.

**24.** Method as claimed in Claim 23, characterised in that the calculation by recurrence of the co-ordinates of the extremities of segments of a polyline interpolating a curve consists of choosing a number N of segments of each polyline, in relation to the depth k of interpolation, such that $N=2^k$, this depth being given by the relationship:

$$k = \left\lceil \operatorname{Log}_4 \frac{d\,(d-1)}{8} D \right\rceil$$

where D designates the value of the diagonal of the control polygon, calculated by the computer from the co-ordinates of the control points stored in the memory, then determining the co-ordinates ($x_{i+1}$, $y_{i+1}$) of the extremities of each polyline, between the control points $U_0$ and $U_d$, by recurrence calculated by the computer, by *a priori* evaluating the differences in advance ($\delta x_i$, $\delta y_i$) which must be added respectively to the co-ordinates ($x_i$, $y_i$) of the extremity of a segment in order to pass to the co-ordinates ($x_{i+1}$, $y_{i+1}$) of the following segment on the polyline, such that:

$$x_{i+1} = x_i + \delta x_i \qquad \text{and} \qquad y_{i+1} = y_i + \delta y_i$$

with

$$\delta x_{i+1} = \delta x_i + \delta^2 x_i \quad \text{and} \quad \delta y_{i+1} = \delta y_i + \delta^2 y_i$$

$$\delta^2 x_{i+1} = \delta^2 x_i + \delta^3 x_i \qquad \delta^2 y_{i+1} = \delta^2 y_i + \delta^3 y_i$$

$$\vdots \qquad\qquad \vdots \qquad\qquad \vdots \qquad\qquad \vdots$$

$$\delta^{d-1} x_{i+1} = \delta^{d-1} x_i + \delta^d x_i \qquad \delta^{d-1} y_{i+1} = \delta^{d-1} y_i + \delta^d y_i,$$

with $0 \leqq i \leqq N$, the co-ordinates of the extremities of the segments of each polyline being stored in the memory in an ordered manner, according to the increasing values of i between 0 and N.

**25.** Method as claimed in Claim 24, characterised in that, in order to determine the pixels to be displayed in each sequence, by measuring respectively along all the scanned lines or all the scanned columns which cut the segment corresponding to this sequence in the vicinity of this segment, the distances which separate these pixels and this segment:

- the visualisation support plane is divided into eight octants referenced by predetermined serial numbers, four octants of this reference being called (x) dominant when the co-ordinates of the points situated in these octants have absolute values on the first axis (x) greater than the absolute values on the second axis (y), four other octants of this reference being called y dominant when the co-ordinates of the points situated in these four other octants have absolute values on the second axis (y) greater than the values on the first axis (x),
- starting from the co-ordinates of the extremities of the segments or portions of segments to be displayed stored in the memory, the serial number of the octant containing these extremities is determined,
- the lines or columns cutting each segment to be displayed are scanned and for every segment of which the extremities are in an x dominant segment there are chosen from amongst the pixels neighbouring this segment and situated at the intersections of columns with this segment those for which the respective distances from this segment, measured on the second axis (y), are lower in absolute values than a half-pitch (P/2) of the grid, and for every segment of which the extremities are in a y dominant segment there are selected from amongst the pixels neighbouring this segment and situated at the intersections of lines with this segment, those for which the respective distances from this segment, measured on the first axis (x) are lower in absolute values than a half-pitch of the grid (P/2), the co-ordinates of the pixels selected in the reference mark for visualisation being those of the pixels to be displayed, these co-ordinates being stored in the memory.

**26.** Method as claimed in Claim 25, characterised in that the sequences of pixels to be displayed in order to visualise a portion of an arc of a curve form a sub-assembly of the assembly of sequences of pixels to be displayed in order to visualise this arc.

FIG. 1a

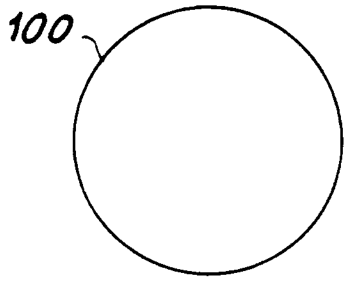


INSERER

FIG. 1 b

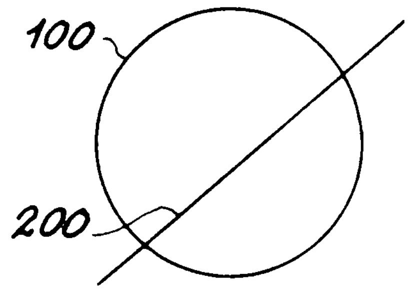


INSERER

FIG. 1 c

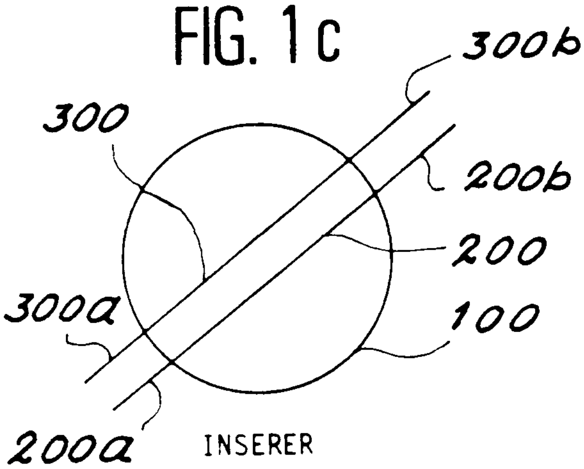


INSERER

FIG. 1 d

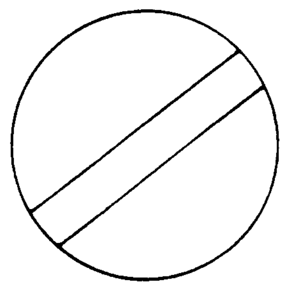

GOMMER

FIG. 1 e

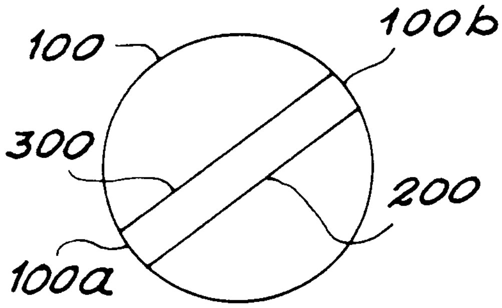


GOMMER

FIG. 1 f

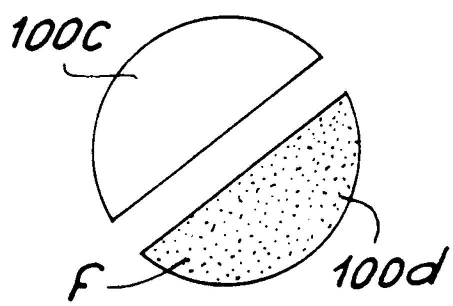


COLORIER

FIG. 2a

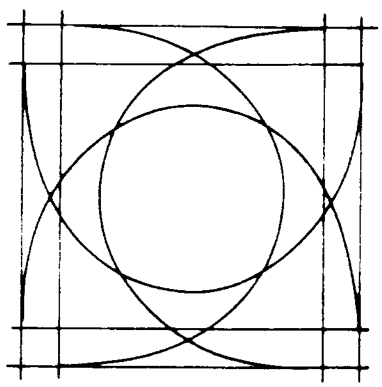

FIG. 2b

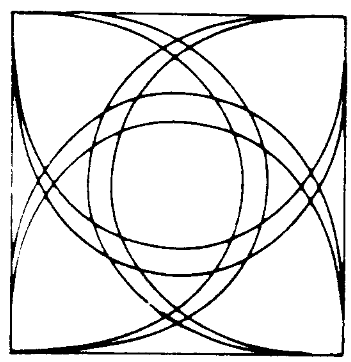

FIG. 2c

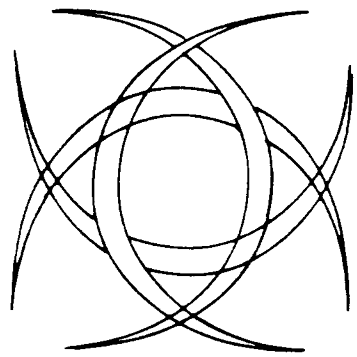

FIG. 2d

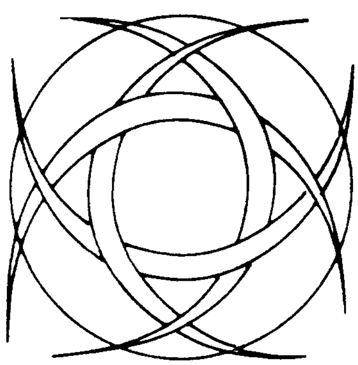

FIG. 2e

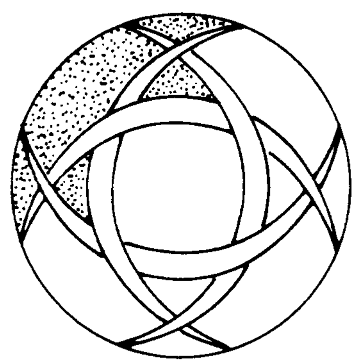

FIG. 2f

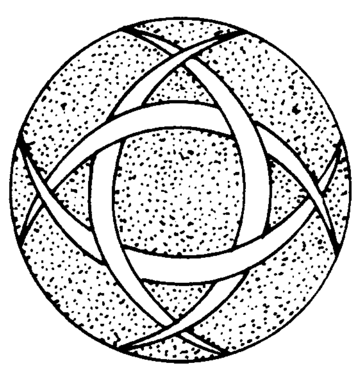

FIG. 3

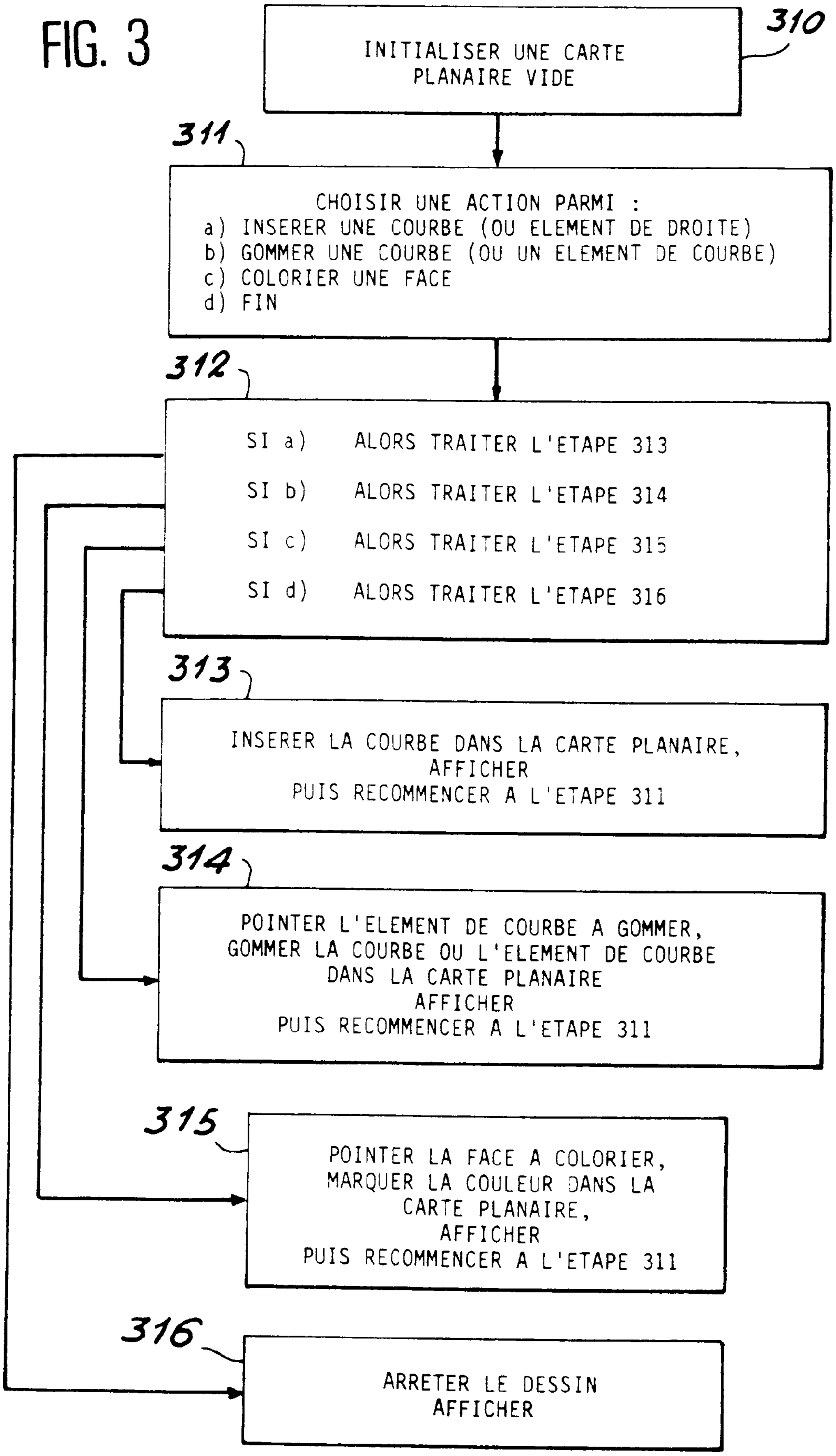
310
INITIALISER UNE CARTE PLANAIRE VIDE
311
CHOISIR UNE ACTION PARMI :
a) INSERER UNE COURBE (OU ELEMENT DE DROITE)
b) GOMMER UNE COURBE (OU UN ELEMENT DE COURBE)
c) COLORIER UNE FACE
d) FIN
312
SI a) ALORS TRAITER L'ETAPE 313
SI b) ALORS TRAITER L'ETAPE 314
SI c) ALORS TRAITER L'ETAPE 315
SI d) ALORS TRAITER L'ETAPE 316
313
INSERER LA COURBE DANS LA CARTE PLANAIRE, AFFICHER PUIS RECOMMENCER A L'ETAPE 311
314
POINTER L'ELEMENT DE COURBE A GOMMER, GOMMER LA COURBE OU L'ELEMENT DE COURBE DANS LA CARTE PLANAIRE AFFICHER PUIS RECOMMENCER A L'ETAPE 311
315
POINTER LA FACE A COLORIER, MARQUER LA COULEUR DANS LA CARTE PLANAIRE, AFFICHER PUIS RECOMMENCER A L'ETAPE 311
316
ARRETER LE DESSIN AFFICHER

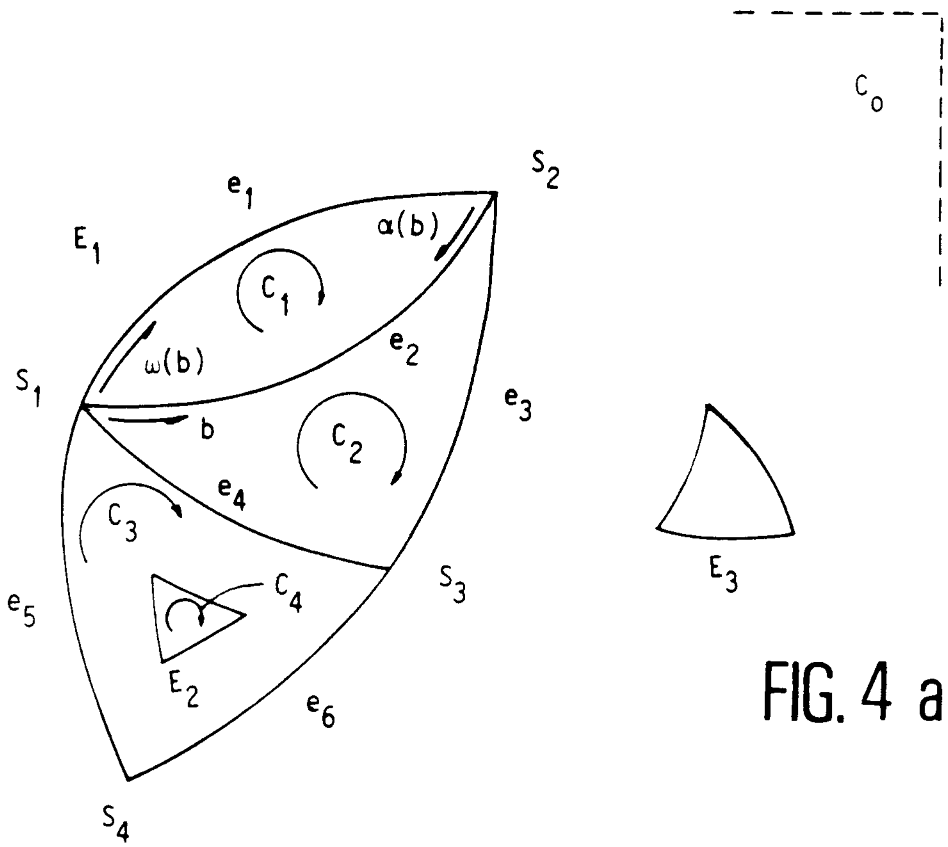
C0
S2
e1
E1
α(b)
C1
e2
ω(b)
S1
e3
b
C2
e4
C3
S3
E3
C4
e5
E2
e6
S4

FIG. 4 a

FIG. 4 b

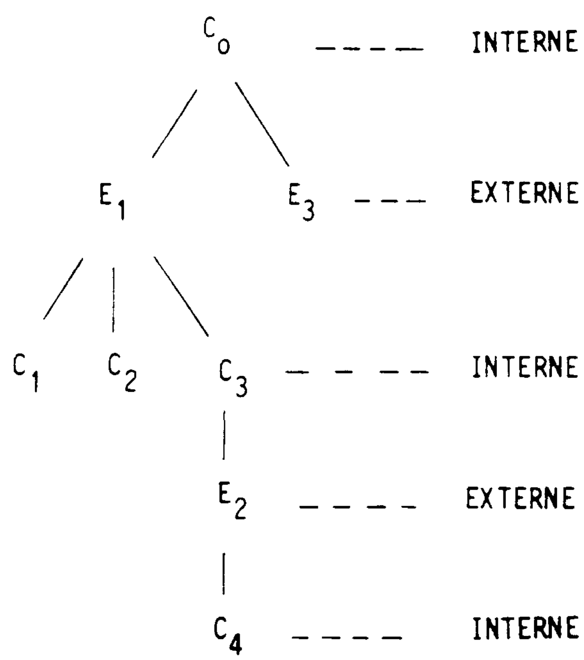
C0
INTERNE
E1
E3
EXTERNE
C1
C2
C3
INTERNE
E2
EXTERNE
C4
INTERNE

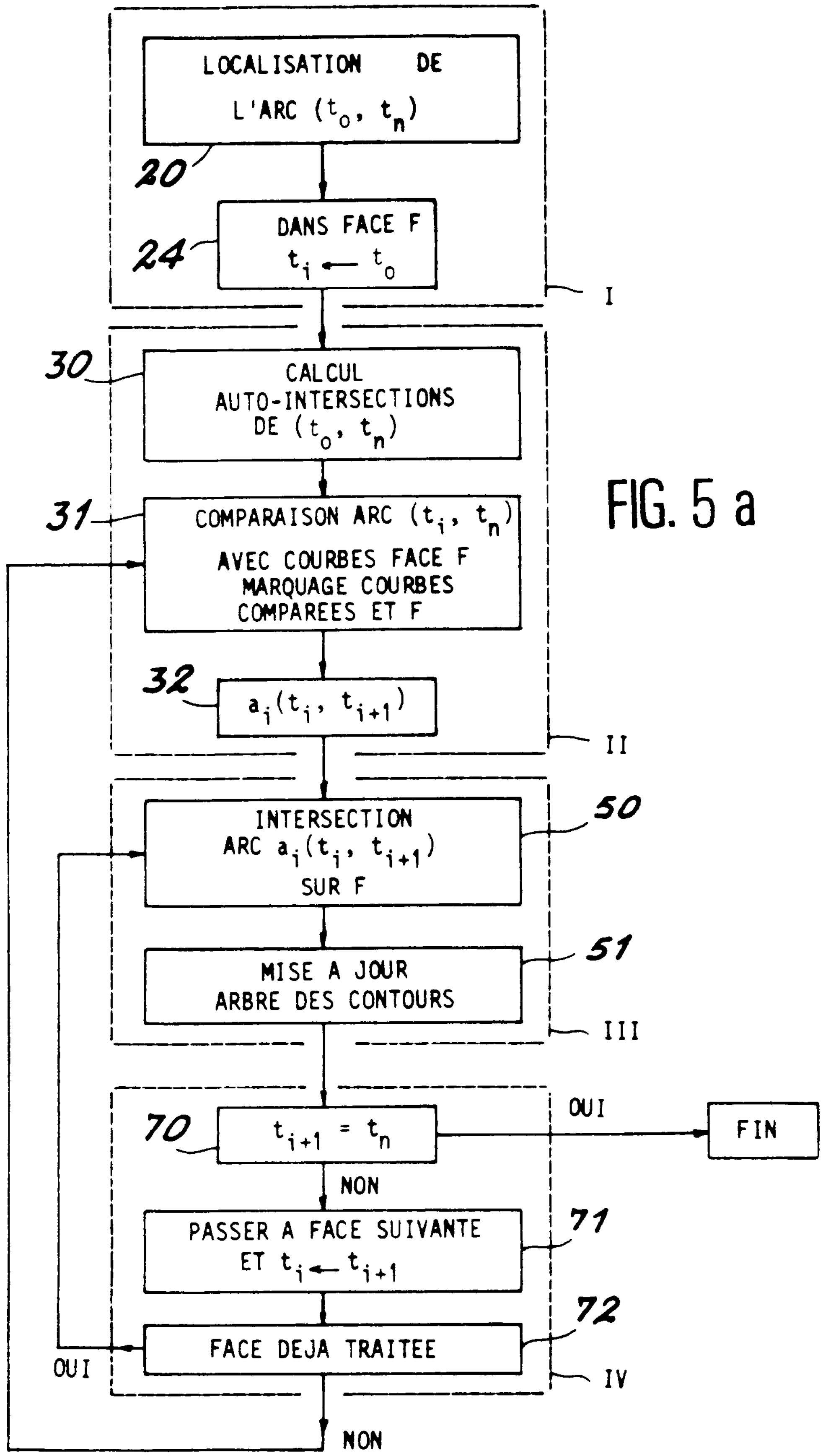
LOCALISATION DE
L'ARC ($t_0$, $t_n$)
20
DANS FACE F
$t_i \leftarrow t_0$
24
I
30
CALCUL
AUTO-INTERSECTIONS
DE ($t_0$, $t_n$)
31
COMPARAISON ARC ($t_i$, $t_n$)
AVEC COURBES FACE F
MARQUAGE COURBES
COMPAREES ET F
32
$a_i(t_i, t_{i+1})$
II
INTERSECTION
ARC $a_i(t_i, t_{i+1})$
SUR F
50
MISE A JOUR
ARBRE DES CONTOURS
51
III
70
$t_{i+1} = t_n$
OUI
FIN
NON
PASSER A FACE SUIVANTE
ET $t_i \leftarrow t_{i+1}$
71
FACE DEJA TRAITEE
72
OUI
IV
NON

FIG. 5 a

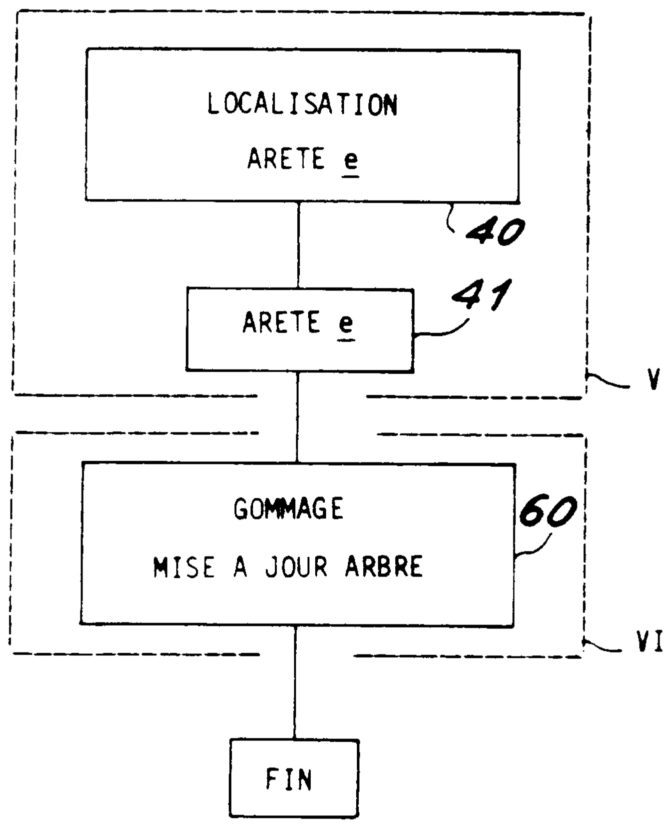
LOCALISATION
ARETE e
40
ARETE e
41
V
GOMMAGE
MISE A JOUR ARBRE
60
VI
FIN

FIG. 5 b

FIG. 6 a

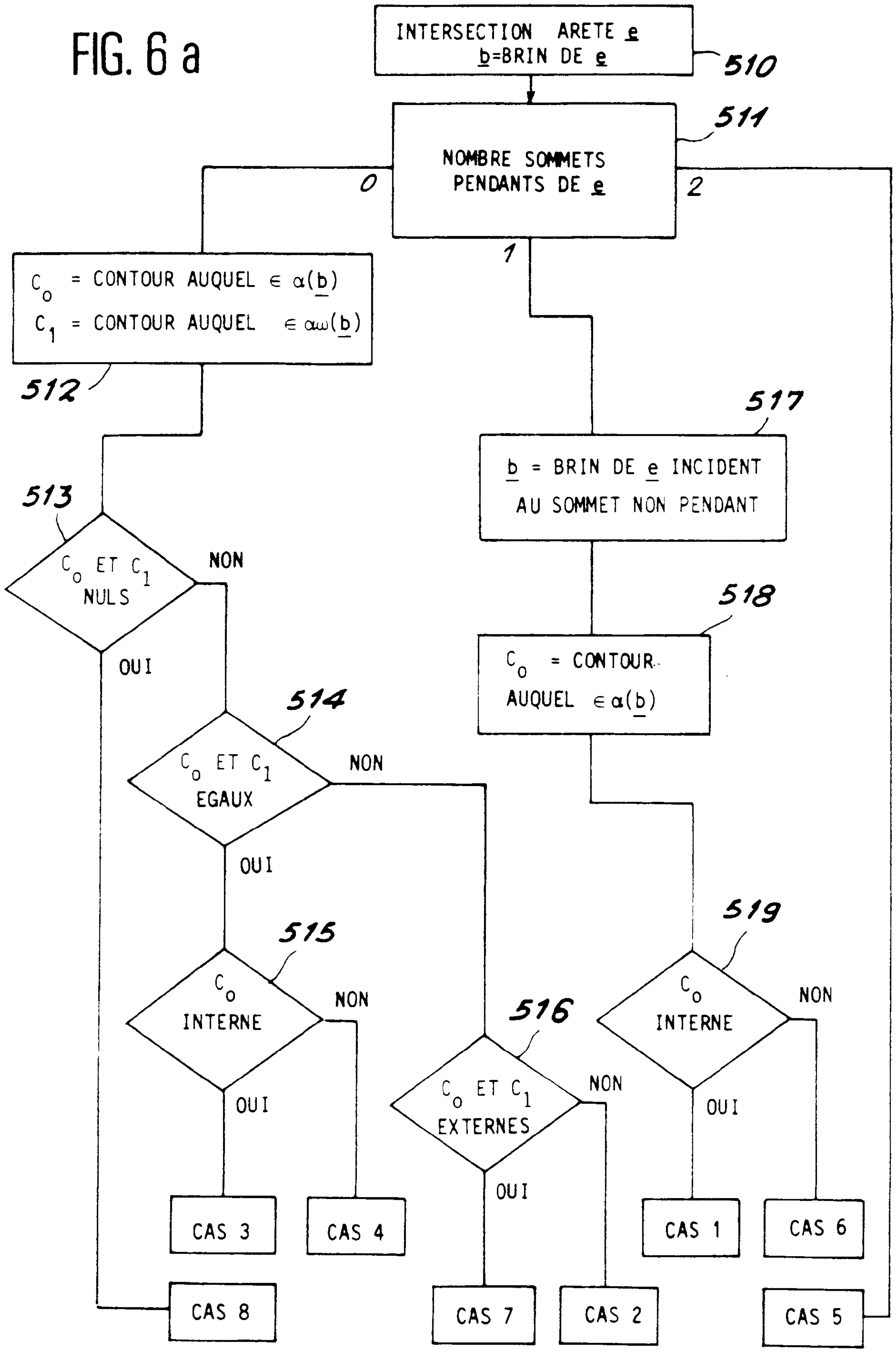
INTERSECTION ARETE e
b=BRIN DE e
510
NOMBRE SOMMETS PENDANTS DE e
511
0
1
2
$C_0$ = CONTOUR AUQUEL ∈ α(b)
$C_1$ = CONTOUR AUQUEL ∈ αω(b)
512
513
$C_0$ ET $C_1$ NULS
NON
OUI
514
$C_0$ ET $C_1$ EGAUX
NON
OUI
515
$C_0$ INTERNE
NON
OUI
516
$C_0$ ET $C_1$ EXTERNES
NON
OUI
517
b = BRIN DE e INCIDENT AU SOMMET NON PENDANT
518
$C_0$ = CONTOUR AUQUEL ∈ α(b)
519
$C_0$ INTERNE
NON
OUI
CAS 3
CAS 4
CAS 1
CAS 6
CAS 8
CAS 7
CAS 2
CAS 5

FIG. 6 b

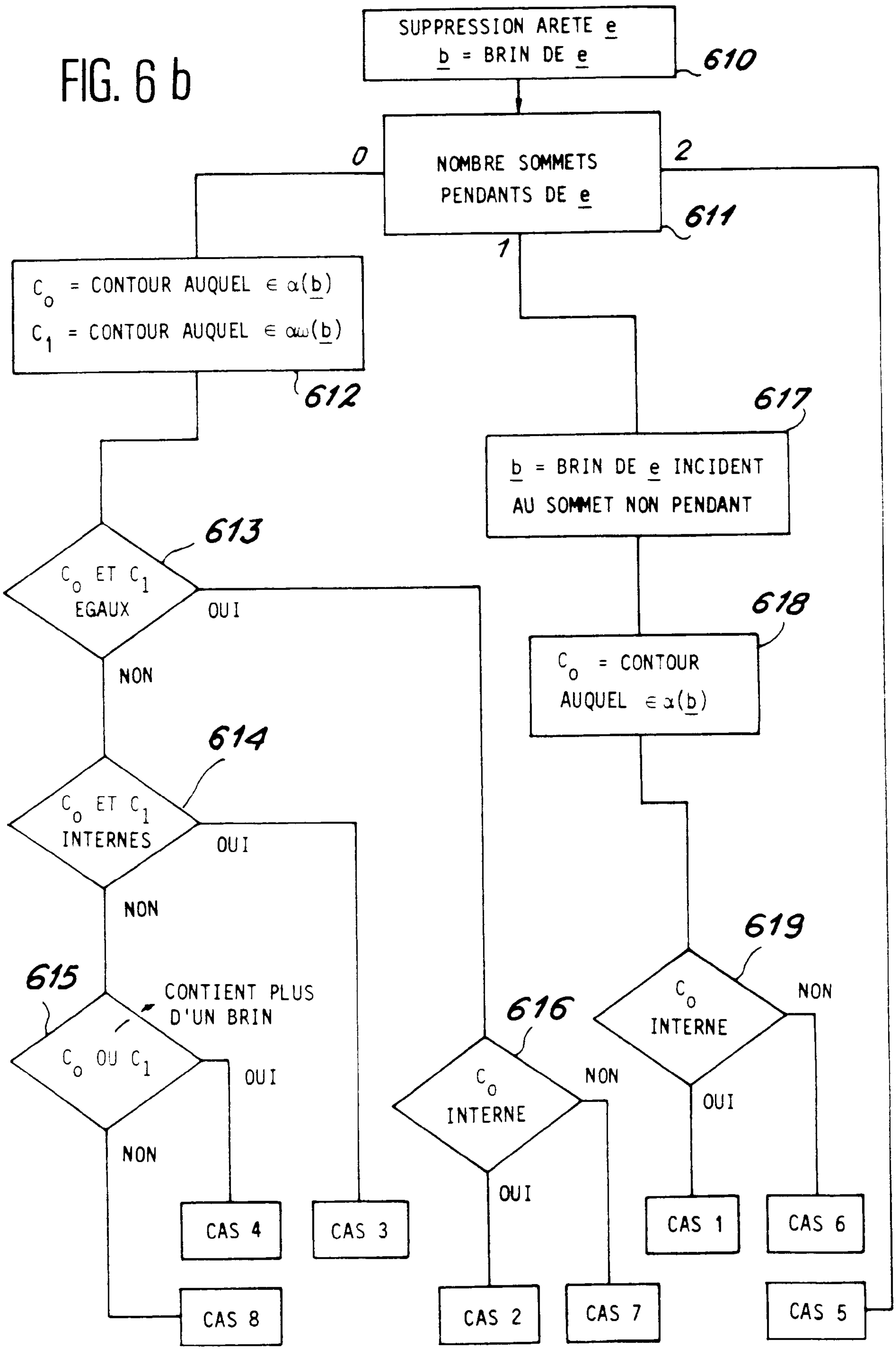
SUPPRESSION ARETE e
b = BRIN DE e
610
NOMBRE SOMMETS
PENDANTS DE e
611
0
1
2
C0 = CONTOUR AUQUEL ∈ α(b)
C1 = CONTOUR AUQUEL ∈ αω(b)
612
617
b = BRIN DE e INCIDENT
AU SOMMET NON PENDANT
613
C0 ET C1
EGAUX
OUI
NON
618
C0 = CONTOUR
AUQUEL ∈ α(b)
614
C0 ET C1
INTERNES
OUI
NON
615
CONTIENT PLUS
D'UN BRIN
C0 OU C1
OUI
NON
616
C0
INTERNE
NON
OUI
619
C0
INTERNE
NON
OUI
CAS 4
CAS 3
CAS 8
CAS 2
CAS 7
CAS 1
CAS 6
CAS 5

FIG. 7

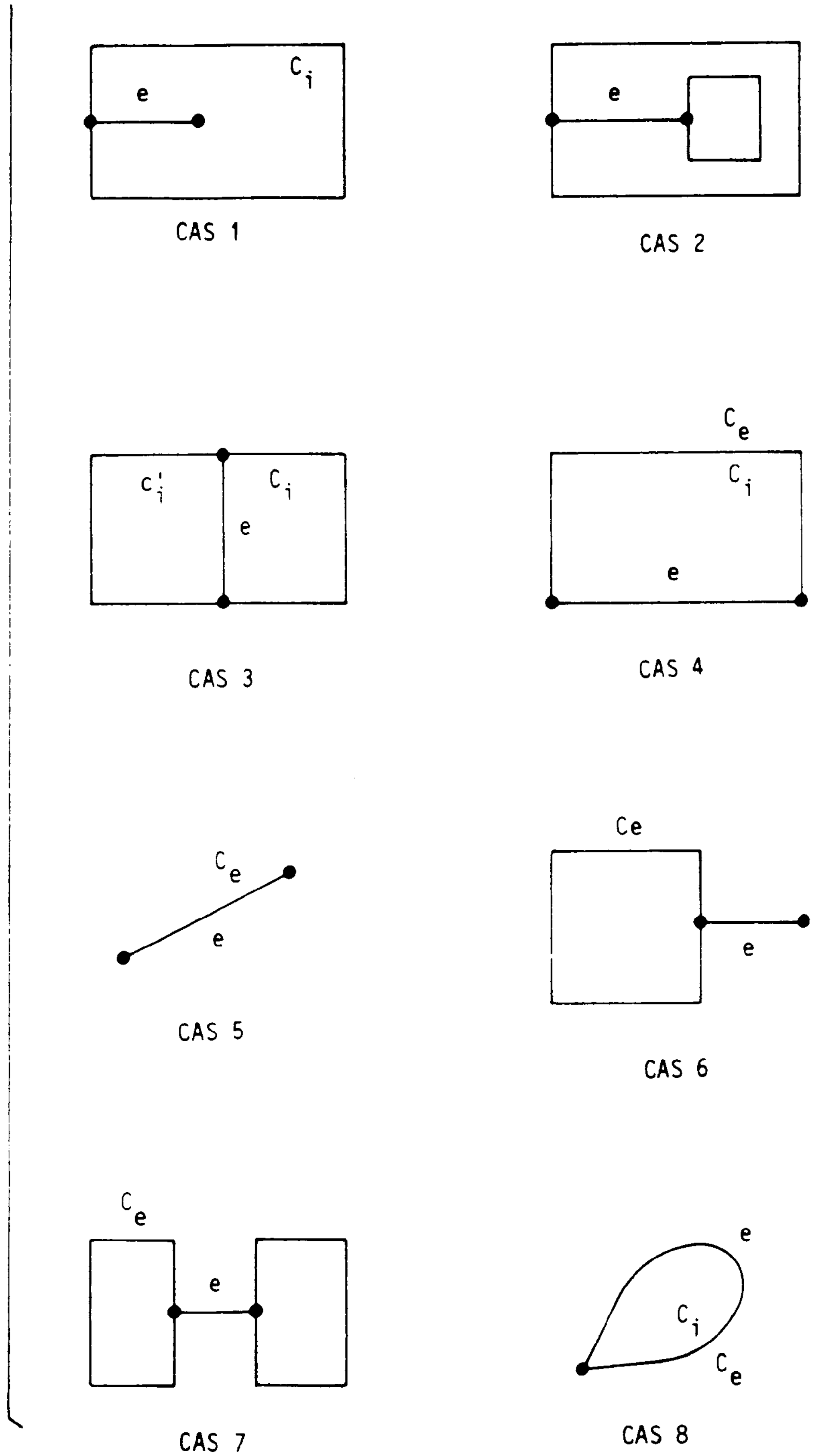
Ci
e
CAS 1
e
CAS 2
C'i
Ci
e
CAS 3
Ce
Ci
e
CAS 4
Ce
e
CAS 5
Ce
e
CAS 6
Ce
e
CAS 7
e
Ci
Ce
CAS 8

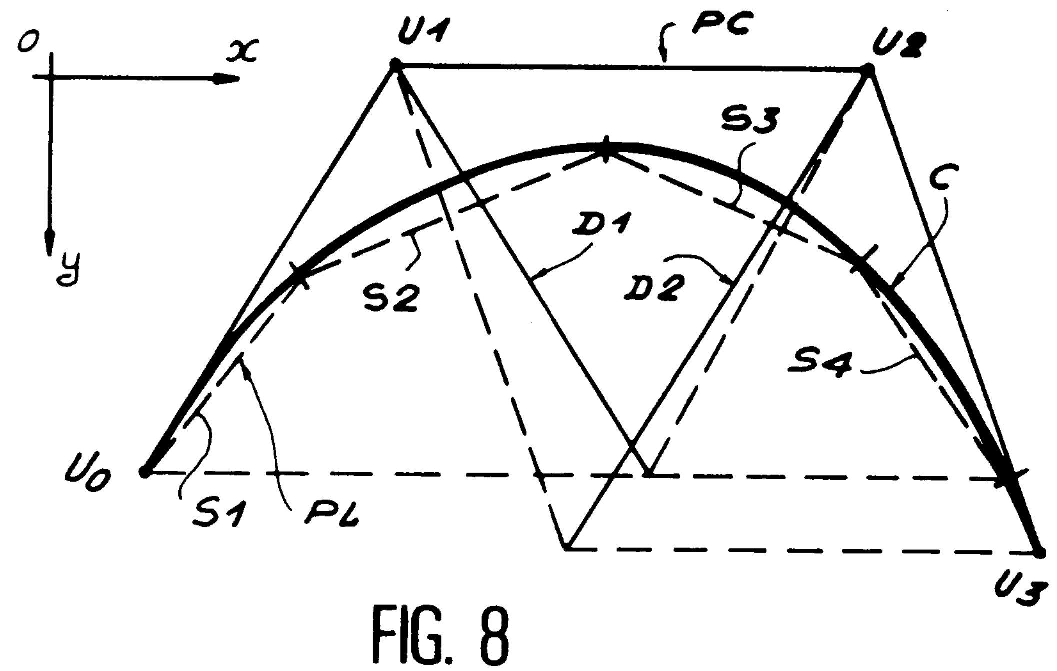
O
x
y
U1
PC
U2
S3
C
D1
S2
D2
S4
U0
S1
PL
U3

FIG. 8

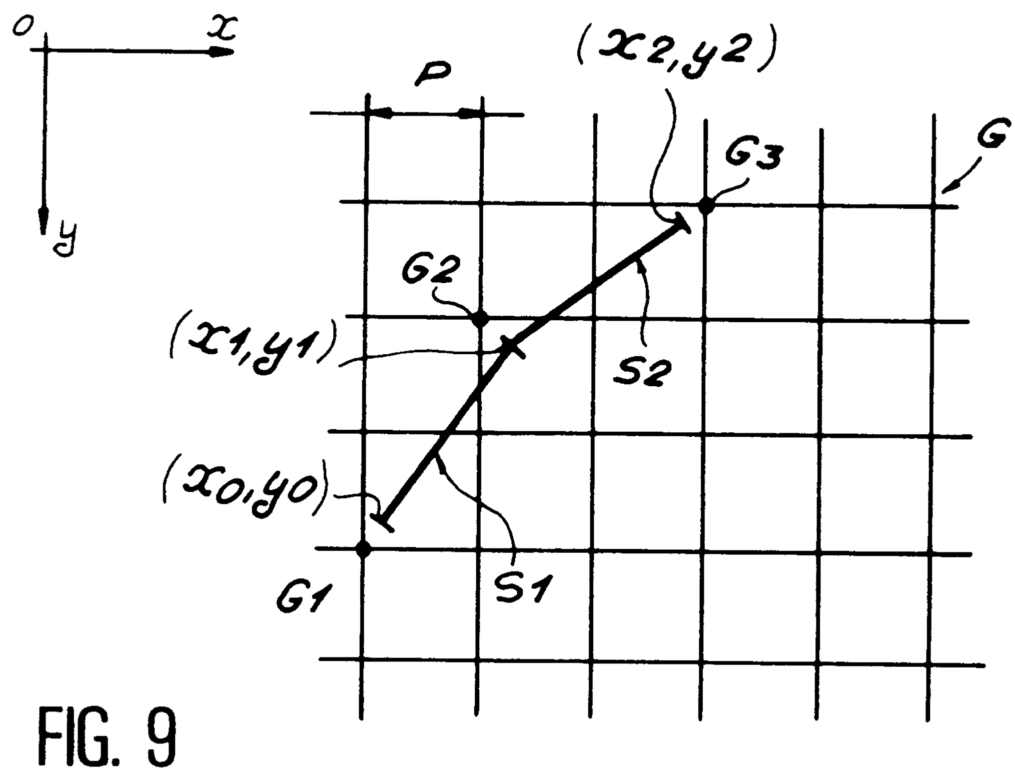
O
x
y
(x2,y2)
P
G
G3
G2
(x1,y1)
S2
(x0,y0)
G1
S1

FIG. 9

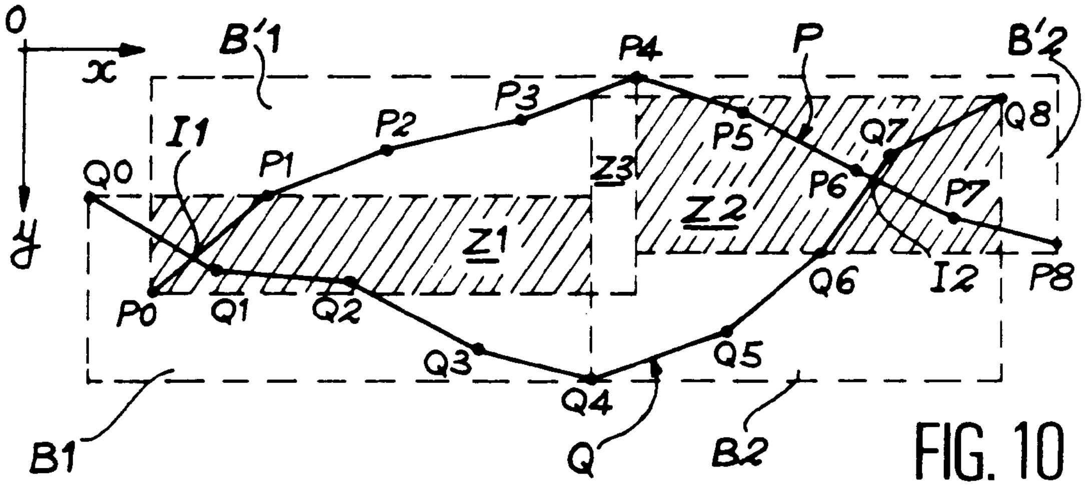
0
x
y
B'1
P4
P
B'2
P3
P2
Q8
I1
Q7
Z3
P5
Q0
P1
P6
P7
Z2
Z1
Q6
I2
P8
P0
Q1
Q2
Q3
Q5
Q4
B1
Q
B2

FIG. 10

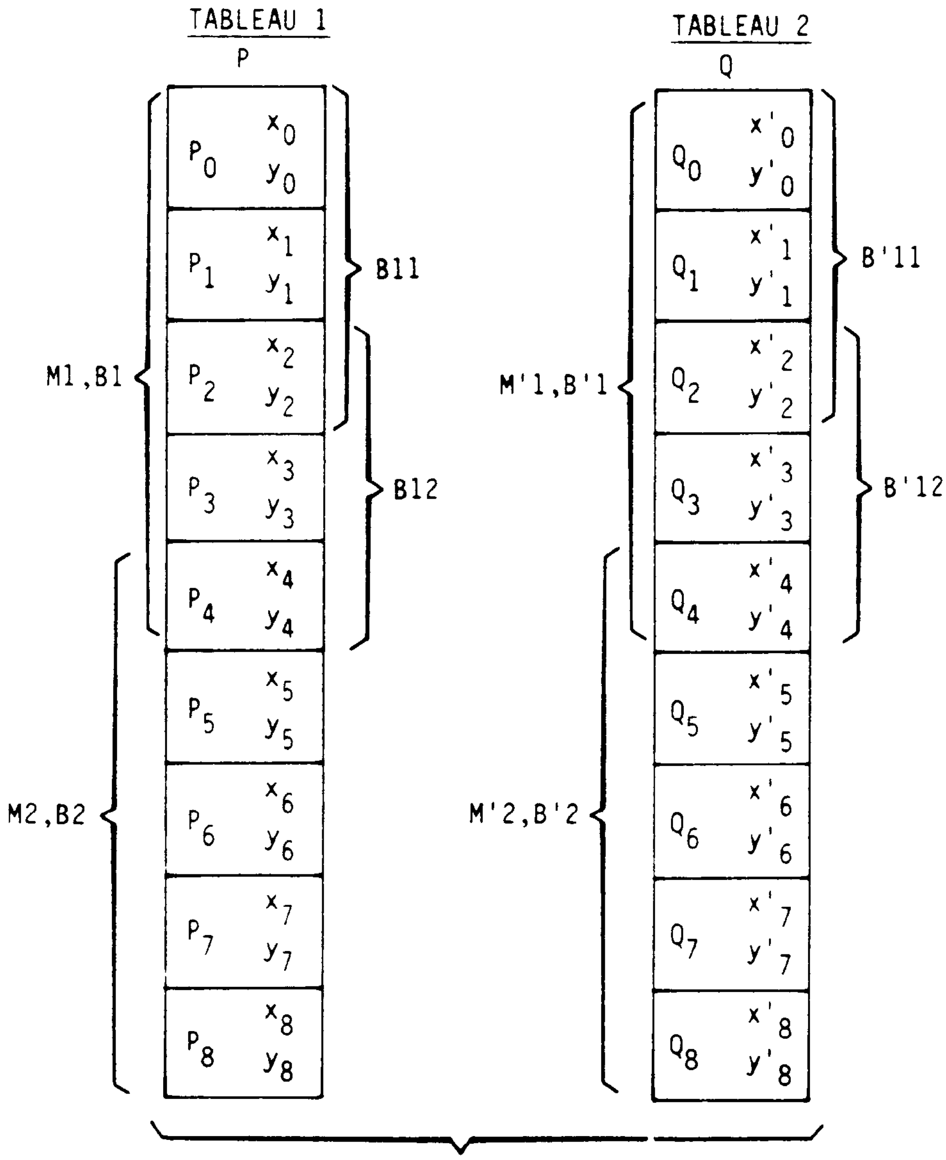
TABLEAU 1
P
P0 x0 y0
P1 x1 y1
P2 x2 y2
P3 x3 y3
P4 x4 y4
P5 x5 y5
P6 x6 y6
P7 x7 y7
P8 x8 y8
B11
B12
M1,B1
M2,B2
TABLEAU 2
Q
Q0 x'0 y'0
Q1 x'1 y'1
Q2 x'2 y'2
Q3 x'3 y'3
Q4 x'4 y'4
Q5 x'5 y'5
Q6 x'6 y'6
Q7 x'7 y'7
Q8 x'8 y'8
B'11
B'12
M'1,B'1
M'2,B'2

FIG.11

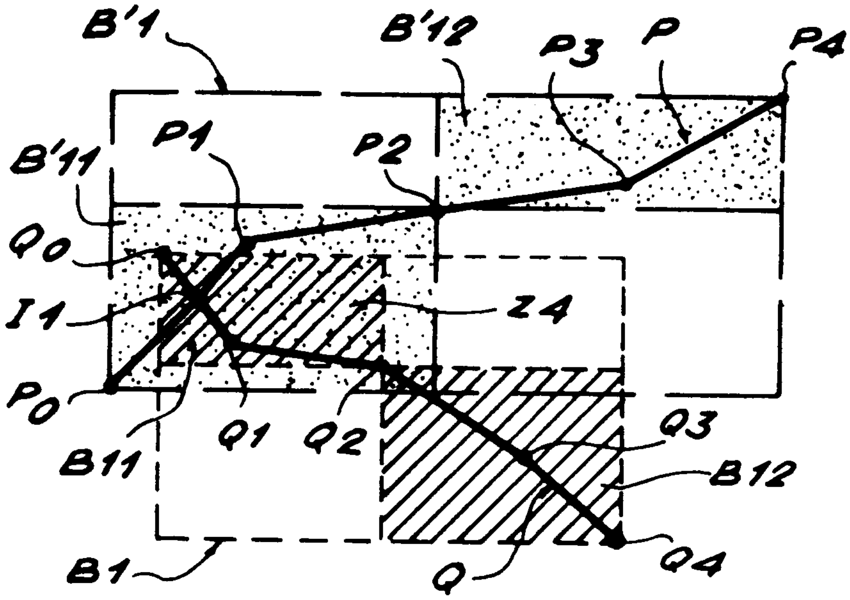


FIG. 12

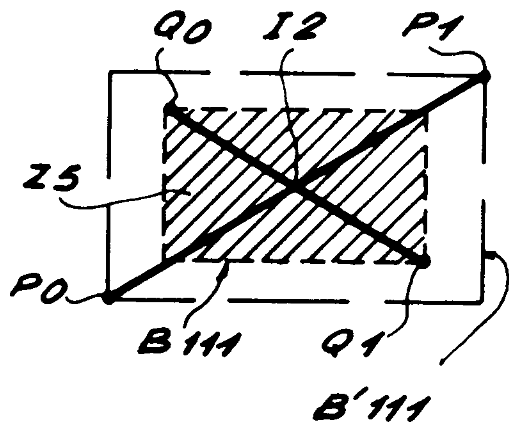


FIG. 13

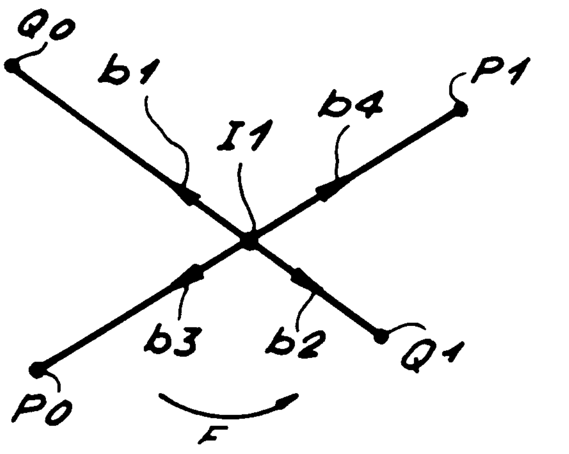


FIG. 14

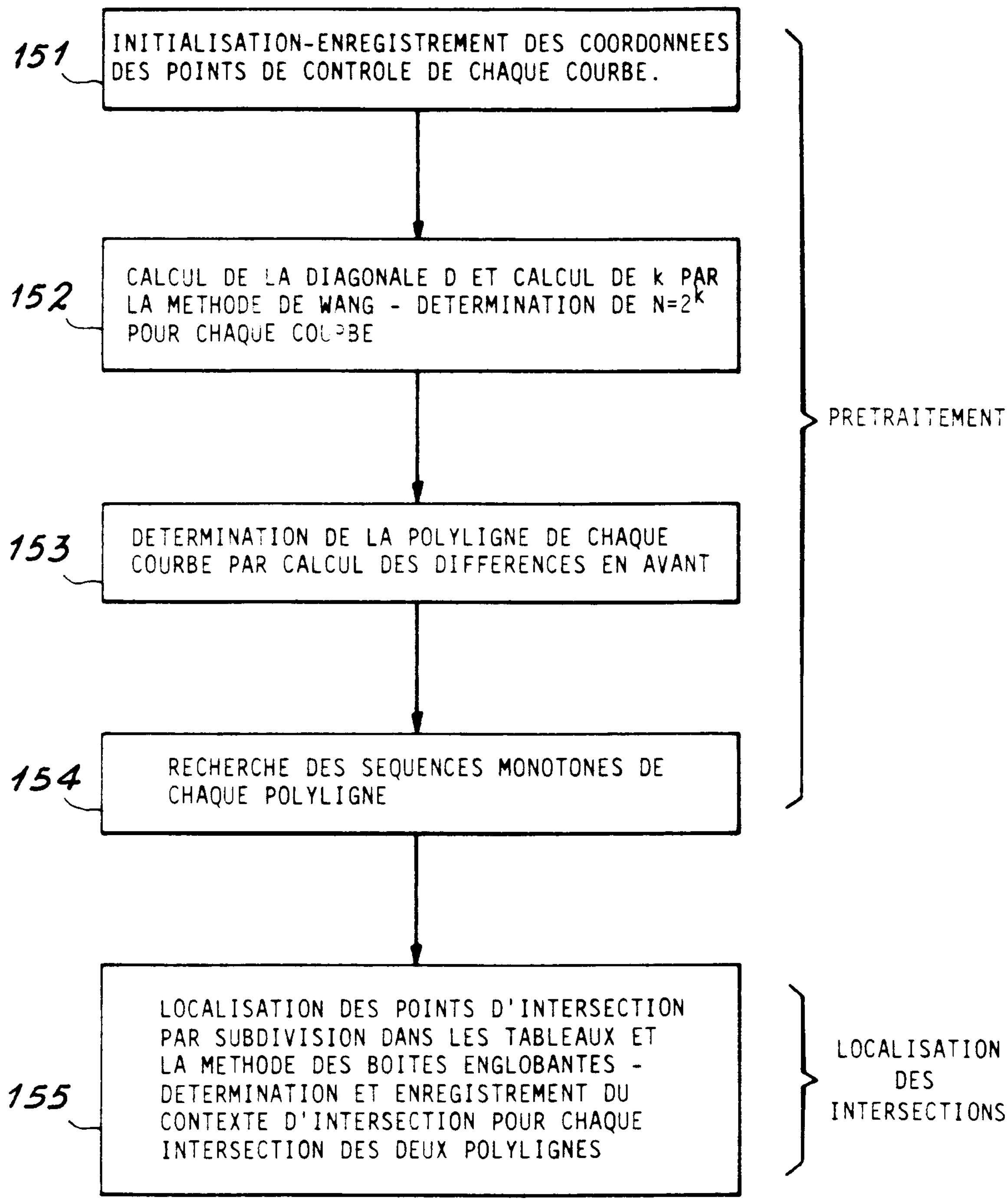
151
INITIALISATION-ENREGISTREMENT DES COORDONNEES DES POINTS DE CONTROLE DE CHAQUE COURBE.
152
CALCUL DE LA DIAGONALE D ET CALCUL DE k PAR LA METHODE DE WANG - DETERMINATION DE N=2^k POUR CHAQUE COURBE
153
DETERMINATION DE LA POLYLIGNE DE CHAQUE COURBE PAR CALCUL DES DIFFERENCES EN AVANT
154
RECHERCHE DES SEQUENCES MONOTONES DE CHAQUE POLYLIGNE
PRETRAITEMENT
155
LOCALISATION DES POINTS D'INTERSECTION PAR SUBDIVISION DANS LES TABLEAUX ET LA METHODE DES BOITES ENGLOBANTES - DETERMINATION ET ENREGISTREMENT DU CONTEXTE D'INTERSECTION POUR CHAQUE INTERSECTION DES DEUX POLYLIGNES
LOCALISATION DES INTERSECTIONS

FIG. 15

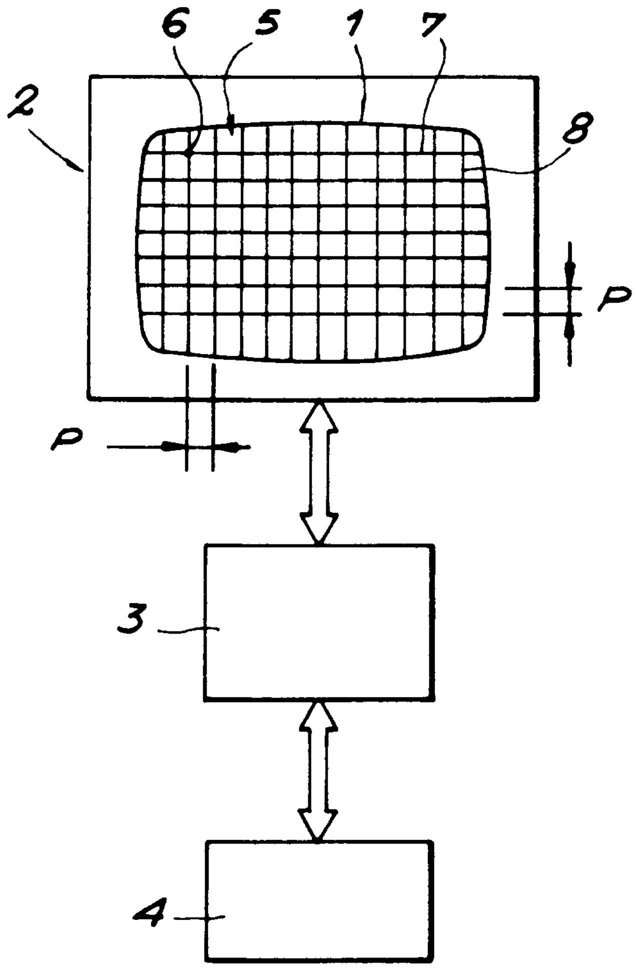


FIG. 16

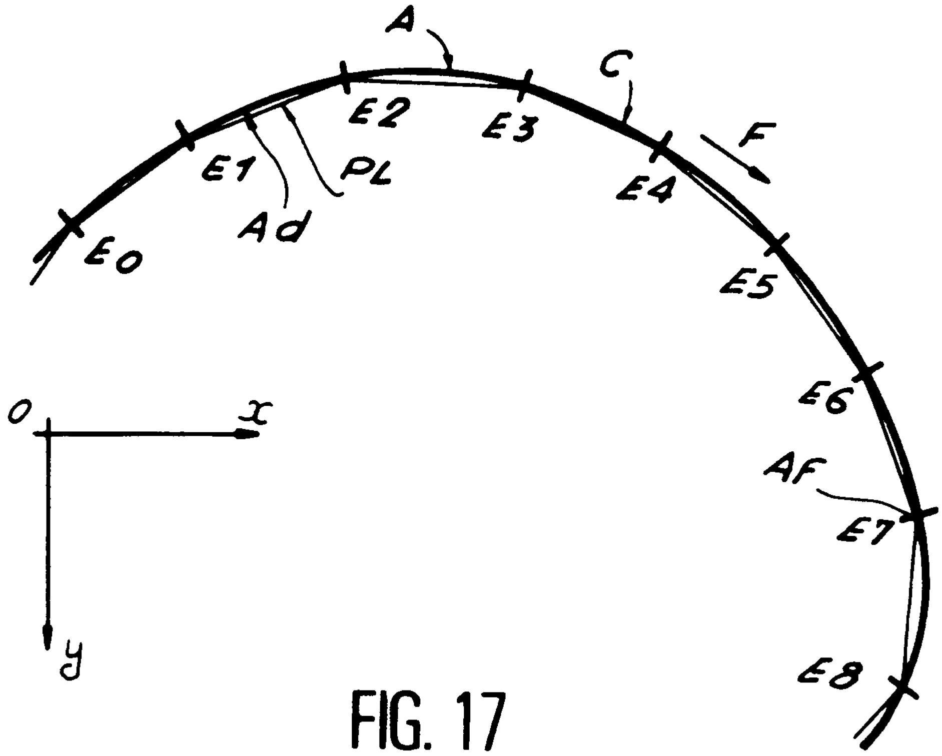


FIG. 17

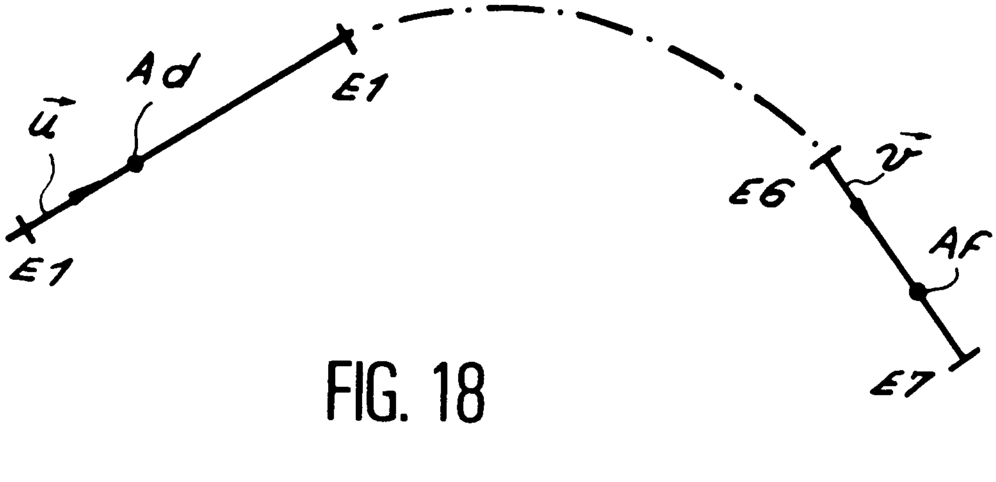


FIG. 18

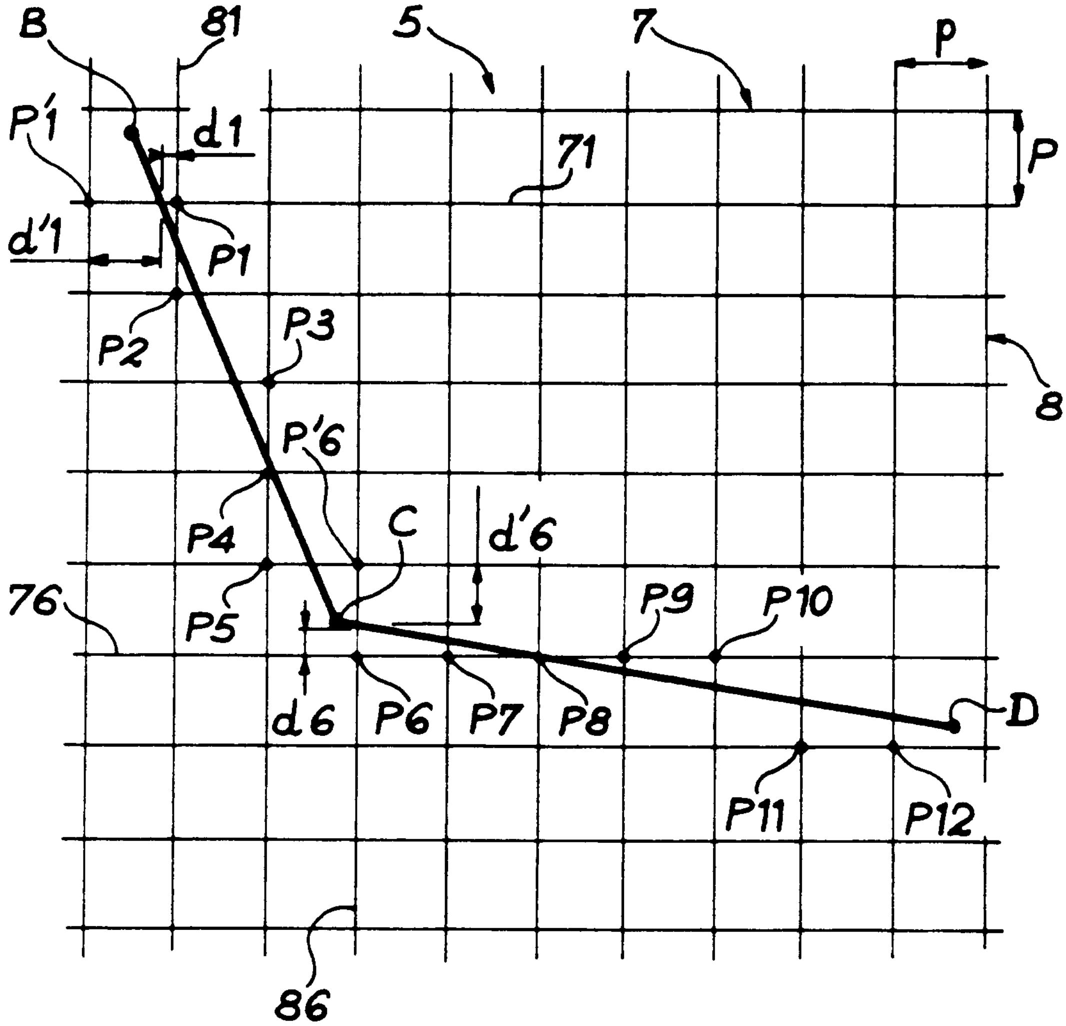

B
81
5
7
p
P'1
d1
71
P
d'1
P1
P2
P3
8
P'6
P4
C
d'6
76
P5
P9
P10
D
d6
P6
P7
P8
P11
P12
86


FIG. 19

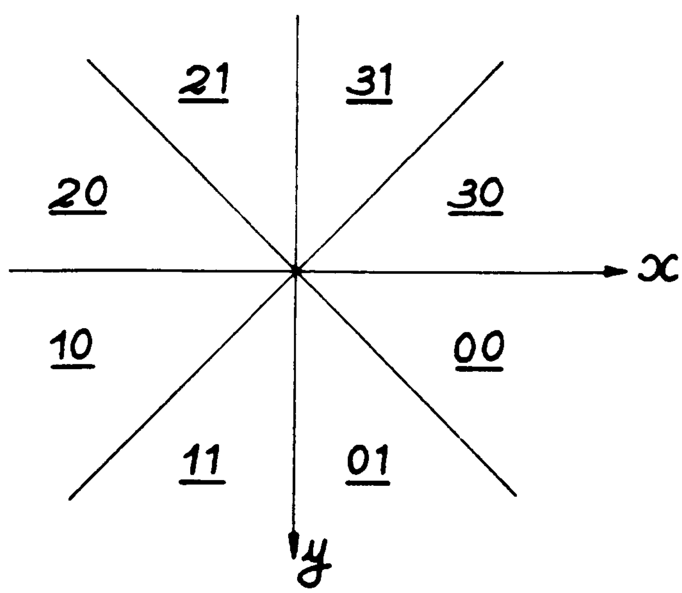

21
31
20
30
x
10
00
11
01
y


FIG. 20

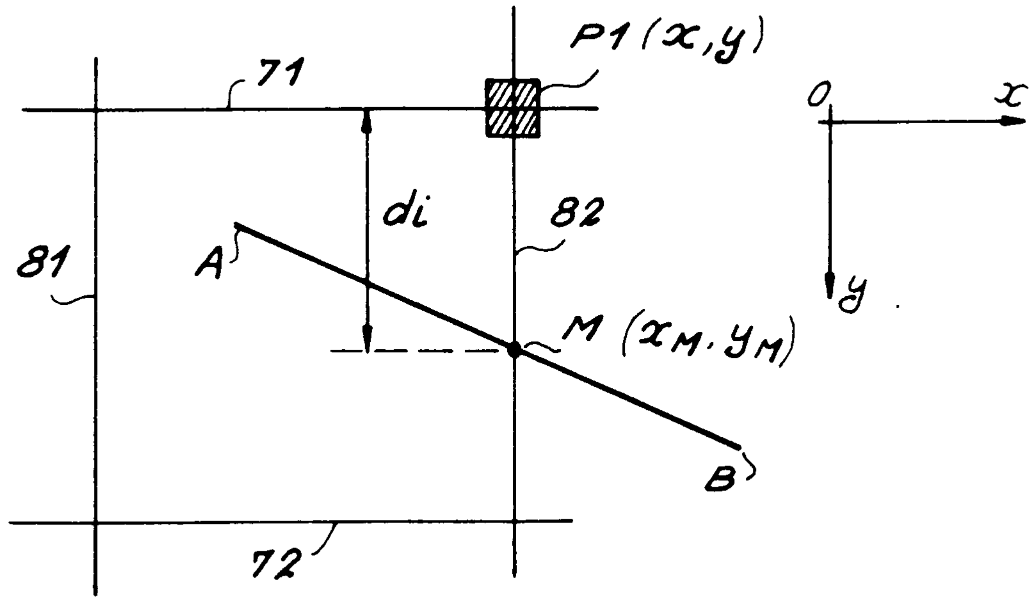
P1 (x,y)
71
0
x
di
82
81
A
y
M (xM, yM)
B
72

FIG. 21

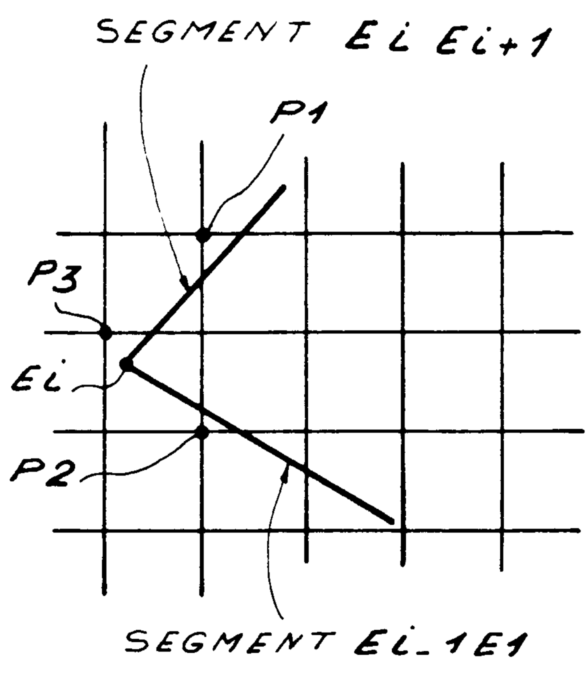
SEGMENT Ei Ei+1
P1
P3
Ei
P2
SEGMENT Ei-1E1

FIG. 22

FIG. 23

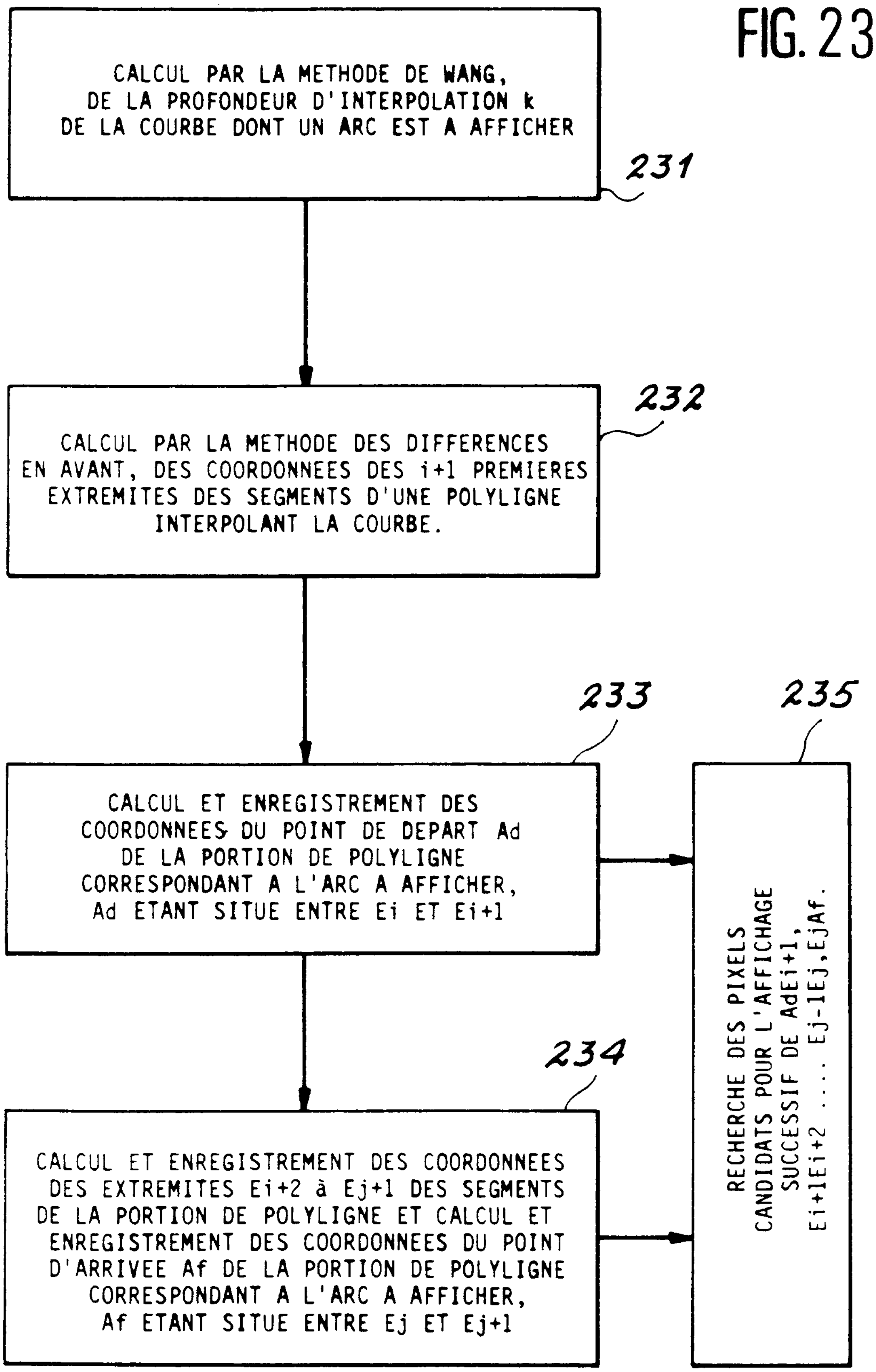
CALCUL PAR LA METHODE DE WANG, DE LA PROFONDEUR D'INTERPOLATION k DE LA COURBE DONT UN ARC EST A AFFICHER
231
232
CALCUL PAR LA METHODE DES DIFFERENCES EN AVANT, DES COORDONNEES DES i+1 PREMIERES EXTREMITES DES SEGMENTS D'UNE POLYLIGNE INTERPOLANT LA COURBE.
233
235
CALCUL ET ENREGISTREMENT DES COORDONNEES DU POINT DE DEPART Ad DE LA PORTION DE POLYLIGNE CORRESPONDANT A L'ARC A AFFICHER, Ad ETANT SITUE ENTRE Ei ET Ei+1
RECHERCHE DES PIXELS CANDIDATS POUR L'AFFICHAGE SUCCESSIF DE AdEi+1, Ei+1Ei+2 .... Ej-1Ej,EjAf.
234
CALCUL ET ENREGISTREMENT DES COORDONNEES DES EXTREMITES Ei+2 à Ej+1 DES SEGMENTS DE LA PORTION DE POLYLIGNE ET CALCUL ET ENREGISTREMENT DES COORDONNEES DU POINT D'ARRIVEE Af DE LA PORTION DE POLYLIGNE CORRESPONDANT A L'ARC A AFFICHER, Af ETANT SITUE ENTRE Ej ET Ej+1